# EUROPEAN PATENT APPLICATION

(11) **EP 4 851 258 A1**
(43) Date of publication of application: **09.12.2026**
(21) Application number: 25752265.6
(22) Date of filing: 07.02.2025
(51) Int. Cl.: C09D 183/04, C07F 7/18, C09D 7/63, C09K 3/18

(54) **COMPOSITION**

(30) Priority: 09.02.2024 JP 2024018923
(71) Applicant: DAIKIN INDUSTRIES, LTD., Osaka-shi, Osaka 530-0001 (JP)
(72) Inventor: HARA, Manami, Osaka-Shi, Osaka 530-0001 (JP); TAKANO, Shinya, Osaka-Shi, Osaka 530-0001 (JP); NOMURA, Takashi, Osaka-Shi, Osaka 530-0001 (JP)
(74) Representative: Hoffmann Eitle
(86) International application number: PCT/JP2025/004136
(87) International publication number: WO 2025/170042

(57) **Abstract**

An object of the present disclosure is to provide a composition capable of forming a surface-treating layer that exhibits high abrasion durability and high fingerprint removability by wiping.

A composition comprising:
a silane compound (A) represented by the following formula (A):

R^{A}_{α1}-X^{A}-R^{ASi}_{α2} (A)

wherein
R^{A} each independently represents a monovalent group comprising no fluorine atom and comprising one or more Si atoms to which neither a hydroxyl group nor a hydrolyzable group is directly bonded,
X^{A} represents an organic group having a valence of α1+α2,
R^{ASi} each independently represents a monovalent group comprising a Si atom to which a hydroxyl group or a hydrolyzable group is bonded,
α1 each independently represents an integer of 1 to 9, and
α2 each independently represents an integer of 1 to 9; and
a silane compound (B) represented by the following formula (B):

R^{B}_{β1}-X^{B}-R^{BSi}_{β2} (B)

wherein
R^{B} each independently represents a monovalent group comprising no fluorine atom and comprising one or more Si atoms to which neither a hydroxyl group nor a hydrolyzable group is directly bonded,
X^{B} represents an organic group having a valence of β1+β2,
R^{BSi} each independently represents a monovalent group comprising a Si atom to which a hydroxyl group or a hydrolyzable group is bonded,
β1 each independently represents an integer of 1 or more, and
β2 each independently represents an integer of 1 or more,
wherein the number of Si atoms which are comprised in -(R^{BSi})_{β2} and to which a hydroxyl group or a hydrolyzable group is bonded is greater than the number of Si atoms which are comprised in -(R^{ASi})_{α2} and to which a hydroxyl group or a hydrolyzable group is bonded.

## Description

### Technical Field

The present disclosure relates to a composition.

### Background Art

Certain types of silane compounds are known to be capable of providing excellent water- and oil-repellency when used in surface treatment of a substrate (Patent Literature 1).

### Citation List

### Patent Literature

Patent Literature 1: JP 2019-44179 A

### Summary of Invention

### Technical Problem

An object of the present disclosure is to provide a composition capable of forming a surface-treating layer that exhibits high abrasion durability and high fingerprint removability by wiping.

### Solution to Problem

The present disclosure comprises the following embodiments.
[1] A composition comprising:
   a silane compound (A) represented by the following formula (A):

      R^{A}_{α1}-X^{A}-R^{ASi}_{α2} (A)

      wherein
   R^{A} each independently represents a monovalent group comprising no fluorine atom and comprising one or more Si atoms to which neither a hydroxyl group nor a hydrolyzable group is directly bonded,
   X^{A} represents an organic group having a valence of α1+α2,
   R^{ASi} each independently represents a monovalent group comprising a Si atom to which a hydroxyl group or a hydrolyzable group is bonded,
   α1 each independently represents an integer of 1 to 9, and
   α2 each independently represents an integer of 1 to 9; and
   a silane compound (B) represented by the following formula (B):

   R^{B}_{β1}-X^{B}-R^{BSi}_{β2} (B)

   wherein
   R^{B} each independently represents a monovalent group comprising no fluorine atom and comprising one or more Si atoms to which neither a hydroxyl group nor a hydrolyzable group is directly bonded,
   X^{B} represents an organic group having a valence of β1+β2,
   R^{BSi} each independently represents a monovalent group comprising a Si atom to which a hydroxyl group or a hydrolyzable group is bonded,
   β1 each independently represents an integer of 1 or more, and
   β2 each independently represents an integer of 1 or more,
   wherein the number of Si atoms which are comprised in -(R^{BSi})_{β2} and to which a hydroxyl group or a hydrolyzable group is bonded is greater than the number of Si atoms which are comprised in -(R^{ASi})_{α2} and to which a hydroxyl group or a hydrolyzable group is bonded.
[2] The composition according to [1] or [2], wherein R^{A} and R^{B} are each independently
   a group represented by the following formula (1):

   R^{s1}-R^{S}-R^{s2}_{q}- (1)

   wherein
   R^{s1} represents a hydrocarbon group or formula (2),
   R^{S} each independently at each occurrence represents a divalent linear organosiloxane group,
   R^{s2} represents -SiR^{s3}₂-,
   R^{s3} each independently at each occurrence represents a hydrocarbon group, and
   q is each independently 0 or 1; or
   a group represented by the following formula (2):

   R^{s4}ₙₐR^{s5}₃₋ₙₐSi-Oₚ- (2)

   wherein
   R^{s4} is each independently a group represented by -(R^{s7}-SiR^{s6}₂)ₘₐ₁-R^{s6},
      R^{s7} is each independently an oxygen atom or a C₁₋₆ alkylene group,
      R^{s6} is each independently a hydrocarbon group or R^{s4'},
         R^{s4'} has the same meaning as R^{s4},
      ma1 each independently represents an integer of 1 to 5,
   provided that, in R^{s4}, the number of R^{s4'} is 20 or less,
   R^{s5} each independently represents a hydrocarbon group,
   p is 0 or 1, and
   na represents an integer of 1 to 3.
[3] The composition according to [2], wherein R^{S} is a group represented by the following formula: 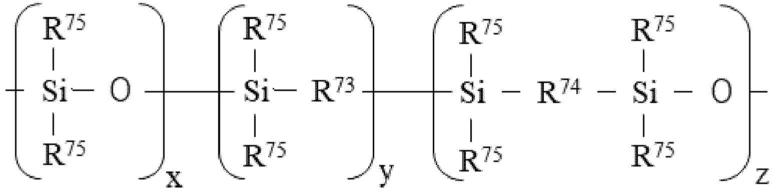 wherein
   R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁶ is each independently a C₁₋₆ alkylene group,
      R⁷⁷ is each independently an optionally substituted phenylene group or naphthylene group,
      R⁷⁸ is each independently a single bond or a C₁₋₆ alkylene group,
      R⁷⁹ is each independently a single bond or an oxygen atom,
   R⁷⁵ is each independently a hydrocarbon group,
   x is an integer of 0 to 500,
   y is an integer of 0 to 500,
   z is an integer of 0 to 500,
   x + y + z is 1 or more, and
   the occurrence order of the respective repeating units enclosed in parentheses provided with x, y, or z is not limited in the formula.
[4] The composition according to any one of [1] to [3], wherein R^{A} and R^{B} have the same structure.
[5] The composition according to any one of [1] to [4], wherein α1 and β1 are equal.
[6] The composition according to any one of [1] to [5], wherein α2 is 1.
[7] The composition according to any one of [1] to [6], wherein R^{ASi} and R^{BSi} are each independently a group represented by the following formula (S1), (S2), (S3), (S4), or (S5):

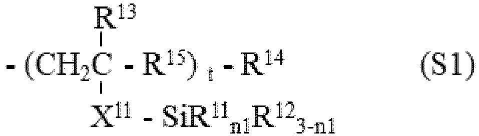

   - SiR¹¹ₙ₁R¹²₃₋ₙ₁ (S2)

   - SiR^{a1}ₖ₁R^{b1}ₗ₁R^{c1}ₘ₁ (S3)

   - CR^{d1}ₖ₂R^{e1}ₗ₂R^{f1}ₘ₂ (S4)

   - NR^{g1}R^{h1} (S5)

   wherein
   R¹¹ is each independently a hydroxyl group or a hydrolyzable group,
   R¹² is each independently a monovalent organic group,
   n1 is each independently an integer of 0 to 3 for each (SiR¹¹ₙ₁R¹²₃₋ₙ₁) unit,
   X¹¹ is each independently a single bond or a divalent organic group,
   R¹³ is each independently a hydrogen atom or a monovalent organic group,
   t is each independently an integer of 2 or more,
   R¹⁴ is each independently a hydrogen atom, a halogen atom, or -X¹¹-SiR¹¹ₙ₁R¹²₃₋ₙ₁,
   R¹⁵ is each independently a single bond, an oxygen atom, an alkylene group having 1 to 6 carbon atoms, or an alkyleneoxy group having 1 to 6 carbon atoms,
   R^{a1} is each independently -Z¹-SiR²¹ₚ₁R²²_{q1}R²³ᵣ₁,
   Z¹ is each independently a divalent organic group,
   R²¹ is each independently -Z^{1'}-SiR^{21'}_{p1'}R^{22'}_{q1'}R^{23'}_{r1'},
   R²² is each independently a hydroxyl group or a hydrolyzable group,
   R²³ is each independently a monovalent organic group,
   p1 is each independently an integer of 0 to 3,
   q1 is each independently an integer of 0 to 3,
   r1 is each independently an integer of 0 to 3,
   Z^{1'} is each independently a divalent organic group,
   R^{21'} is each independently -Z^{1"}-SiR^{22"}_{q1"}R^{23"}_{r1"},
   R^{22'} is each independently a hydroxyl group or a hydrolyzable group,
   R^{23'} is each independently a monovalent organic group,
   p1' is each independently an integer of 0 to 3,
   q1' is each independently an integer of 0 to 3,
   r1' is each independently an integer of 0 to 3,
   Z^{1"} is each independently a divalent organic group,
   R^{22"} is each independently a hydroxyl group or a hydrolyzable group,
   R^{23"} is each independently a monovalent organic group,
   q1" is each independently an integer of 0 to 3,
   r1" is each independently an integer of 0 to 3,
   R^{b1} is each independently a hydroxyl group or a hydrolyzable group,
   R^{c1} is each independently a monovalent organic group,
   k1 is each independently an integer of 0 to 3,
   l1 is each independently an integer of 0 to 3,
   m1 is each independently an integer of 0 to 3,
   provided that, in the formula (S3), at least two Si atoms to which a hydroxyl group or a hydrolyzable group is bonded are present,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z^{2'}-CR^{32'}_{q2'}R^{33'}_{r2'},
   R³² is each independently -Z³-SiR³⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   Z^{2'} is each independently a single bond, an oxygen atom, or a divalent organic group,
   R^{32'} is each independently -Z³-SiR³⁴ₙ₂R³⁵₃₋ₙ₂,
   R^{33'} is each independently a hydrogen atom, a hydroxyl group, or a monovalent organic group,
   q2' is each independently an integer of 0 to 3,
   r2' is each independently an integer of 0 to 3,
   Z³ is each independently a single bond, an oxygen atom, or a divalent organic group,
   R³⁴ is each independently a hydroxyl group or a hydrolyzable group,
   R³⁵ is each independently a monovalent organic group,
   n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group, or a monovalent organic group,
   k2 is each independently an integer of 0 to 3,
   l2 is each independently an integer of 0 to 3,
   m2 is each independently an integer of 0 to 3,
   provided that, in the formula (S4), at least two Si atoms to which a hydroxyl group or a hydrolyzable group is bonded are present,
   R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
   Z⁴ is each independently a single bond, an oxygen atom, or a divalent organic group,
   provided that, in the formula (S5), at least two Si atoms to which a hydroxyl group or a hydrolyzable group is bonded are present.
[8] The composition according to any one of [1] to [7], wherein R^{ASi} is each independently a group represented by the formula (S2).
[9] The composition according to any one of [1] to [8], wherein the content of the silane compound (B) is 0.1% by mass or more based on 100% by mass of the total amount of the composition.
[10] The composition according to any one of [1] to [9], wherein X^{A} and X^{B} are each independently:
   a group represented by:

   -(X¹²¹)ₐ₀-[(X¹¹¹)ₐ₁-(X¹¹²)ₐ₂]-

   wherein
   X¹²¹ is R⁶¹_{b1}R⁶²_{3-b1}C-, R⁶³_{b2}R⁶⁴_{3-b2}Si-, or R⁶⁵₂N-,
      R⁶¹ is a single bond or a divalent organic group,
      R⁶² is a hydrogen atom or a monovalent organic group,
      R⁶³ is a single bond or a divalent organic group,
      R⁶⁴ is a hydrogen atom or a monovalent organic group,
      R⁶⁵ is a divalent organic group,
      b1 is 1 to 3,
      b2 is 1 to 3,
   X¹¹¹ is a single bond or a divalent organic group,
   X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, -S-, or R^{S},
      R⁴¹ is a hydrogen atom, an oxyalkylene-comprising group, or a C₁₋₆ alkyl group,
      R^{S} is a group represented by the following formula: 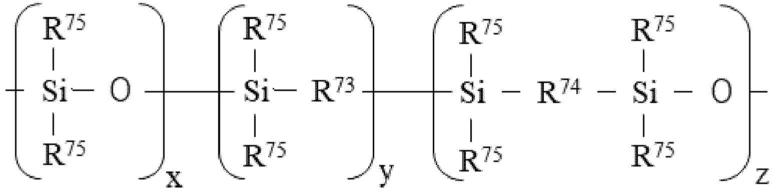 (wherein
   R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁶ is each independently a C₁₋₆ alkylene group,
      R⁷⁷ is each independently an optionally substituted phenylene group or naphthylene group,
      R⁷⁸ is each independently a single bond or a C₁₋₆ alkylene group,
      R⁷⁹ is each independently a single bond or an oxygen atom,
   R⁷⁵ is each independently a hydrocarbon group,
   x is an integer of 0 to 500,
   y is an integer of 0 to 500,
   z is an integer of 0 to 500,
   x + y + z is 1 or more, and
   the occurrence order of the respective repeating units enclosed in parentheses provided with x, y, or z is not limited in the formula)
   a0 is 0 or 1,
   a1 is an integer of 1 to 5,
   a2 is an integer of 0 to 5, and
   the occurrence order of the respective repeating units enclosed in parentheses provided with a1 or a2 occur is not limited in the formula; or
      a group represented by 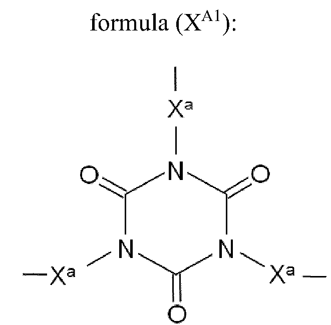 wherein X^{a} is each independently a single bond or a divalent linking group.
[11] The composition according to any one of [1] to [10], wherein X^{A} and X^{B} are each independently a divalent organic group comprising an alkylene group having 10 or more carbon atoms.
[12] The composition according to any one of [1] to [11], wherein the silane compound (A) and the silane compound (B) are one or more compounds selected from the following group:

   CH₃-[Si(CH₃)₂O]ₙ₁Si(CH₃)₂-(CH₂)_{H1}-C(=O)NHCH₂CH₂CH₂Si(OCH₃)₃

   CH₃CH₂CH₂CH₂-[Si(CH₃)₂O]ₙ₁Si(CH₃)₂-(CH₂)_{H1}-C(=O)NHCH₂CH₂CH₂Si(OCH₃)₃

   [(CH₃)₃SiO)]₂(CH₃)Si-O-[Si(CH₃)₂O]ₙ₁Si(CH₃)₂-(CH₂)_{H1}- C(=O)NHCH₂CH₂CH₂Si(OCH₃)₃

   [(CH₃)₃SiO)]₃Si-O-[Si(CH₃)₂O]ₙ₁Si(CH₃)₂-(CH₂)_{H1}- C(=O)NHCH₂CH₂CH₂Si(OCH₃)₃

   CH₃-[Si(CH₃)₂O]ₙ₁Si(CH₃)₂-(CH₂)_{H1}-O-(CH₂)_{H2}-C(=O)NHCH₂CH₂CH₂Si(OCH₃)₃

   CH₃CH₂CH₂CH₂-[Si(CH₃)₂O]ₙ₁Si(CH₃)₂-(CH₂)_{H1}-O-(CH₂)_{H2}- C(=O)NHCH₂CH₂CH₂Si(OCH₃)₃

   CH₃-[Si(CH₃)₂O]ₙ₁Si(CH₃)₂-(CH₂)_{H1}-Si(OCH₃)₃

   CH₃CH₂CH₂CH₂-[Si(CH₃)₂O]ₙ₁Si(CH₃)₂-(CH₂)_{H1}-Si(OCH₃)₃

   [(CH₃)₃SiO)]₂(CH₃)Si-O-[Si(CH₃)₂O]ₙ₁Si(CH₃)₂-(CH₂)_{H1}-Si(OCH₃)₃

   [(CH₃)₃SiO)]₃Si-O-[Si(CH₃)₂O]ₙ₁Si(CH₃)₂-(CH₂)_{H1}-Si(OCH₃)₃

   CH₃-[Si(CH₃)₂O]ₙ₁Si(CH₃)₂-(CH₂)_{H1}-C(=O)NHCH₂CH[CH₂CH₂CH₂Si(OCH₃)₃]₂

   CH₃CH₂CH₂CH₂-[Si(CH₃)₂O]ₙ₁Si(CH₃)₂-(CH₂)_{H1}- C(=O)NHCH₂CH[CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}- C(=O)NHCH₂CH[CH₂CH₂CH₂Si(OCH₃)₃]₂

   CH₃-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂

   CH₃-[Si(CH₃)₂O]ₙ₁Si(CH₃)₂-(CH₂)_{H1}-CH[CH₂CH₂CH₂Si(OCH₃)₃]₂

   CH₃CH₂CH₂CH₂-[Si(CH₃)₂O]ₙ₁Si(CH₃)₂-(CH₂)_{H1}-CH[CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- CH[CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}-CH[CH₂CH₂CH₂Si(OCH₃)₃]₂ CH₃-[Si(CH₃)₂O]ₙ₁Si(CH₃)₂-(CH₂)_{H1}-

   C(=O)NHCH₂CH[CH₂CH₂CH₂CH₂CH₂CH₂CH₂CH₂CH₂CH₂CH₂Si(OCH₃)₃]₂

   CH₃CH₂CH₂CH₂-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

   CH₃-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂

   CH₃-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

   CH₃CH₂CH₂CH₂-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

   CH₃-[Si(CH₃)₂O]ₙ₁Si(CH₃)₂-(CH₂)_{H1}-C(=O)N[CH₂CH₂CH₂Si(OCH₃)₃]₂

   CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- C(=O)N[CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}- C(=O)N[CH₂CH₂CH₂Si(OCH₃)₃]₂

   CH₃-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- C(=O)N[CH₂CH₂CH₂Si(OCH₃)₃]₂

   CH₃-[Si(CH₃)₂O]ₙ₁Si(CH₃)₂-(CH₂)_{H1}-N[CH₂CH₂CH₂Si(OCH₃)₃]₂

   CH₃CH₂CH₂CH₂-[Si(CH₃)₂O]ₙ₁Si(CH₃)₂-(CH₂)_{H1}-N[CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- N[CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}-N[CH₂CH₂CH₂Si(OCH₃)₃]₂

   CH₃-[Si(CH₃)₂O]ₙ₁Si(CH₃)₂-(CH₂)_{H1}-C(=O)NHCH₂C[CH₂CH₂CH₂Si(OCH₃)₃]₃

   CH₃CH₂CH₂CH₂-[Si(CH₃)₂O]ₙ₁Si(CH₃)₂-(CH₂)_{H1}- C(=O)NHCH₂C[CH₂CH₂CH₂Si(OCH₃)₃]₃

   [(CH₃)₃SiO)]₂(CH₃)Si-O-[Si(CH₃)₂O]ₙ₁Si(CH₃)₂-(CH₂)_{H1}- C(=O)NHCH₂C[CH₂CH₂CH₂Si(OCH₃)₃]₃

   [(CH₃)₃SiO)]₃Si-O-[Si(CH₃)₂O]ₙ₁Si(CH₃)₂-(CH₂)_{H1}- C(=O)NHCH₂C[CH₂CH₂CH₂Si(OCH₃)₃]₃

   CH₃-[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃

   CH₃CH₂CH₂CH₂-[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃

   CH₃-[Si(CH₃)₂O]ₙ₁Si(CH₃)₂-(CH₂)_{H1}-C[CH₂CH₂CH₂Si(OCH₃)₃]₃

   CH₃CH₂CH₂CH₂-[Si(CH₃)₂O]ₙ₁Si(CH₃)₂-(CH₂)_{H1}-C[CH₂CH₂CH₂Si(OCH₃)₃]₃

   [(CH₃)₃SiO)]₂(CH₃)Si-O-[Si(CH₃)₂O]ₙ₁Si(CH₃)₂-(CH₂)_{H1}- C[CH₂CH₂CH₂Si(OCH₃)₃]₃

   [(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃

   [(CH₃)₃SiO)]₂(CH₃)Si-(CH₂)_{H1}-C(=O)NHCH₂CH₂CH₂Si(OCH₃)₃

   [(CH₃)₃SiO)]₃Si-(CH₂)_{H1}-C(=O)NHCH₂CH₂CH₂Si(OCH₃)₃

   [(CH₃)₃SiO)]₂(CH₃)Si-(CH₂)_{H1}-Si(OCH₃)₃

   [(CH₃)₃SiO)]₃Si-(CH₂)_{H1}-Si(OCH₃)₃

   [(CH₃)₃SiO)]₂(CH₃)Si-(CH₂)_{H1}-C(=O)NHCH₂CH[CH₂CH₂CH₂Si(OCH₃)₃]₂

   [(CH₃)₃SiO)]₃Si-(CH₂)_{H1}-C(=O)NHCH₂CH[CH₂CH₂CH₂Si(OCH₃)₃]₂

   [(CH₃)₃SiO)]₂(CH₃)Si-(CH₂)_{H1}-CH[CH₂CH₂CH₂Si(OCH₃)₃]₂

   [(CH₃)₃SiO)]₃Si-(CH₂)_{H1}-CH[CH₂CH₂CH₂Si(OCH₃)₃]₂

   [(CH₃)₃SiO)]₂(CH₃)Si-(CH₂)_{H1}- C(=O)NHCH₂CH[CH₂CH₂CH₂CH₂CH₂CH₂CH₂CH₂CH₂CH₂CH₂Si(OCH₃)₃]₂

   [(CH₃)₃SiO)]₃Si-(CH₂)_{H1}- C(=O)NHCH₂CH[CH₂CH₂CH₂CH₂CH₂CH₂CH₂CH₂CH₂CH₂CH₂Si(OCH₃)₃]₂

   [(CH₃)₃SiO)]₂(CH₃)Si-(CH₂)_{H1}- CH[CH₂CH₂CH₂CH₂CH₂CH₂CH₂CH₂CH₂CH₂CH₂Si(OCH₃)₃]₂

   [(CH₃)₃SiO)]₃Si-(CH₂)_{H1}- CH[CH₂CH₂CH₂CH₂CH₂CH₂CH₂CH₂CH₂CH₂CH₂Si(OCH₃)₃]₂

   [(CH₃)₃SiO)]₂(CH₃)Si-(CH₂)_{H1}-C(=O)N[CH₂CH₂CH₂Si(OCH₃)₃]₂

   [(CH₃)₃SiO)]₃Si-(CH₂)_{H1}-C(=O)N[CH₂CH₂CH₂Si(OCH₃)₃]₂

   [(CH₃)₃SiO)]₂(CH₃)Si-(CH₂)_{H1}-N[CH₂CH₂CH₂Si(OCH₃)₃]₂

   [(CH₃)₃SiO)]₃Si-(CH₂)_{H1}-N[CH₂CH₂CH₂Si(OCH₃)₃]₂

   [(CH₃)₃SiO)]₂(CH₃)Si-(CH₂)_{H1}-C(=O)NHCH₂C[CH₂CH₂CH₂Si(OCH₃)₃]₃

   [(CH₃)₃SiO)]₃Si-(CH₂)_{H1}-C(=O)NHCH₂C[CH₂CH₂CH₂Si(OCH₃)₃]₃

   [(CH₃)₃SiO)]₂(CH₃)Si-(CH₂)_{H1}-C[CH₂CH₂CH₂Si(OCH₃)₃]₃

   [(CH₃)₃SiO)]₃Si-(CH₂)_{H1}-C[CH₂CH₂CH₂Si(OCH₃)₃]₃

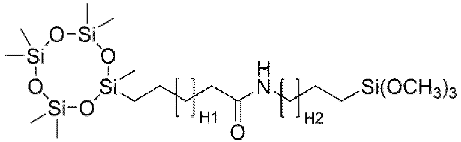

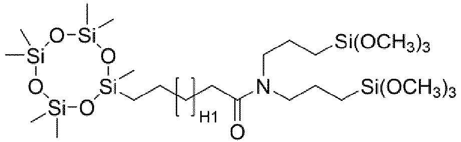

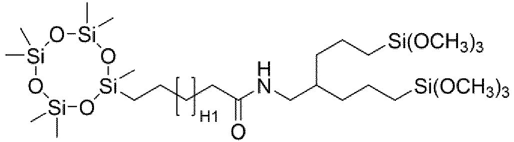

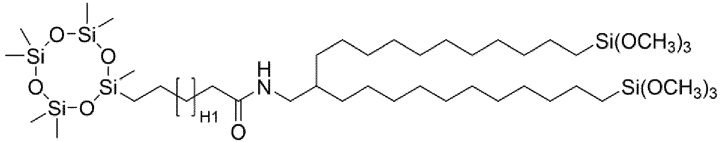

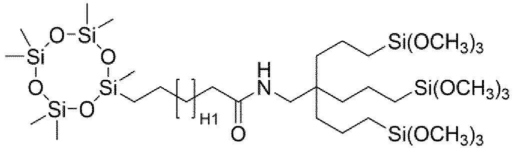

   CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂

   CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂

   CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂

   CH₃CH₂CH₂CH₂-[Si(CH₃)₂O]ₙ₁Si(CH₃)₂--(CH₂)_{H1}-O-(CH₂)_{H2}- C[CH₂OC(=O)NHCH₂CH₂CH₂Si(OCH₃)₃]₃

   CH₃-[(Si(CH₃)₂O)]ₙ₁Si(CH₃)₂-(CH₂)_{H1}-O-(CH₂)_{H2}- C[CH₂OC(=O)NHCH₂CH₂CH₂Si(OCH₃)₃]₃

   [CH₃CH₂CH₂CH₂-[(Si(CH₃)₂O)]ₙ₁Si(CH₃)₂-(CH₂)_{H1}-O-(CH₂)_{H2}-]₂- C[CH₂OC(=O)NHCH₂CH₂CH₂Si(OCH₃)₃]₂

   [CH₃-[(Si(CH₃)₂O)]ₙ₁Si(CH₃)₂-(CH₂)_{H1}-O-(CH₂)_{H2}-]₂- C[CH₂OC(=O)NHCH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- OC(=O)NHCH₂CH₂CH₂Si(OCH₃)₃

   CH₃-[Si(CH₃)₂O]ₙ₁Si(CH₃)₂-(CH₂)_{H1}-O-(CH₂)_{H2}-OC(=O)NHCH₂CH₂CH₂Si(OCH₃)₃

   CH₃CH₂CH₂CH₂-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃

   CH₃-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃

   [CH₃CH₂CH₂CH₂-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃

   [CH₃-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃

   [CH₃CH₂CH₂CH₂-[Si(CH₃)₂O]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃]

   [CH₃-[(Si(CH₃)₂O)]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃]

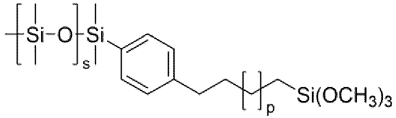

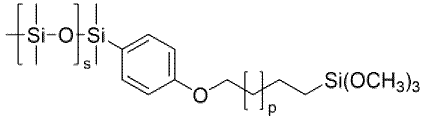

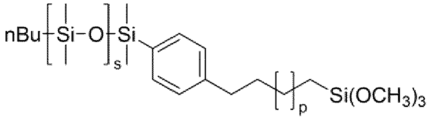

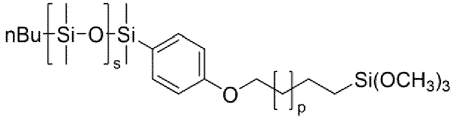

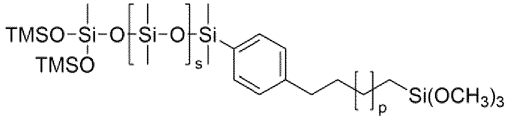

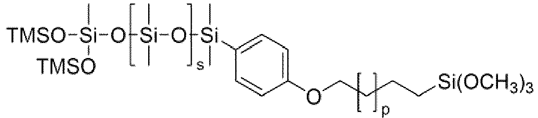

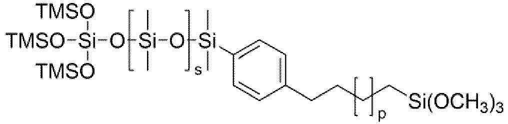

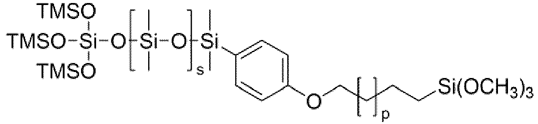

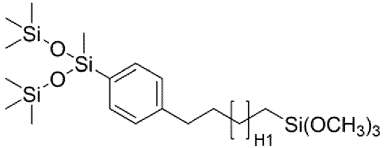

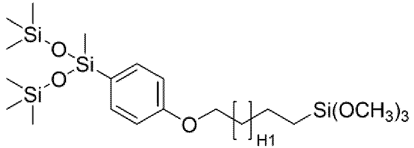

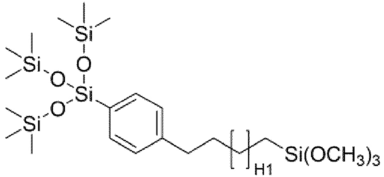

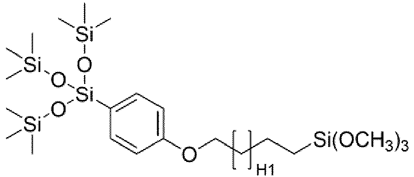

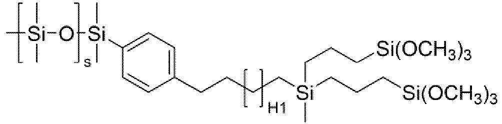

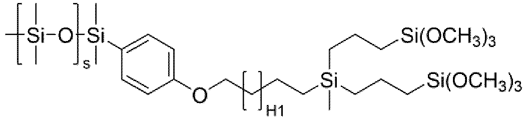

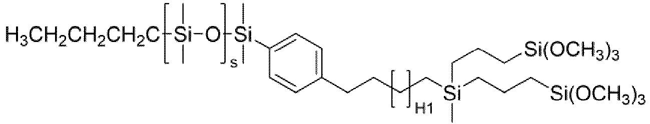

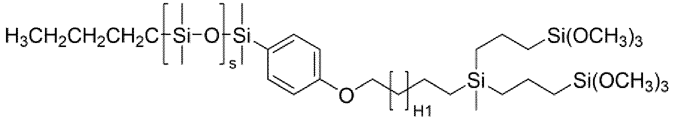

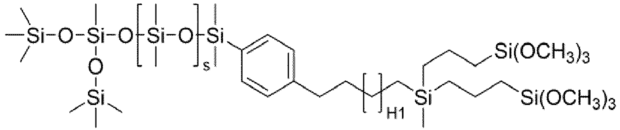

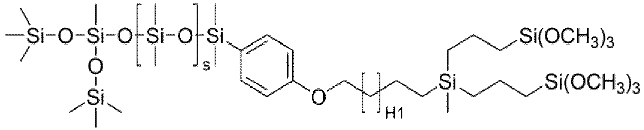

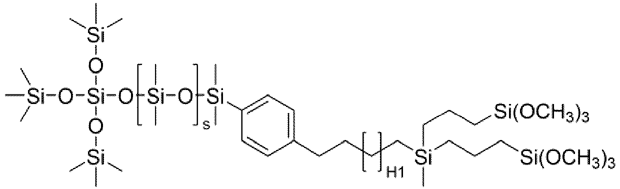

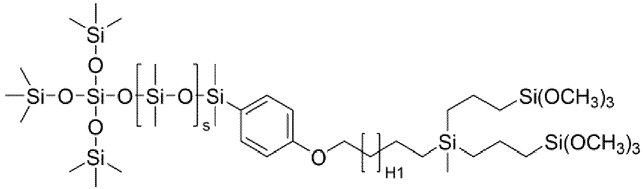

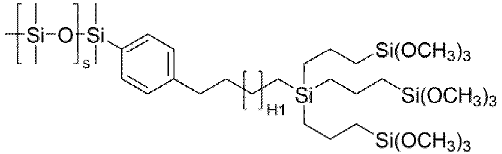

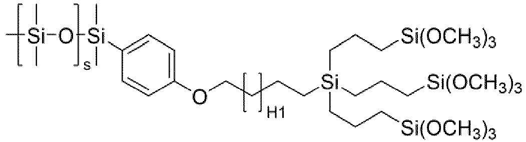

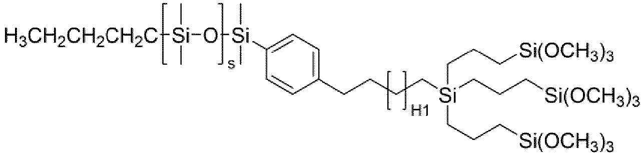

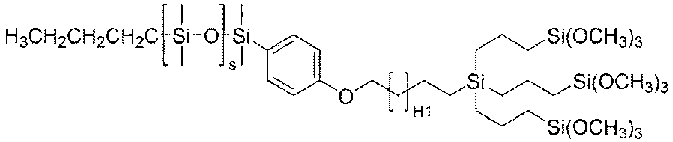

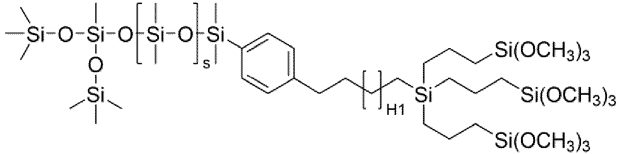

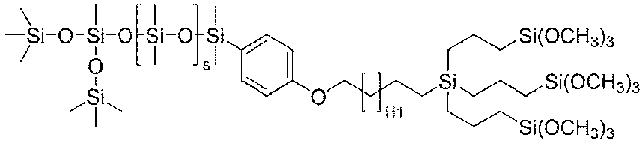

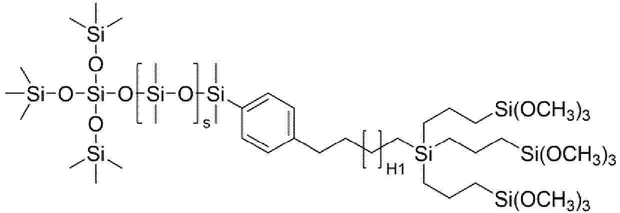

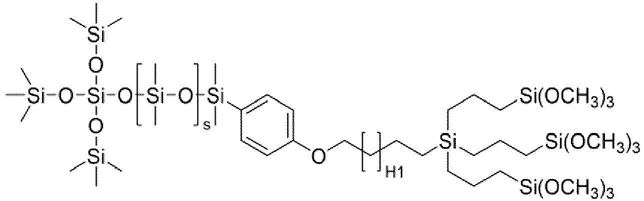

   wherein TMS represents a trimethylsilyl group; n1 and s are each independently 0 to 150; and p, H1, and H2 are each independently 1 to 50.
[13] The composition according to [12], wherein
   n1 and s are each independently 0 or 1,
   p and H1 are each independently 8 to 40, and
   H2 is each independently 1 to 10.
[14] The composition according to [12], wherein
   n1 and s are each independently 5 to 100,
   p and H1 are each independently 8 to 40, and
   H2 is each independently 1 to 10.
[15] The composition according to any one of [1] to [14], wherein the silane compound (A) is a compound selected from the following group:

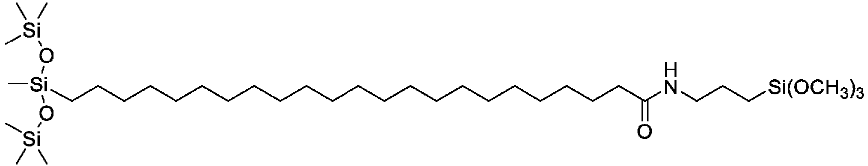

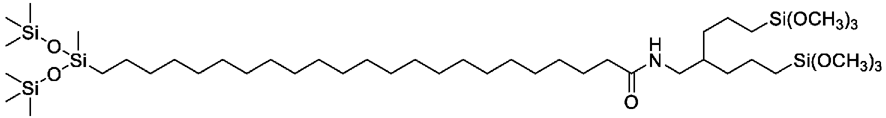

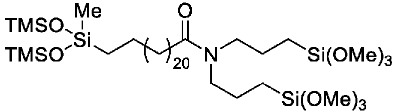

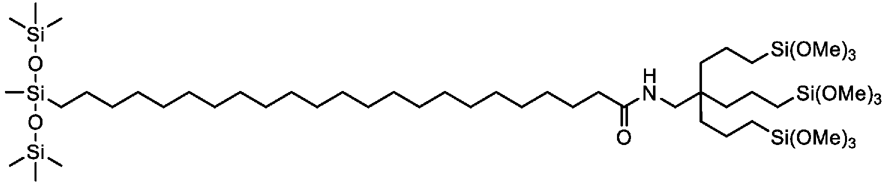

   [(CH₃)₃SiO]₂CH₃SiO(Si(CH₃)₂O)ₙ₁Si(CH₃)₂(CH₂)₂₂CONHCH₂CH[CH₂CH₂CH₂Si(O CH₃)₃]₂

   CH₃[Si(CH₃)₂O]ₙ₁Si(CH₃)₂(CH₂)₂₂CONH-CH₂CH[CH₂CH₂CH₂Si(OCH₃)₃]₂

   [(CH₃)₃SiO]₂CH₃Si- CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH(CH₂CH=CH₂)[CH₂CH₂CH₂Si(OCH₃)₃]

   [(CH₃)₃SiO]₂CH₃Si- CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH(CH₂CH=CH₂)₂

   [(CH₃)₃SiO]₂CH₃Si- CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH[CH₂CH₂CH₂Si(OCH₃)₃]₂

   CH₃[Si(CH₃)₂O]ₙ₁Si(CH₃)₂(CH₂)₂₂CONH- CH₂CH(CH₂CH=CH₂)[CH₂CH₂CH₂Si(OCH₃)₃]

   CH₃[Si(CH₃)₂O]ₙ₁Si(CH₃)₂(CH₂)₂₂CONH-CH₂CH(CH₂CH=CH₂)₂

   CH₃[Si(CH₃)₂O]ₙ₁Si(CH₃)₂(CH₂)₂₂CONH-CH₂CH[CH₂CH₂CH₂Si(OCH₃)₃]₂

   CH₃CH₂CH₂CH₂-[Si(CH₃)₂O]ₙ₁Si(CH₃)₂-CH₂CH₂CH₂-O-CH₂CH₂O- C(=O)NHCH₂CH₂CH₂Si(OCH₃)₃

   wherein TMS represents a trimethylsilyl group, and n1 is each independently 10 to 80.
[16] The composition according to any one of [1] to [15], wherein the silane compound (B) is a compound selected from the following group:

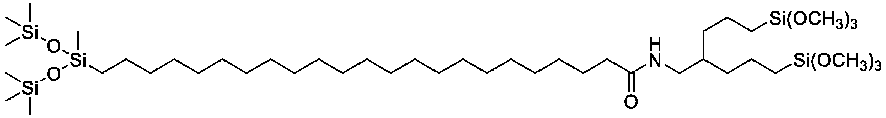

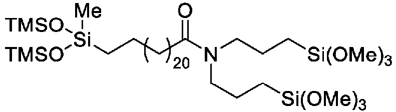

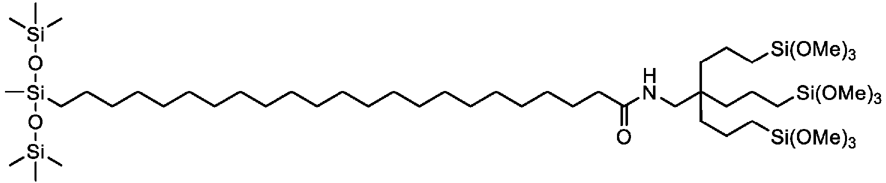

   CH₃[Si(CH₃)₂O]ₙ₂Si(CH₃)₂(CH₂)₂₂CONH-CH₂CH[CH₂CH₂CH₂Si(OCH₃)₃]₂

   [(CH₃)₃SiO]₂CH₃SiO(Si(CH₃)₂O)ₙ₂Si(CH₃)₂(CH₂)₂₂CONHCH₂C[CH₂CH₂CH₂Si(OC H₃)₃]₃

   CH₃[Si(CH₃)₂O]ₙ₂Si(CH₃)₂(CH₂)₂₂CONH-CH₂C[CH₂CH₂CH₂Si(OCH₃)₃]₃

   CH₃CH₂CH₂CH₂-[Si(CH₃)₂O]ₙ₂Si(CH₃)₂-CH₂CH₂CH₂-O-CH₂- C(CH₂CH₃)[CH₂OC(=O)NHCH₂CH₂CH₂Si(OCH₃)₃]₂

   wherein TMS represents a trimethylsilyl group, and n2 is each independently 10 to 80.
[17] A coating solution comprising the composition according to any one of [1] to [16] and a liquid medium.
[18] A surface-treating agent comprising the composition according to any one of [1] to [16].
[19] A surface-treating agent comprising the composition according to any one of [1] to [16] and at least one of compounds composed of a condensate in which the silane compounds comprised in the composition are at least partially condensed.
[20] The surface-treating agent according to [18] or [19], which is for vacuum deposition.
[21] The surface-treating agent according to [18] or [19], which is for wet coating.
[22] A pellet comprising the surface-treating agent according to any one of [18] to [21].
[23] An article comprising a substrate and, on the substrate, the composition according to any one of [1] to [16] or a layer formed from the composition according to any one of [1] to [16].
[24] The article according to [23], comprising, between the substrate and the aforementioned layer, a silicon oxide-containing intermediate layer.
[25] The article according to [24], wherein the intermediate layer comprises alkali metal atoms.
[26] The article according to [25], wherein at least some of the alkali metal atoms are sodium atoms.
[27] The article according to any one of [23] to [26], which is an optical member.
[28] The article according to any one of [23] to [27], which is a display.

### Advantageous Effect of Invention

The present disclosure can provide a composition capable of forming a surface-treating layer that exhibits high abrasion durability and high fingerprint removability by wiping.

### Description of Embodiments

The term "monovalent organic group" as used herein refers to a carbon-containing monovalent group. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a carbon-containing divalent group. The divalent organic group may be, for example, a divalent group obtained by removing one more hydrogen atom from such an organic group. Similarly, an organic group having a valence of 3 or more refers to a group obtained by removing a predetermined number of hydrogen atoms from the organic group.

The "hydrocarbon group" as used herein refers to a group comprising carbon and hydrogen and a group in which a hydrogen atom is removed from the hydrocarbon. Examples of the hydrocarbon group include, but are not limited to, C₁₋₃₀ hydrocarbon groups, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. The hydrocarbon group may be substituted with one or more substituents.

Examples of the substituent of the "hydrocarbon group" as used herein include, but are not limited to, a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group each optionally substituted with one or more halogen atoms.

The "hydrolyzable group" as used herein refers to a group that can undergo a hydrolysis reaction, i.e., refers to a group that can be removed from the main backbone of the compound by a hydrolysis reaction. Examples of the hydrolyzable group include -OR^{h}, -OCOR^{h}, -O-N=CR^{h}₂, -NR^{h}₂, -NHR^{h}, -NCO, and a halogen (in these formulae, R^{h} represents a substituted or unsubstituted alkyl group having 1 to 4 carbon atoms), and -OR^{h} (i.e., an alkoxy group) is preferable. Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable.

The composition of the present disclosure is a composition comprising:
a silane compound represented by the following formula (A):

R^{A}_{α1}-X^{A}-R^{ASi}_{α2} (A)

wherein
R^{A} each independently represents a monovalent group comprising no fluorine atom and comprising one or more Si atoms to which neither a hydroxyl group nor a hydrolyzable group is directly bonded,
X^{A} represents an organic group having a valence of α1+α2,
R^{ASi} each independently represents a monovalent group comprising a Si atom to which a hydroxyl group or a hydrolyzable group is bonded,
α1 each independently represents an integer of 1 to 9, and
α2 each independently represents an integer of 1 to 9; and
a silane compound (B) represented by the following formula (B):

R^{B}_{β1}-X^{B}-R^{BSi}_{β2} (B)

wherein
R^{B} each independently represents a monovalent group comprising no fluorine atom and comprising one or more Si atoms to which neither a hydroxyl group nor a hydrolyzable group is directly bonded,
Z^{B} represents an organic group having a valence of β1+β2,
R^{BSi} each independently represents a monovalent group comprising a Si atom to which a hydroxyl group or a hydrolyzable group is bonded,
β1 each independently represents an integer of 1 or more, and
β2 each independently represents an integer of 1 or more,
wherein the number of Si atoms which are comprised in -(R^{BSi})_{β2} and to which a hydroxyl group or a hydrolyzable group is bonded is greater than the number of Si atoms which are comprised in -(R^{ASi})_{α2} and to which a hydroxyl group or a hydrolyzable group is bonded.

The compound of the present disclosure is capable of forming a surface-treating layer that exhibits high abrasion durability and high fingerprint removability by wiping. Although the present disclosure should not be interpreted as being bound by a particular theory, a possible reason why the composition of the present disclosure can exhibit such an effect is as follows. That is, the composition of the present disclosure comprises two or more compounds of the formulae (A) and (B) wherein β2 is greater than α2, and the number of comprised hydrolyzable silane moieties per molecule is different. Accordingly, it is presumed that a moiety that can contribute to liquid repellency can be introduced while securing a site of reaction with a substrate, and a surface-treating layer that exhibits high abrasion durability and high fingerprint removability by wiping can be formed. This is presumably because a surface having an excellent oil droplet repelling angle has excellent fingerprint removability by wiping.

The content of the silane compound (B) may be preferably 0.1% by mass or more, more preferably 5% by mass or more and 90% by mass or less, and even more preferably 20% by mass or more and 80% by mass or less, based on the total amount of the composition.

R^{A} is a monovalent group comprising no fluorine atom and comprising one or more Si atoms to which neither a hydroxyl group nor a hydrolyzable group is directly bonded. R^{B} is a monovalent group comprising no fluorine atom and comprising one or more Si atoms to which neither a hydroxyl group nor a hydrolyzable group is directly bonded.

In one embodiment, R^{A} and R^{B} may have the same structure. In another embodiment, R^{A} and R^{B} may have different structures.

The monovalent group comprising one or more Si atoms to which neither a hydroxyl group nor a hydrolyzable group is directly bonded may contain a Si atom to which a hydroxyl group or a hydrolyzable group is directly bonded.

In one embodiment, the monovalent group comprising one or more Si atoms to which neither a hydroxyl group nor a hydrolyzable group is directly bonded does not contain a Si atom to which a hydroxyl group or a hydrolyzable group is directly bonded.

In another embodiment, the monovalent group comprising one or more Si atoms to which neither a hydroxyl group nor a hydrolyzable group is directly bonded comprises one or more Si atoms to which a hydroxyl group or a hydrolyzable group is directly bonded.

In one embodiment, R^{A} and R^{B} are each independently:
a group represented by the following formula (1):

R^{s1}-R^{S}-R^{s2}_{q}- (1)

wherein
R^{s1} represents a hydrocarbon group or formula (2),
R^{S} each independently at each occurrence represents a divalent linear organosiloxane group,
R^{s2} represents -SiR^{s3}₂-,
R^{s3} each independently at each occurrence represents a hydrocarbon group, and
q is each independently 0 or 1; or
a group represented by the following formula (2):

R^{s4}ₙₐR^{s5}₃₋ₙₐSi-Oₚ- (2)

wherein
R^{s4} is each independently a group represented by -(R^{s7}-SiR^{s6}₂)ₘₐ₁-R^{s6},
   R^{s7} is each independently an oxygen atom or a C₁₋₆ alkylene group,
   R^{s6} is each independently a hydrocarbon group or R^{s4'},
      R^{s4'} has the same meaning as R^{s4},
   ma1 each independently represents an integer of 1 to 5,
provided that, in R^{s4}, the number of R^{s4'} is 20 or less,
R^{s5} each independently represents a hydrocarbon group,
p is each independently 0 or 1, and
na represents an integer of 1 to 3.

R^{S} is each independently at each occurrence a divalent linear organosiloxane group. Here, the divalent linear organosiloxane group means an organosiloxane group in which the main backbone of siloxane (-SiR₂-O-SiR₂-) is linear, the R group bonded to Si atoms preferably represents an optionally substituted hydrocarbon group, the hydrocarbon group preferably represents a C₁₋₆ alkyl group or an aryl group optionally having a halogen atom as a substituent, and the C₁₋₆ alkyl group may be linear or branched.

In a preferable embodiment, R^{S} is a group represented by the following formula: 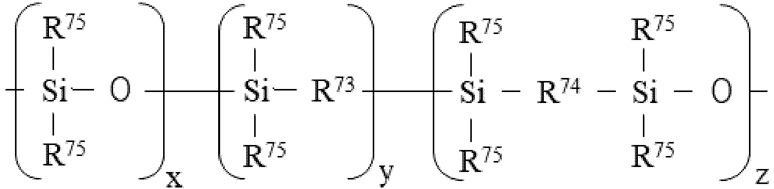 wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula.

R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-, and is preferably a C₁₋₁₂ alkylene group or -R⁷⁶-O-R⁷⁶-.

In one embodiment, R⁷³ is a single bond.

In one embodiment, R⁷³ is a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-, and is preferably a C₁₋₁₂ alkylene group or -R⁷⁶-O-R⁷⁶-.

R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

In one embodiment, R⁷⁴ is each independently a C₁₋₁₂ alkylene group or -R⁷⁶-O-R⁷⁶-.

In another embodiment, R⁷⁴ is each independently -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

In one embodiment, R⁷³ is each independently a C₁₋₁₂ alkylene group or -R⁷⁶-O-R⁷⁶-, and R⁷⁴ is each independently a C₁₋₁₂ alkylene group or -R⁷⁶-O-R⁷⁶-.

In another embodiment, R⁷³ is each independently a C₁₋₁₂ alkylene group or - R⁷⁶-O-R⁷⁶-, and R⁷⁴ is each independently -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

The C₁₋₁₂ alkylene group may be linear or may be branched. The C₁₋₁₂ alkylene group is preferably linear.

The C₁₋₁₂ alkylene group is preferably a C₂₋₈ alkylene group, and more preferably a C₂₋₆ alkylene group.

R⁷⁶ is each independently a C₁₋₆ alkylene group. The C₁₋₆ alkylene group may be linear or may be branched. The C₁₋₆ alkylene group is preferably linear.

The C₁₋₆ alkylene group is preferably a C₂₋₄ alkylene group, and more preferably a C₂₋₃ alkylene group.

In a preferable embodiment, in a group comprising a plurality of R⁷⁶, all R⁷⁶ are the same group.

R⁷⁷ is each independently an optionally substituted arylene group.

In one embodiment, R⁷⁷ is each independently

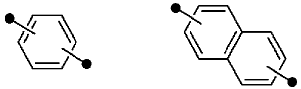

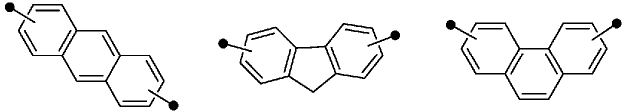

In one embodiment, R⁷⁷ is a phenylene group.

In another embodiment, R⁷⁷ is a naphthylene group.

The arylene group may have a substituent. The number of substituents is not limited, and is, for example, 1 to 4, and preferably 1 or 2.

In one embodiment, the phenylene group and the naphthylene group may have a substituent. The number of substituents is not limited, and is, for example, 1 to 4, and preferably 1 or 2. The substituted phenylene group is preferably 2,5-substituted phenylene.

The substituent with respect to the arylene group is each independently -R¹⁴¹-R¹⁴².

R¹⁴¹ is a single bond, an oxygen atom, or a sulfur atom, preferably a single bond or an oxygen atom, and more preferably an oxygen atom.

R¹⁴² is a C₁₋₁₂ alkyl group, -(O-R¹⁴³)ₚ, -R¹⁴⁴-R¹⁴⁵, or -R¹⁴⁴-OR¹⁴⁶, all of which are optionally substituted with a halogen.

The halogen is chlorine, bromine, or iodine.

The C₁₋₁₂ alkyl group of R¹⁴² may be linear or may be branched.

R¹⁴³ is a C₁₋₆ alkylene group, and preferably a C₂₋₄ alkylene group. Such an alkylene group may be linear or may be branched.

R¹⁴⁴ is a C₁₋₁₂ alkylene group, and preferably a C₁₋₆ alkylene group. Such an alkylene group may be linear or may be branched.

R¹⁴⁵ is -CH=CH₂ or -OCOCH=CH₂.

R¹⁴⁶ is a hydrogen atom or a C₁₋₆ alkyl group. Such an alkyl group may be linear or may be branched. The C₁₋₆ alkyl group is preferably a C₁₋₃ alkyl group, more preferably a C₁₋₂ alkyl group, and even more preferably a methyl group.

R⁷⁸ is each independently a single bond or a C₁₋₆ alkylene group. Such a C₁₋₆ alkylene group may be linear or may be branched.

In one embodiment, R⁷⁸ is a single bond.

In another embodiment, R⁷⁸ is a C₁₋₆ alkylene group.

R⁷⁹ is each independently a single bond or an oxygen atom.

In one embodiment, R⁷⁹ is a single bond.

In another embodiment, R⁷⁹ is an oxygen atom.

R⁷⁵ is each independently a hydrocarbon group. Such a hydrocarbon group may be substituted.

R⁷⁵ is, each independently, preferably an unsubstituted hydrocarbon group or a hydrocarbon group substituted with a halogen atom.

R⁷⁵ is, each independently, preferably a C₁₋₁₈ alkyl group or aryl group optionally substituted with a halogen atom, and more preferably a C₁₋₁₈ alkyl group or aryl group.

The C₁₋₁₈ alkyl group may be linear or may be branched, and is preferably linear. The C₁₋₁₈ alkyl group is preferably a C₁₋₁₀ alkyl group, more preferably a C₁₋₆ alkyl group, even more preferably a C₁₋₄ alkyl group, and yet more preferably a methyl group.

The aryl group is preferably a phenyl group.

In one embodiment, R⁷⁵ is each independently a C₁₋₆ alkyl group, preferably a C₁₋₄ alkyl group, and more preferably a methyl group.

In another embodiment, R⁷⁵ is a phenyl group.

In another embodiment, R⁷⁵ is each independently a methyl group or a phenyl group, and preferably a methyl group.

x is an integer of 0 to 500, preferably an integer of 0 to 300, more preferably an integer of 0 to 100, even more preferably an integer of 1 to 100, yet more preferably an integer of 5 to 50, and further preferably an integer of 10 to 30.

In one embodiment, x is 0.

In one embodiment, x is 1 to 500, preferably an integer of 1 to 300, more preferably an integer of 1 to 100, even more preferably an integer of 5 to 50, and yet more preferably an integer of 10 to 30.

y is an integer of 0 to 500, preferably an integer of 0 to 300, more preferably an integer of 0 to 100, even more preferably an integer of 1 to 100, yet more preferably an integer of 5 to 50, and further preferably an integer of 10 to 30.

In one embodiment, y is 0.

In one embodiment, y is 1 to 500, preferably an integer of 1 to 300, more preferably an integer of 1 to 100, even more preferably an integer of 5 to 50, and yet more preferably an integer of 10 to 30.

z is an integer of 0 to 500, preferably an integer of 0 to 300, more preferably an integer of 0 to 100, even more preferably an integer of 1 to 100, yet more preferably an integer of 5 to 50, and further preferably an integer of 10 to 30.

In one embodiment, z is 0.

In one embodiment, z is 1 to 500, preferably an integer of 1 to 300, more preferably an integer of 1 to 100, even more preferably an integer of 5 to 50, and yet more preferably an integer of 10 to 30.

In one embodiment, y is 0, and z is 0.

In another embodiment, x is 0, and y is 0.

In yet another embodiment, x is 0, and z is 0.

In a more preferable embodiment, R^{S} is a group represented by the following formula:

-(SiR^{s3}₂-O)ₐ-

wherein
R^{s3} is each independently at each occurrence a hydrocarbon group, and
a is 1 to 1,500.

R^{s3} is each independently at each occurrence a hydrocarbon group. Such a hydrocarbon group may be substituted.

R^{s3} each independently at each occurrence may preferably have an unsubstituted hydrocarbon group or a halogen atom as a substituent.

R^{s3} is, each independently at each occurrence, preferably a C₁₋₆ alkyl group or aryl group optionally substituted with a halogen atom as a substituent, and more preferably a C₁₋₆ alkyl group or aryl group.

The C₁₋₆ alkyl group may be linear or may be branched, and is preferably linear.
The C₁₋₆ alkyl group is preferably a C₁₋₃ alkyl group, and more preferably a methyl group.

The aryl group is preferably a phenyl group.

In one embodiment, R^{s3} is, each independently at each occurrence, a C₁₋₆ alkyl group, preferably a C₁₋₃ alkyl group, and more preferably a methyl group.

In another embodiment, R^{s3} is a phenyl group.

In another embodiment, R^{s3} is, each independently at each occurrence, a methyl group or a phenyl group, and preferably a methyl group.

a is 1 to 1,500. a may be preferably 5 or more, more preferably 10 or more, and even more preferably 15 or more, such as 30 or more or 50 or more. a may be preferably 1,000 or less, more preferably 500 or less, even more preferably 200 or less, and even more preferably 150 or less, such as 100 or less or 80 or less.

a may be preferably 5 to 1,000, more preferably 10 to 500, even more preferably 15 to 200, and even more preferably 15 to 150. When a is within such a range, the resulting coating film has excellent lubricity.

In another embodiment, a may be preferably 1 to 500, more preferably 1 to 300, even more preferably 1 to 100, and yet more preferably 1 to 50. In such an embodiment, the resulting coating film has excellent abrasion durability.

R^{s1} is a hydrocarbon group, and has the same meaning as R^{s3}.

R^{s1} is preferably a C₁₋₆ alkyl group or aryl group optionally substituted with a halogen atom, and more preferably a C₁₋₆ alkyl group or aryl group.

In one embodiment, R^{s1} is a C₁₋₆ alkyl group, preferably a C₁₋₃ alkyl group, and more preferably a methyl group.

In one embodiment, R^{s1} is a C₁₋₆ alkyl group, preferably a C₁₋₄ alkyl group, and more preferably a normal butyl group.

In another embodiment, R^{s1} is a phenyl group.

In another embodiment, R^{s1} is a methyl group or a phenyl group, and preferably a methyl group.

p is each independently at each occurrence 0 or 1. In one embodiment, p is 0. In another embodiment, p is 1.

q is each independently at each occurrence 0 or 1. In one embodiment, q is 0. In another embodiment, q is 1.

In one embodiment, p is 0, and q is 1.

R^{s4} is each independently a group represented by -(R^{s7}-Si^{s6}₂)ₘₐ₁-R^{s6}.

R^{s7} is each independently an oxygen atom or a C₁₋₆ alkylene group.

The C₁₋₆ alkylene group of R^{s7} may be linear or may be branched. The C₁₋₆ alkylene group is preferably a C₁₋₄ alkylene group, and more preferably a C₂₋₄ alkylene group.

In one embodiment, R^{s7} is O.

In one embodiment, some R^{s7} groups are O, and other R^{s7} groups are C₁₋₆ alkylene groups.

R^{s6} is each independently a hydrocarbon group or R^{s4'}.

The hydrocarbon group in R^{s6} may preferably be an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, a n-butyl group, or a tert-butyl group.

The aryl group may be monocyclic or may be polycyclic. The aryl group is preferably an aryl group having 6 to 20 carbon atoms, and more preferably an aryl group having 6 to 10 carbon atoms. The aryl group is particularly preferably a phenyl group.

R^{s6} is preferably an alkyl group, and more preferably an alkyl group having 1 to 4 carbon atoms.

In one embodiment, R^{s6} is a C₁₋₆ alkyl group, preferably a C₁₋₃ alkyl group, and more preferably a methyl group.

In one embodiment, R^{s6} is a C₁₋₆ alkyl group, preferably a C₁₋₄ alkyl group, and more preferably a normal butyl group.

R^{s4'} has the same meaning as R^{s4}. That is, R^{s4'} is -(R^{s7}-SiR^{s6}₂)ₘₐ₁-R^{s6}, provided that, in R^{s4}, the number of R^{s4'} is 20 or less, preferably 10 or less, more preferably 6 or less, and even more preferably 3 or less.

In one embodiment, R^{s6} is each independently a hydrocarbon group or R^{s4'}.

In a preferable embodiment, R^{s6} is each independently a hydrocarbon group.

In one embodiment, R^{s6} is -(R^{s7'}-SiR^{s6'}₂)_{ma1'}-R^{s6'}, wherein
R^{s6'} is each independently a hydrocarbon group or -(R^{s7}-SiR^{s6}₂)ₘₐ₁-R^{s6},
at least one R^{s6'} is -(R^{s7}-SiR^{s6}₂)ₘₐ₁-R^{s6},
   R^{s6} is each independently a hydrocarbon group,
   R^{s7} is each independently an oxygen atom or a C₁₋₆ alkylene group,
   ma1 is each independently an integer of 1 to 5,
R^{s7'} is each independently an oxygen atom or a C₁₋₆ alkylene group, and
ma1' is each independently an integer of 1 to 5.

In another embodiment, R^{s6} is -(R^{s7'}-SiR^{s6'}₂)_{ma1'}-R^{s6'}, wherein
R^{s6'} is each independently a hydrocarbon group or -(R^{s7"}-SiR^{s6"}₂)_{ma1"}-R^{s6"},
at least one R^{s6'} is -(R^{s7"}-SiR^{s6"}₂)_{ma1"}-R^{s6"},
   R^{s6"} is each independently a hydrocarbon group or -(R^{s7}-SiR^{s6}₂)ₘₐ₁-R^{s6},
   at least one R^{s6"} is -(R^{s7}-SiR^{s6}₂)ₘₐ₁-R^{s6},
      R^{s6} is each independently a hydrocarbon group,
      R^{s7} is each independently an oxygen atom or a C₁₋₆ alkylene group,
      ma1 is each independently an integer of 1 to 5,
   R^{s7"} is each independently an oxygen atom or a C₁₋₆ alkylene group,
   ma1" is each independently an integer of 1 to 5,
R^{s7'} is each independently an oxygen atom or a C₁₋₆ alkylene group, and
ma1' is each independently an integer of 1 to 5.

ma1 is each independently an integer of 1 to 5, and preferably 1 or 2.

R^{s5} is each independently a hydrocarbon group.

The hydrocarbon group in R^{s5} may preferably be an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, a n-butyl group, or a tert-butyl group.

The aryl group may be monocyclic or may be polycyclic. The aryl group is preferably an aryl group having 6 to 20 carbon atoms, and more preferably an aryl group having 6 to 10 carbon atoms. The aryl group is particularly preferably a phenyl group.

R^{s5} is preferably an alkyl group, and more preferably an alkyl group having 1 to 4 carbon atoms.

In one embodiment, R^{s5} is a C₁₋₆ alkyl group, preferably a C₁₋₃ alkyl group, and more preferably a methyl group.

In one embodiment, R^{s5} is a C₁₋₆ alkyl group, preferably a C₁₋₄ alkyl group, and more preferably a normal butyl group.

na is 1 to 3. In one embodiment, na is 2. In another embodiment, na is 3. Note that na, when R^{s3'} is present, is independently selected for (R^{s7}-SiR^{s6}₂)ₘₐ₁.

In R^{s3}, 2 or more, preferably 3 or more, more preferably 4 or more, and even more preferably 6 or more, such as 8 or more, 9 or more, 10 or more, or 12 or more Si-O bonds are present.

In a preferable embodiment, in the group represented by the formula (2),
R^{s3} is each independently a group represented by -(R^{s7}-SiR^{s6}₂)ₘₐ₁-R^{s6},
   R^{s7} is each independently an oxygen atom or a C₁₋₆ alkylene group,
   R^{s6} is each independently a hydrocarbon group (preferably an alkyl group having 1 to 4 carbon atoms) or R^{s6'}, and preferably a hydrocarbon group (preferably an alkyl group having 1 to 4 carbon atoms),
      R^{s6'} has the same meaning as R^{s6},
   ma1 is 1 or 2,
R^{s5} is each independently a hydrocarbon group and preferably an alkyl group having 1 to 4 carbon atoms,
p is 0 or 1, and
na is 1 to 3.

Examples of the group represented by the formula (2) include, but are not limited to, the following groups: 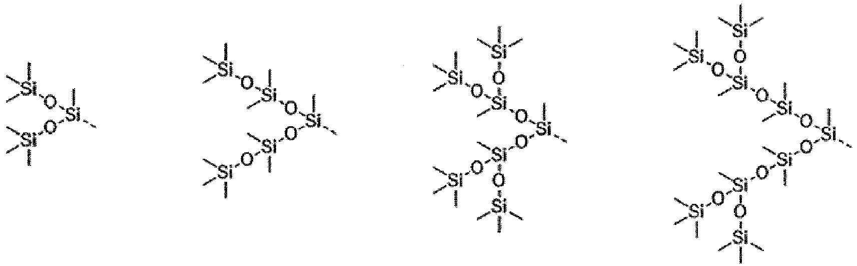 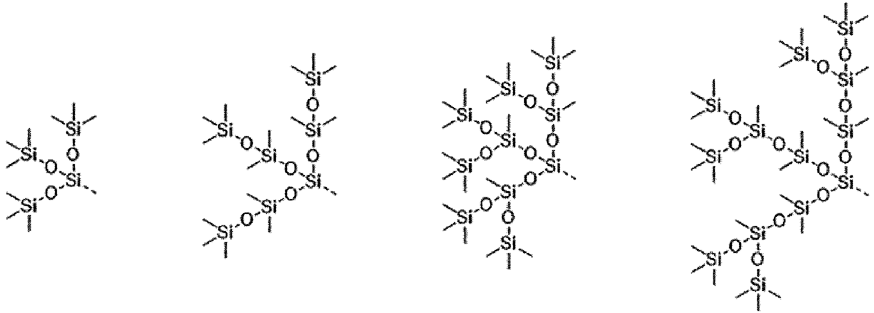 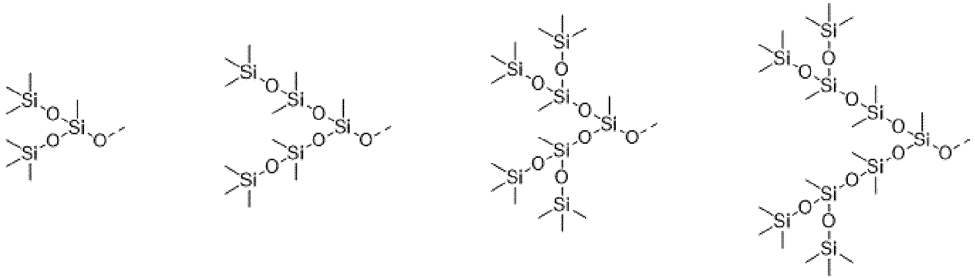 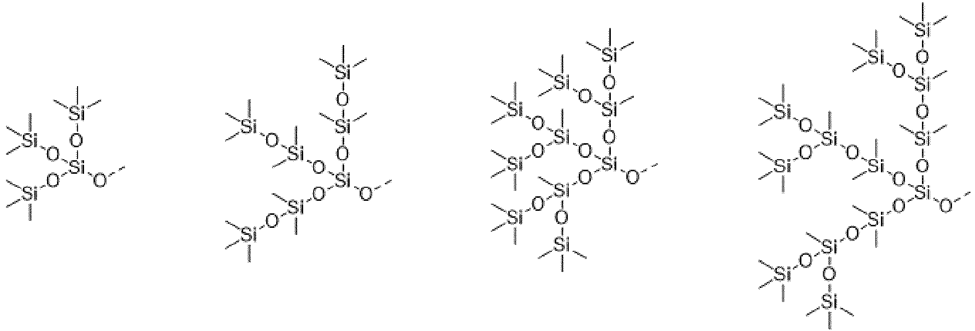 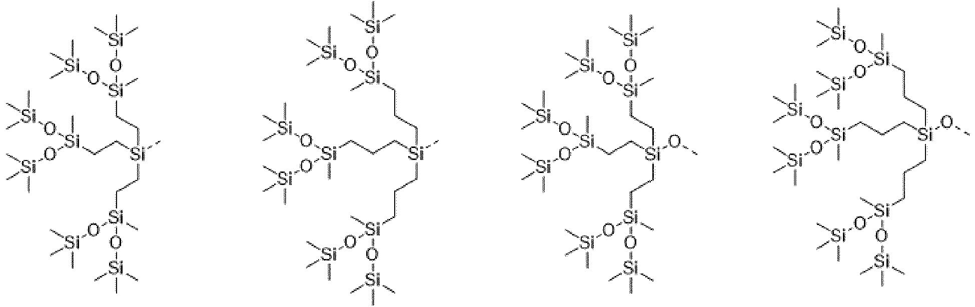 wherein TMS is a trimethylsilyl group.

In a preferable embodiment, the group represented by the formula (2) include the following groups.

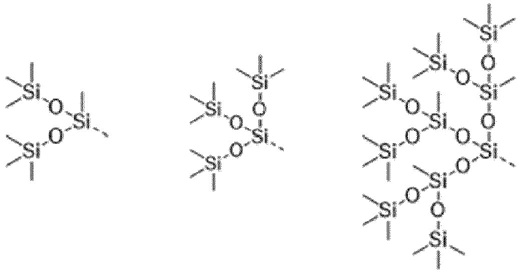

In one embodiment, R^{A} and/or R^{B} is a group having a structure in which at least one Si is branched.

The branched structure is preferably the following structure. 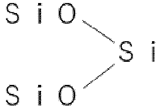 Note that in the above formula, the Si atom is tetravalent, and other bonds are not shown.

In one embodiment, the branched structure may include the following structures: 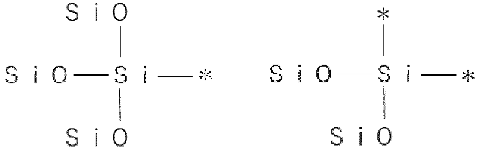 wherein * indicates a point of bonding.
That is, the Si atom may branch into two SiO atoms, or may branch into three SiO atoms. Note that in the above formulae, the Si atom in SiO is tetravalent, and other bonds are not shown.

The point of bonding represented by * may be bonded to another group not bonded to X^{B} that may be comprised in R^{A} and/or R^{B}, may be bonded to a group bonded to X^{A} and/or X^{B} that may be comprised in R^{A} and/or R^{B}, or may be directly bonded to X^{A} and/or X^{B}. When one asterisk * is comprised in the branched structure, * is preferably bonded to a group bonded to X^{A} and/or X^{B} that may be comprised in R^{A} and/or R^{B}, or directly bonded to X^{A} and/or X^{B}. When two or more asterisks * are comprised, * may each independently be bonded to another group not bonded to X^{A} and/or X^{B} that may be comprised in R^{A} and/or R^{B}, or may be bonded to a group bonded to X^{A} and/or X^{B} that may be comprised in R^{A} and/or R^{B}, or to X^{A} and/or X^{B}, and at least one asterisk * is preferably bonded to X^{A} and/or X^{B}, or to a group bonded to X^{A} and/or X^{B}.

X^{A} is interpreted as a linker connecting the siloxane moiety (R^{A}) that mainly provides functions such as water-repellency and the silane moiety (R^{ASi}) that provides an ability to bind to a substrate. Accordingly, X^{A} is not limited as long as the silane compound (A) can stably exist.

X^{A} is a group having a valence of α1+α2, preferably a group having a valence of 2 to 18, more preferably a di- to decavalent group, even more preferably a di- to tetravalent group, and yet more preferably a divalent group. In another embodiment, the group having a valence of α1+α2 is preferably a tri- to octavalent group, and more preferably a tri- to hexavalent group. α1 each independently is an integer of 1 to 9, in one embodiment is preferably 1, and in another embodiment is preferably 1 to 6, and more preferably 1 to 4. α2 each independently is an integer of 1 to 9, in one embodiment is preferably 1, and in another embodiment is more preferably 2 to 7, and more preferably 2 to 5.

In one embodiment, X^{A} is a divalent group, and α1 and α2 are 1.

In one embodiment, X^{A} is a tri- to hexavalent group, α1 is 1, and α2 is 2 to 5.

In one embodiment, X^{A} is a trivalent group; and α1 is 2 and α2 is 1, or α1 is 1 and α2 is 2.

In one embodiment, α1 and β1 are equal. In another embodiment, α1 and β1 are different.

In a preferable embodiment, α2 may be 1, and β2 may be an integer of 1 to 9.

In one embodiment, α2 and β2 are equal. In another embodiment, α2 and β2 are different.

X^{B} is interpreted as a linker connecting the siloxane moiety (R^{B}) that mainly provides functions such as water-repellency and the silane moiety (R^{BSi}) that provides an ability to bind to a substrate. Accordingly, X^{B} is not limited as long as the silane compound (B) can stably exist.

X^{B} is a group having a valence of β1+β2, preferably a group having a valence of 2 to 18, more preferably a di- to decavalent group, even more preferably a di- to tetravalent group, and yet more preferably a divalent group. In another embodiment, the group having a valence of β1+β2 is preferably a di to octavalent group, and more preferably a di- to hexavalent group. β1 is each independently an integer of 1 or more, in one embodiment, preferably 1 to 17, more preferably 1 to 9, even more preferably 1 to 3, and yet more preferably 1, and in another embodiment is preferably 1 to 7, and more preferably 1 to 5. β2 is each independently an integer of 1 or more, in one embodiment, preferably 1 to 17, more preferably 1 to 9, even more preferably 1 to 3, and yet more preferably 1, and in another embodiment is preferably 1 to 7, and more preferably 1 to 5.

In one embodiment, X^{B} is a di- to hexavalent group, β1 is 1, and β2 is 1 to 5.

α1+α2 and β1+β2 may be the same or different.

The number of Si atoms which are comprised in -(R^{BSi})_{β2} and to which a hydroxyl group or a hydrolyzable group is bonded is greater than the number of Si atoms which are comprised in -(R^{ASi})_{α2} and to which a hydroxyl group or a hydrolyzable group is bonded. Such embodiments may include an embodiment wherein the number of Si atoms which are comprised in -R^{BSi} and to which a hydroxyl group or a hydrolyzable group is bonded is greater than the number of Si atoms which are comprised in R^{ASi} and to which a hydroxyl group or a hydrolyzable group is bonded, and/or an embodiment wherein β2 is greater than α2.

The embodiment wherein the number of Si atoms which are comprised in - R^{BSi} and to which a hydroxyl group or a hydrolyzable group is bonded is greater than the number of Si atoms which are comprised in R^{ASi} and to which a hydroxyl group or a hydrolyzable group is bonded comprises an embodiment wherein -R^{ASi} is represented by the formula (S2) described below, and R^{BSi} is represented by the formula (S1), (S3), (S4), or (S5) described below.

The present disclosure also comprises an embodiment wherein the number of Si atoms which are comprised in -(R^{BSi})_{β2} and to which a hydroxyl group or a hydrolyzable group is bonded is equal to the number of Si atoms which are comprised in -(R^{ASi})_{α2} and to which a hydroxyl group or a hydrolyzable group is bonded, and X^{A} and X^{B} are different; and an embodiment wherein the number of Si atoms which are comprised in R^{BSi} and to which a hydroxyl group or a hydrolyzable group is bonded is equal to the number of Si atoms which are comprised in R^{ASi} and to which a hydroxyl group or a hydrolyzable group is bonded, and X^{A} and X^{B} are different. The embodiments wherein X^{A} and X^{B} are different include an embodiment wherein the di- to decavalent group comprised in X^{A} is different from the di- to decavalent group comprised in X^{B}.

The embodiment wherein β2 is greater than α2 may include an embodiment wherein α2 is 1, and β2 is an integer of 2 to 9.

In one embodiment, X^{A} and X^{B} are each independently a di- to decavalent group, such as a di- or trivalent group, comprising a substructure selected from a single bond, a C₁₋₆₀ alkylene group, -CO-, -COO-, -NR⁴¹-, -CONR⁴¹-, -OCONR⁴¹-, - NR⁴¹-CO-NR⁴¹-, -O-, -S-, -CON=, or R^{S}, and x is an integer of 1 to 20.

Combinations of the substructures comprised in X^{A} and X^{B} include combinations of two or more of the same or different groups selected from a single bond, a C₁₋₆₀ alkylene group, -CO-, -COO-, -NR⁴¹-, -O-CO-NR⁴¹-, -NR⁴¹-CO-NR⁴¹-, -CONR⁴¹-, -OCONR⁴¹-, -NR⁴¹-CO-NR⁴¹-, -O-, -S-, and -CON= or R^{S}.

In one embodiment, the substructures comprised in X^{A} and X^{B} are the same group, and in another embodiment, the substructures comprised in X^{A} and X^{B} are different groups.

The C₁₋₆₀ alkylene group in the substructure is more preferably a C₁₀₋₃₀ alkylene group and even more preferably a C₁₀₋₂₂ alkylene group, and it may be linear or branched, and is preferably linear.

In one embodiment, the substructures comprised in X^{A} and X^{B} are alkylene groups having 10 to 30 carbon atoms.

In one embodiment, the substructures comprised in X^{A} and X^{B} are alkylene groups having 10 carbon atoms.

In one embodiment, the substructures comprised in X^{A} and X^{B} are alkylene groups having 22 carbon atoms.

Examples of combinations of the substructure comprised in X^{A} and the substructure comprised in X^{B}, or combinations of the substructure comprised in X^{B} and the substructure comprised in X^{A} include
a single bond and a single bond; a single bond and a C₁₋₆₀ alkylene group; a single bond and -CO-; a single bond and -COO-; a single bond and -NR⁴¹-; a single bond and -O-CO-NR⁴¹-; a single bond and -NR⁴¹-CO-NR⁴¹-; a single bond and - CONR⁴¹-; a single bond and -O-; a single bond and -S-; a single bond and -CON=; a single bond and R^{S};
a C₁₋₆₀ alkylene group and a C₁₋₆₀ alkylene group; a C₁₋₆₀ alkylene group and - CO-; a C₁₋₃₀ alkylene group and -COO-; a C₁₋₆₀ alkylene group and -NR⁴¹-; a C₁₋₆₀ alkylene group and -O-CO-NR⁴¹-; a C₁₋₆₀ alkylene group and -NR⁴¹-CO-NR⁴¹-; a C₁₋₆₀ alkylene group and -CONR⁴¹-; a C₁₋₆₀ alkylene group and -O-; a C₁₋₆₀ alkylene group and -S-; a C₁₋₆₀ alkylene group and -CON=; a C₁₋₆₀ alkylene group and R^{S};
-CO- and -CO-; -CO- and -COO-; -CO- and -NR⁴¹-; -CO- and -O-CO-NR⁴¹-; -CO- and -NR⁴¹-CO-NR⁴¹-; -CO- and -CONR⁴¹-; -CO- and -O-; -CO- and -S-; -CO- and -CON=; -CO- and R^{S};
-COO- and -COO-; -COO- and -NR⁴¹-; -COO- and -O-CO-NR⁴¹-; -COO- and -NR⁴¹-CO-NR⁴¹-; -COO- and -CONR⁴¹-; -COO- and -O-; -COO- and -S-; -COO- and -CON=; -COO- and R^{S};
-NR⁴¹- and -NR⁴¹-; -NR⁴¹- and -O-CO-NR⁴¹-; -NR⁴¹- and -NR⁴¹-CO-NR⁴¹-; - NR⁴¹- and -CONR⁴¹-; -NR⁴¹- and -O-; -NR⁴¹- and -S-; -NR⁴¹- and -CON=; -NR⁴¹- and R^{S};
-O-CO-NR⁴¹- and -O-CO-NR⁴¹-; -O-CO-NR⁴¹- and -NR⁴¹-CO-NR⁴¹-; -O-CO-NR⁴¹- and -CONR⁴¹-; -O-CO-NR⁴¹- and -O-; -O-CO-NR⁴¹- and -S-; -O-CO-NR⁴¹- and -CON=; -O-CO-NR⁴¹- and R^{S};
-NR⁴¹-CO-NR⁴¹- and -NR⁴¹-CO-NR⁴¹-; -NR⁴¹-CO-NR⁴¹- and -CONR⁴¹-; - NR⁴¹-CO-NR⁴¹- and -O-; -NR⁴¹-CO-NR⁴¹- and -S-; -NR⁴¹-CO-NR⁴¹- and -CON=; - NR⁴¹-CO-NR⁴¹- and R^{S};
-CONR⁴¹- and -CONR⁴¹-; -CONR⁴¹- and -O-; -CONR⁴¹- and -S-; -CONR⁴¹- and -CON=; -CONR⁴¹- and R^{S};
-O- and -O-; -O- and -S-; -O- and -CON=; -O- and R^{S};
-S- and -S-; -S- and -CON=; -S- and R^{S};
-CON= and -CON=; -CON= and R^{S}; and
R^{S} and R^{S}.

R⁴¹ is a hydrogen atom, an oxyalkylene-containing group, or a C₁₋₆ alkyl group. The C₁₋₆ alkyl group of R⁴¹ may be linear or may be branched. In one embodiment, the C₁₋₆ alkyl group is linear. In another embodiment, the C₁₋₆ alkyl group is branched. The C₁₋₆ alkyl group is preferably a C₁₋₄ alkyl group, more preferably a C₁₋₃ alkyl group, even more preferably a methyl group or an ethyl group, and particularly preferably a methyl group.

The oxyalkylene-containing group of R⁴¹ is a group comprising -O-alkylene-, and may typically be an oxyalkylene-containing group having 1 to 10 carbon atoms. The oxyalkylene-containing group having 1 to 10 carbon atoms is a group comprising a -O-C₁₋₁₀ alkylene-, and is, for example, -R⁵⁵-(-O-C₁₋₁₀ alkylene)ₙ-R⁵⁶ (wherein R⁵⁵ is a single bond or a divalent organic group, preferably a C₁₋₆ alkylene group, n is any integer, and preferably an integer of 2 to 10, and R⁵⁶ is a hydrogen atom or a monovalent organic group, and preferably a C₁₋₆ alkyl group). The alkylene group may be linear or may be branched.

In one embodiment, R⁴¹ is a hydrogen atom.

In one embodiment, R⁴¹ is a C₁₋₆ alkyl group, and preferably a methyl group.

R^{S} is a group represented by the following formula: 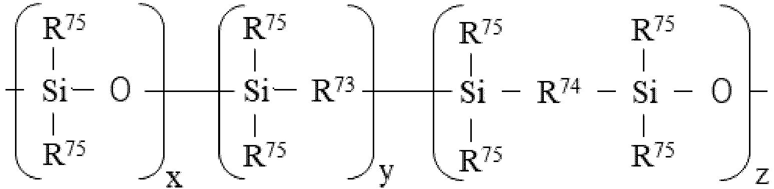 wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula.

The divalent siloxane-containing group may be a random polymer, or may be a block polymer.

In a preferable embodiment, X^{A} and X^{B} are each independently:
a group represented by the following formula:

-(X¹²¹)ₐ₀-[(X¹¹¹)ₐ₁-(X¹¹²)ₐ₂]-

wherein
X¹²¹ is R⁶¹_{b1}R⁶²_{3-b1}C-, R⁶³_{b2}R⁶⁴_{3-b2}Si-, or R⁶⁵₂N-,
   R⁶¹ is a single bond or a divalent organic group,
   R⁶² is a hydrogen atom or a monovalent organic group,
   R⁶³ is a single bond or a divalent organic group,
   R⁶⁴ is a hydrogen atom or a monovalent organic group,
   R⁶⁵ is a divalent organic group,
   b1 is 1 to 3,
   b2 is 1 to 3,
X¹¹¹ is a single bond or a divalent organic group,
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, -S-, or R^{S},
   R⁴¹ is a hydrogen atom, an oxyalkylene-containing group, or a C₁₋₆ alkyl group,
   R^{S} is a group represented by the following formula: 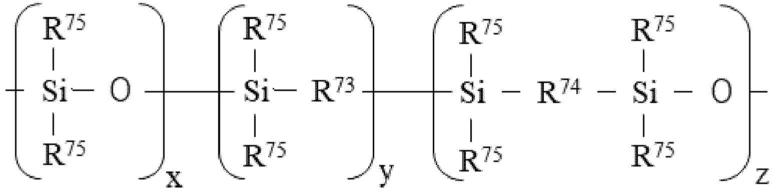 (wherein
      R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
         R⁷⁶ is each independently a C₁₋₆ alkylene group,
         R⁷⁷ is each independently an optionally substituted phenylene group or naphthylene group,
         R⁷⁸ is each independently a single bond or a C₁₋₆ alkylene group,
         R⁷⁹ is each independently a single bond or an oxygen atom,
      R⁷⁵ is each independently a hydrocarbon group,
      x is an integer of 0 to 500,
      y is an integer of 0 to 500,
      z is an integer of 0 to 500,
      x + y + z is 1 or more, and
      the occurrence order of the respective repeating units enclosed in parentheses provided with x, y, or z is not limited in the formula)
      a0 is 0 or 1,
      a1 is an integer of 1 to 5,
      a2 is an integer of 0 to 5, and
      the occurrence order of the respective repeating units enclosed in parentheses provided with a1 or a2 occur is not limited in the formula; or a group represented by 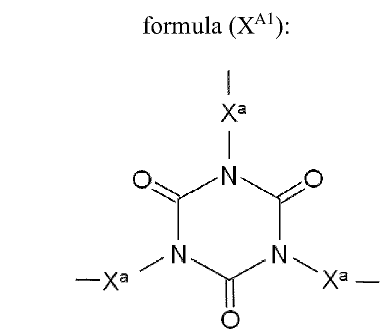
wherein X^{a} is each independently a single bond or a divalent linking group.
The left side of the group X^{A} is bonded to R^{A}, and the right side is bonded to R^{ASi}. The left side of the group X^{B} is bonded to R^{B}, and the right side is bonded to R^{BSi}.

X¹²¹ is R⁶¹_{b1}R⁶²_{3-b1}C-, R⁶³_{b2}R⁶⁴_{3-b2}Si-, or R⁶⁵₂N-.

R⁶¹ is a single bond or a divalent organic group.

R⁶¹ is preferably a C₁₋₆ alkylene group, -(CH₂)_{f1}-O-(CH₂)_{f2}- (wherein f1 is an integer of 0 to 6 such as an integer of 1 to 6, and f2 is an integer of 0 to 6 such as an integer of 1 to 6), or -(CH₂)_{f3}-phenylene-(CH₂)_{f4}- (wherein f3 is an integer of 0 to 6 such as an integer of 1 to 6, and f4 is an integer of 0 to 6 such as an integer of 1 to 6). Such a C₁₋₆ alkylene group may be linear or may be branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, R⁶¹ is a C₁₋₆ alkylene group or -(CH₂)_{f3}-phenylene-(CH₂)_{f4}-, and preferably -phenylene-(CH₂)_{f4}-.

In another preferable embodiment, R⁶¹ is a C₁₋₃ alkylene group. In one embodiment, R⁶¹ may be -CH₂CH₂CH₂-. In another embodiment, R⁶¹ may be - CH₂CH₂-.

R⁶² is a hydrogen atom or a monovalent organic group.

In one embodiment, R⁶² is a hydrogen atom.

In another embodiment, R⁶² is a monovalent organic group.

The monovalent organic group of R⁶² is preferably a C₁₋₂₀ alkyl group, more preferably a C₁₋₆ alkyl group, and even more preferably a methyl group.

b1 is 1 to 3. In one embodiment, b1 is 1. In another embodiment, b1 is 2. In yet another embodiment, b1 is 3.

R⁶³ is a single bond or a divalent organic group.

R⁶³ is preferably a C₁₋₆ alkylene group, -(CH₂)_{g1}-O-(CH₂)_{g2}- (wherein g1 is an integer of 0 to 6 such as an integer of 1 to 6, and g2 is an integer of 0 to 6 such as an integer of 1 to 6), or -(CH₂)_{g3}-phenylene-(CH₂)_{g4}- (wherein g3 is an integer of 0 to 6 such as an integer of 1 to 6, and g4 is an integer of 0 to 6 such as an integer of 1 to 6). Such a C₁₋₆ alkylene group may be linear or may be branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, R⁶³ is a C₁₋₆ alkylene group or -(CH₂)_{g3}-phenylene-(CH₂)_{g4}-, and preferably -phenylene-(CH₂)_{g4}-.

In another preferable embodiment, R⁶³ is a C₁₋₃ alkylene group. In one embodiment, R⁶³ may be -CH₂CH₂CH₂-. In another embodiment, R⁶³ may be - CH₂CH₂-.

R⁶⁴ is a hydrogen atom or a monovalent organic group.

In one embodiment, R⁶⁴ is a hydrogen atom.

In another embodiment, R⁶⁴ is a monovalent organic group.

In R⁶⁴, the monovalent organic group is preferably a C₁₋₂₀ alkyl group, more preferably a C₁₋₆ alkyl group, and even more preferably a methyl group.

b2 is 1 to 3. In one embodiment, b2 is 1. In another embodiment, b2 is 2. In yet another embodiment, b2 is 3.

R⁶⁵ is a divalent organic group.

R⁶⁵ is preferably a C₁₋₆ alkylene group, -(CH₂)ₕ₁-O-(CH₂)ₕ₂- (wherein h1 is an integer of 0 to 6 such as an integer of 1 to 6, and h2 is an integer of 0 to 6 such as an integer of 1 to 6), or -(CH₂)ₕ₃-phenylene-(CH₂)ₕ₄- (wherein h3 is an integer of 0 to 6 such as an integer of 1 to 6, and h4 is an integer of 0 to 6 such as an integer of 1 to 6). Such a C₁₋₆ alkylene group may be linear or may be branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, R⁶⁵ is a C₁₋₆ alkylene group or -(CH₂)ₕ₃-phenylene-(CH₂)ₕ₄-, and preferably -phenylene-(CH₂)ₕ₄-.

In another preferable embodiment, R⁶⁵ is a C₁₋₃ alkylene group. In one embodiment, R⁶⁵ may be -CH₂CH₂CH₂-. In another embodiment, R⁶⁵ may be - CH₂CH₂-.

In one embodiment, X¹²¹ is R⁶¹_{b1}R⁶²_{3-b1}C-.

In one embodiment, X¹²¹ is R⁶³_{b2}R⁶⁴_{3-b2}Si-.

In one embodiment, X¹²¹ is R⁶⁵₂N-.

X¹¹¹ is a single bond or a divalent organic group.

The divalent organic group is preferably a divalent hydrocarbon group.

The hydrocarbon group of X¹¹¹ is preferably a hydrocarbon group having 1 to 60 carbon atoms, and more preferably a hydrocarbon group having 1 to 30 carbon atoms.

The hydrocarbon group may preferably be an alkylene group or an arylene group.

The alkylene group may be linear or may be branched. The alkylene group is preferably an alkylene group having 1 to 60 carbon atoms, and more preferably 1 to 30 carbon atoms.

In one embodiment, the alkylene group may be, for example, a C₁₋₁₀ alkylene group, a C₁₋₈ alkylene group, a C₁₋₆ alkylene group, a C₂₋₁₀ alkylene group, a C₂₋₈ alkylene group, or a C₂₋₆ alkylene group.

In one embodiment, the alkylene group may be, for example, a C₁₁₋₃₀ alkylene group. The number of carbon atoms in the alkylene group may preferably be 10 or more, more preferably 16 or more, even more preferably 18 or more, and yet more preferably 22 or more. The number of carbon atoms in the alkylene group of X¹¹¹ may preferably be 60 or less, more preferably 40 or less, even more preferably 30 or less, and yet more preferably 24 or less. The number of carbon atoms in the alkylene group of X¹¹¹ may preferably be 11 to 60, more preferably 12 to 40, and even more preferably 18 to 30.

In one embodiment, the alkylene group may be, for example, a C₁₀₋₃₀ alkylene group. The number of carbon atoms in the alkylene group may preferably be 10 or more, more preferably 16 or more, even more preferably 18 or more, and yet more preferably 22 or more. The number of carbon atoms in the alkylene group of X¹¹¹ may preferably be 60 or less, more preferably 40 or less, even more preferably 30 or less, and yet more preferably 24 or less. The number of carbon atoms in the alkylene group of X¹¹¹ may preferably be 10 to 60, more preferably 12 to 40, and even more preferably 18 to 30.

The arylene group may be monocyclic or may be polycyclic. The arylene group is preferably an arylene group having 6 to 20 carbon atoms, and more preferably an arylene group having 6 to 10 carbon atoms. The arylene group is particularly preferably a phenylene group.

In one embodiment, X¹¹¹ is a group represented by:

-X¹¹³-X¹¹²-X¹¹⁴-

wherein
X¹¹³ is an alkylene group, an oxyalkylene group, or -(CⱼH₂ⱼ)ₖ₁-(O-CⱼH₂ⱼ)ₖ₂ wherein j is an integer of 1 to 6, k1 is 1 or 0, and k2 is an integer of 1 to 20,
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, or -S-, preferably -CO-, -NR⁴¹-, -CONR⁴¹-, or - NR⁴¹CO-, and more preferably -CONR⁴¹- or -NR⁴¹CO-,
   R⁴¹ is a hydrogen atom, an oxyalkylene-containing group, or a C₁₋₆ alkyl group, and is preferably a hydrogen atom, and
X¹¹⁴ is a single bond or an alkylene group.

X¹¹³ is an alkylene group, an oxyalkylene group, or -(CⱼH₂ⱼ)ₖ₁-(O-CⱼH₂ⱼ)ₖ₂ wherein j is an integer of 1 to 6, k1 is 1 or 0, and k2 is an integer of 1 to 20.

The alkylene group may be linear or may be branched. The alkylene group may preferably have 1 to 60 carbon atoms, and more preferably 1 to 30 carbon atoms.

In one embodiment, the alkylene group may be, for example, a C₁₋₁₀ alkylene group, a C₁₋₈ alkylene group, a C₁₋₆ alkylene group, a C₂₋₁₀ alkylene group, a C₂₋₈ alkylene group, or a C₂₋₆ alkylene group.

In one embodiment, the alkylene group may be, for example, a C₁₁₋₃₀ alkylene group. The number of carbon atoms in the alkylene group may preferably be 12 or more, more preferably 16 or more, even more preferably 18 or more, and yet more preferably 22 or more. The number of carbon atoms in the alkylene group of X¹¹³ may preferably be 60 or less, more preferably 40 or less, even more preferably 30 or less, and yet more preferably 24 or less. The number of carbon atoms in the alkylene group of X¹¹³ may preferably be 11 to 60, more preferably 12 to 40, and even more preferably 18 to 30.

In one embodiment, the alkylene group may be, for example, a C₁₀₋₃₀ alkylene group. The number of carbon atoms in the alkylene group may preferably be 12 or more, more preferably 16 or more, even more preferably 18 or more, and yet more preferably 22 or more. The number of carbon atoms in the alkylene group of X¹¹³ may preferably be 60 or less, more preferably 40 or less, even more preferably 30 or less, and yet more preferably 24 or less. The number of carbon atoms in the alkylene group of X¹¹³ may preferably be 10 to 60, more preferably 12 to 40, and even more preferably 18 to 30.

The oxyalkylene group is a group having an oxygen atom at the left terminal (on the R^{A} or R^{B} side) of the alkylene group, i.e., an -O-alkylene group.

j is an integer of 1 to 6, and preferably an integer of 2 to 4.

k1 is 1 or 0, and preferably 0.

k2 is an integer of 1 to 20, preferably an integer of 2 to 10, and more preferably an integer of 2 to 6.

X¹¹⁴ is an alkylene group.

The alkylene group may be linear or may be branched. The alkylene group may be an alkylene group preferably having 1 to 60 carbon atoms and more preferably having 1 to 30 carbon atoms, preferably a C₁₋₁₀ alkylene group, more preferably a C₁₋₈ alkylene group, and even more preferably a C₁₋₆ alkylene group, such as a C₂₋₁₀ alkylene group, a C₂₋₈ alkylene group, or a C₂₋₆ alkylene group.

In one embodiment, X¹¹¹ is a group represented by:

-O-R^{S}-X¹¹³-X¹¹²-X¹¹⁴-

wherein
R^{S} is a group represented by the following formula: 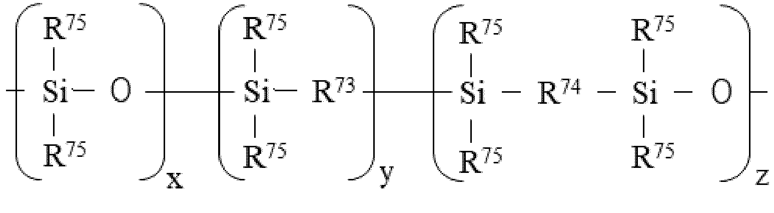 (wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula)
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, or -S-, preferably -CO-, -NR⁴¹-, -CONR⁴¹-, or - NR⁴¹CO-, and more preferably -CONR⁴¹- or -NR⁴¹CO-,
   R⁴¹ is a hydrogen atom, an oxyalkylene-containing group, or a C₁₋₆ alkyl group, and is preferably a hydrogen atom,
X¹¹³ is an alkylene group, an oxyalkylene group, or -(CⱼH₂ⱼ)ₖ₁-(O-CⱼH₂ⱼ)ₖ₂ wherein j is an integer of 1 to 6, k1 is 1 or 0, and k2 is an integer of 1 to 20, and
X¹¹⁴ is a single bond or an alkylene group.

In one embodiment, X¹¹¹ is a group represented by:

-X¹¹⁵-R^{S}-X¹¹³-X¹¹²-X¹¹⁴-

wherein
R^{S} is a group represented by the following formula: 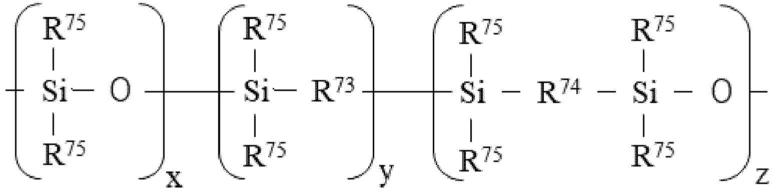 (wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula),
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, or -S-, preferably -CO-, -NR⁴¹-, -CONR⁴¹-, or - NR⁴¹CO-, and more preferably -CONR⁴¹- or -NR⁴¹CO-,
   R⁴¹ is a hydrogen atom, an oxyalkylene-containing group, or a C₁₋₆ alkyl group, and is preferably a hydrogen atom,
X¹¹³ is an alkylene group, an oxyalkylene group, or -(CⱼH₂ⱼ)ₖ₁-(O-CⱼH₂ⱼ)ₖ₂ wherein j is an integer of 1 to 6, k1 is 1 or 0, and k2 is an integer of 1 to 20,
X¹¹⁴ is a single bond or an alkylene group, and
X¹¹⁵ is an alkylene group, an oxyalkylene group, or -(Cₚ₁₀H₂ₚ₁₀)_{q1}-(O-Cₚ₁₀H₂ₚ₁₀)_{q2} wherein p10 is an integer of 1 to 6, q1 is 1 or 0, and q2 is an integer of 1 to 20.

X¹¹⁵ is an alkylene group, an oxyalkylene group, or -(CₚH₂ₚ)_{q1}-(O-CₚH₂ₚ)_{q2} wherein p is an integer of 1 to 6, q1 is 1 or 0, and q2 is an integer of 1 to 20.

The alkylene group may be linear or may be branched. The alkylene group is preferably an alkylene group having 1 to 60 carbon atoms, and more preferably 1 to 30 carbon atoms.

In one embodiment, the alkylene group may be, for example, a C₁₋₁₀ alkylene group, a C₁₋₈ alkylene group, a C₁₋₆ alkylene group, a C₂₋₁₀ alkylene group, a C₂₋₈ alkylene group, or a C₂₋₆ alkylene group.

The oxyalkylene group is a group having an oxygen atom at the left terminal (on the R^{A} or R^{B} side) of the alkylene group, i.e., an -O-alkylene group.

p10 is an integer of 1 to 6, and preferably an integer of 2 to 4.

q1 is 1 or 0, and preferably 0.

q2 is an integer of 1 to 20, preferably an integer of 2 to 10, and more preferably an integer of 2 to 6.

In one embodiment, X¹¹¹ may be a group represented by the following formula (X^{A1}): 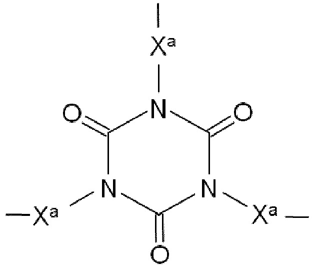 wherein X^{a} is a single bond or a divalent organic group.

X^{a} is a single bond or divalent linking group directly bonded to the isocyanuric ring. X^{a} is preferably a single bond, an alkylene group, or a divalent group comprising at least one bond selected from the group consisting of an ether bond, an ester bond, an amide bond, and a sulfide bond, and more preferably a single bond, an alkylene group having 1 to 10 carbon atoms, or a divalent hydrocarbon group having 1 to 10 carbon atoms and comprising at least one bond selected from the group consisting of an ether bond, an ester bond, an amide bond, and a sulfide bond.

X^{a} is even more preferably a group represented by the following formula:

-(CX¹²¹X¹²²)ₓ₁-(X^{a1})_{y1}-(CX¹²³X¹²⁴)_{z1}-

wherein X¹²¹ to X¹²⁴ are each independently H, OH, or -OSi(OR¹²¹)₃, wherein three R¹²¹ groups are each independently an alkyl group having 1 to 4 carbon atoms,
X^{a1} is -C(=O)NH-, -NHC(=O)-, -O-, -C(=O)O-, -OC(=O)-, -OC(=O) O-, - NH-, or -NHC(=O)NH- (the left side of each bond binds to CX¹²¹X¹²²), and
x1 is an integer of 0 to 10, y1 is 0 or 1, and z1 is an integer of 1 to 10.

X^{a1} is preferably -O- or -C(=O)O-.

X^{a} is particularly preferably:
a group represented by the following formula:

-(CH₂)ₘ₁₂-O-(CH₂)ₘ₁₃-

wherein m12 is an integer of 1 to 3, and m13 is an integer of 1 to 3,
a group represented by:

   -(CH₂)ₘ₁₅-O-CH₂CH(OH)-(CH₂)ₘ₁₆-
wherein m15 is an integer of 1 to 3, and m16 is an integer of 1 to 3,
a group represented by:

   -(CH₂)ₘ₁₈-
wherein m18 is an integer of 1 to 3, and
a group represented by:

   -(CH₂)ₘ₂₀-O-CH₂CH(OSi(OCH₃)₃)-(CH₂)ₘ₂₁-
wherein m20 is an integer of 1 to 3, and m21 is an integer of 1 to 3.

X^{a} is not limited, and specific examples include:
-CH₂-, -C₂H₄-, -C₃H₆-, -C₄H₈-, -C₄H₈-O-CH₂-, -CO-O-CH₂-CH(OH)-CH₂-, -S-, - NR¹²¹-, -(CH₂)ₘ₂₂-C(=O)-O-(CH₂)ₘ₂₃-, -(CH₂)ₘ₂₂-O-C(=O)-(CH₂)ₘ₂₃-, -(CH₂)ₘ₂₂-C(=O)-NR¹²¹-(CH₂)ₘ₂₃-, and -(CH₂)ₘ₂₂-NR¹²¹-C(=O)-(CH₂)ₘ₂₃-CH₂OCH₂CH(OSi(OCH₃)₃)CH₂-,
wherein R¹²¹ is a hydrogen atom or a C₁₋₆ hydrocarbon chain, m22 is an integer of 1 to 10, and m23 is an integer of 1 to 10.

R^{ASi} is a monovalent group comprising a Si atom to which a hydroxyl group or a hydrolyzable group is bonded. R^{BSi} is a monovalent group comprising a Si atom to which a hydroxyl group or a hydrolyzable group is bonded.

In another preferable embodiment, X^{A} and X^{B} may be each independently a divalent organic group comprising an alkylene group having 7 or more carbon atoms, preferably a divalent organic group comprising an alkylene group having 10 or more carbon atoms, more preferably a divalent organic group comprising an alkylene group having 11 or more carbon atoms, more preferably a divalent organic group further comprising -CO-, -COO-, -NR⁴¹-, -CONR⁴¹-, -OCONR⁴¹-, -NR⁴¹-CO-NR⁴¹-, -O-,or -S-, and even more preferably a group represented by the following formula:

-X^{10B}-X^{11B}-X^{12B}-

wherein
X^{10B} is an alkylene group having 11 or more carbon atoms,
X^{11B} is a single bond, -CO-, -COO-, -NR⁴¹-, -CONR⁴¹-, -OCONR⁴¹-, -NR⁴¹-CO-NR⁴¹-, -O-, -S-, -O-(CH₂)ₓ-CONR⁴¹-, or -O-(CH₂)ₓ-CO-,
R⁴¹ is a hydrogen atom, an oxyalkylene-containing group, or a C₁₋₆ alkyl group,
x is an integer of 1 to 20, and
X^{12B} is a single bond or a C₁₋₆ alkylene group.

The number of carbon atoms in the alkylene group of X^{A}, X^{B}, and X^{10B} may be preferably 12 or more, more preferably 16 or more, even more preferably 18 or more, and even more preferably 22 or more. The number of carbon atoms in the alkylene group of X^{B} and X^{10B} may be preferably 60 or less, more preferably 40 or less, even more preferably 30 or less, and even more preferably 24 or less. The number of carbon atoms in the alkylene group of X^{B} and X^{10B} may be preferably 11 to 60, more preferably 12 to 40, and even more preferably 18 to 30.

The alkylene group in X^{A}, X^{B}, and X^{10B} may be linear or may be branched. The alkylene group is preferably linear.

X^{10B} is preferably -CO-, -COO-, -NR⁴¹-, -CONR⁴¹-, -OCONR⁴¹-, -NR⁴¹-CO-NR⁴¹-, -O-, -S-, -O-(CH₂)ₓ-CONR⁴¹-, or -O(CH₂)ₓ-CO-, more preferably -CO-, - CONR⁴¹-, or -OCONR⁴¹-, and more preferably -CONR⁴¹-. R⁴¹ represents a hydrogen atom, an oxyalkylene-containing group, or a C₁₋₆ alkyl group, and is preferably a hydrogen atom, and x is an integer of 1 to 20.

In one embodiment, X^{12B} is a single bond.

In another embodiment, X^{12B} is a C₁₋₆ alkylene group.

The C₁₋₆ alkylene group in X^{12B} may be linear or may be branched. In one embodiment, the C₁₋₆ alkylene group is linear. In another embodiment, the C₁₋₆ alkylene group is branched. The C₁₋₆ alkylene group is preferably a C₁₋₄ alkylene group, and more preferably a C₁₋₃ alkylene group.

In one embodiment, X^{A} and X^{B} have different structures. In one embodiment, X^{A} and X^{B} have the same structure. In a preferable embodiment, X^{A} and X^{B} have the same structure comprising an amide bond. In one embodiment, the amide bond may be -CO-NR- (wherein R represents a hydrogen atom or an organic group). The organic group in R may be preferably a C₁₋₃₀ hydrocarbon group, more preferably a linear or branched C₁₋₃₀ alkyl group, and even more preferably a linear or branched C₁₋₁₅ alkyl group, and may be specifically a methyl group, an ethyl group, or a propyl group. In a preferable embodiment, the amide bond may have - CO-NH-, i.e., a structure in which hydrogen is bonded to the nitrogen atom of the amide bond.

In one embodiment, X^{A} and X^{B} have different structures. In one embodiment, X^{A} and X^{B} have the same structure. In a preferable embodiment, X^{A} and X^{B} have the same structure comprising an amide bond. In one embodiment, the amide bond may be -CO-N= (wherein = represents two bonds from the nitrogen atom, and the substituents bonded thereto may be the same or different).

In one embodiment, X^{A} and X^{B} have different structures. In one embodiment, X^{A} and X^{B} have the same structure. In a preferable embodiment, X^{A} and X^{B} have different structures comprising an amide bond. In one embodiment, the amide bond may have -CO-NR- (wherein R represents a hydrogen atom or an organic group) and -CO-N= (wherein = represents two bonds from the nitrogen atom, and the substituents bonded thereto may be the same or different). The organic group in R may be preferably a C₁₋₃₀ hydrocarbon group, more preferably a linear or branched C₁₋₃₀ alkyl group, and even more preferably a linear or branched C₁₋₁₅ alkyl group, and may be specifically a methyl group, an ethyl group, or a propyl group. In a preferable embodiment, the amide bond may have a structure in which hydrogen is bonded to the nitrogen atom on one hand, while hydrogen is not bonded to the nitrogen atom on the other hand.

In one embodiment, the number of carbon atoms in the alkylene group of X^{A} or X^{B} is greater than the number of Si atoms in R^{ASi} or R^{BSi}, respectively. By increasing the number of carbon atoms in the alkylene group of X^{A} or X^{B} so as to be greater than the number of Si atoms in R^{ASi} or R^{BSi}, the friction durability of the resulting surface-treating layer can be further increased.

In a preferable embodiment, the number of carbon atoms in the alkylene group of X^{A} or X^{B} may be 2.5 times or greater, preferably 3.0 times or greater, and even more preferably 3.5 times or greater than the number of Si atoms in R^{ASi} or R^{BSi}. Also, the number of carbon atoms in the alkylene group of X^{A} or X^{B} may be preferably 50 times or less, such as 30 times or less, 20 times or less, or 10 times or less than the number of Si atoms in R^{ASi} or R^{BSi}.

In one embodiment, the number of carbon atoms in the alkylene group of X^{A} or X^{B} is greater than the number of atoms in the main chain of R^{ASi} or R^{BSi}. By increasing the number of carbon atoms in the alkylene group of X^{A} or X^{B} so as to be greater than the number of atoms in the main chain of R^{ASi} or R^{BSi}, the friction durability of the resulting surface-treating layer can be further increased.

In a preferable embodiment, the number of carbon atoms in the alkylene group of X^{A} or X^{B} may be 2.0 times or greater, preferably 2.5 time or more, more preferably 3.0 times or greater, and even more preferably 4.0 times or greater than the number of atoms in the main chain of R^{ASi} or R^{BSi}, respectively. Also, the number of carbon atoms in the alkylene group of X^{A} or X^{B} may be preferably 30 times or less, such as 20 times or less, 10 times or less, or 6.0 times or less than the number of main-chain atoms in R^{ASi} or R^{BSi}.

Here, the main chain of R^{ASi} or R^{BSi} means the atomic chain having the largest number of atoms (excluding hydrogen atoms) from the Si atom in R^{ASi} or R^{BSi} bonded to X^{A} or X^{B}. For example, the number of atoms in the main chain of R^{ASi} or R^{BSi} is 4 in the case of Si(CH₃)₃OSi(CH₃)₂-, the number of atoms in the main chain of R^{ASi} or R^{BSi} is 6 in the case of Si(CH₃)₃OSi(CH₃)₃OSi(CH₃)₂-, and 3 in the case of Si(Si(CH₃)₃)₃-.

In a preferable embodiment, R^{ASi} and R^{BSi} are each independently a group represented by the following formula (S1), (S2), (S3), (S4), or (S5):

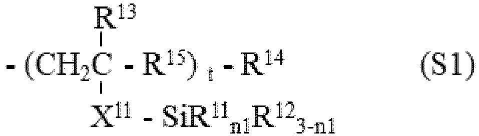

- SiR¹¹ₙ₁R¹²₃₋ₙ₁ (S2)

- SiR^{a1}ₖ₁R^{b1}ₗ₁R^{c1}ₘ₁ (S3)

- CR^{d1}ₖ₂R^{e1}ₗ₂R^{f1}ₘ₂ (S4)

- NR^{g1}R^{h1} (S5)

wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently a divalent organic group,
R²¹ is each independently -Z^{1***'***}-SiR^{21'}_{p1'}R^{22'}_{q1'}R^{23'}_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
l1 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2***'***}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

In the formulae, R¹¹ is each independently a hydroxyl group or a hydrolyzable group.

R¹¹ is preferably, each independently, a hydrolyzable group.

R¹¹ is preferably, each independently, -OR^{h}, -OCOR^{h}, -O-N=CR^{h}₂, -NR^{h}₂, - NHR^{h}, -NCO, or a halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formulae, R¹² is each independently a monovalent organic group. Such a monovalent organic group is a monovalent organic group excluding the above hydrolyzable group.

In R¹², the monovalent organic group is preferably a C₁₋₂₀ alkyl group, more preferably a C₁₋₆ alkyl group, and even more preferably a methyl group.

In the formulae, n1 is each independently an integer of 0 to 3 for each (SiR¹¹ₙ₁R¹²₃₋ₙ₁) unit, provided that, in the formula (S1), at least two (SiR¹¹ₙ₁R¹²₃₋ₙ₁) units wherein n1 is 1 to 3 are present. In other words, in the formula (S1), at least two Si atoms to which a hydroxyl group or a hydrolyzable group is bonded are present.

n1 is each independently an integer of preferably 1 to 3, more preferably 2 to 3, and even more preferably 3 for each (SiR¹¹ₙ₁R¹²₃₋ₙ₁) unit.

In the formula, X¹¹ is each independently a single bond or a divalent organic group. Such a divalent organic group is preferably -R²⁸-Oₓ-R²⁹-, wherein R²⁸ and R²⁹ are each independently a single bond or a C₁₋₂₀ alkylene group, and x is 0 or 1. Such a C₁₋₂₀ alkylene group may be linear or may be branched, and is preferably linear. Such a C₁₋₂₀ alkylene group is preferably a C₁₋₁₀ alkylene group, more preferably a C₁₋₆ alkylene group, and even more preferably a C₁₋₃ alkylene group.

In one embodiment, X¹¹ is each independently a -C₁₋₆ alkylene-O-C₁₋₆ alkylene- or a -O-C₁₋₆ alkylene-.

In a preferable embodiment, X¹¹ is each independently a single bond or a linear C₁₋₆ alkylene group, preferably a single bond or a linear C₁₋₃ alkylene group, more preferably a single bond or a linear C₁₋₂ alkylene group, and even more preferably a linear C₁₋₂ alkylene group.

In the formulae, R¹³ is each independently a hydrogen atom or a monovalent organic group. Such a monovalent organic group is preferably a C₁₋₂₀ alkyl group.

In a preferable embodiment, R¹³ is each independently a hydrogen atom or a linear C₁₋₆ alkyl group, preferably a hydrogen atom or a linear C₁₋₃ alkyl group, and preferably a hydrogen atom or a methyl group.

In the formulae, R¹⁵ is each independently a single bond, an oxygen atom, an alkylene group having 1 to 6 carbon atoms, or an alkyleneoxy group having 1 to 6 carbon atoms.

In one embodiment, R¹⁵ is each independently an oxygen atom, an alkylene group having 1 to 6 carbon atoms, or an alkyleneoxy group having 1 to 6 carbon atoms.

In a preferable embodiment, R¹⁵ is a single bond.

In the formulae, t is each independently an integer of 2 or more.

In a preferable embodiment, t is each independently an integer of 2 to 10, and preferably an integer of 2 to 6.

In the formulae, R¹⁴ is each independently a hydrogen atom, a halogen atom, or -X¹¹-SiR¹¹ₙ₁R¹²₃₋ₙ₁. Such a halogen atom is preferably an iodine atom, a chlorine atom, or a fluorine atom, and more preferably a fluorine atom. In a preferable embodiment, R¹⁴ is a hydrogen atom.

In one embodiment, the formula (S1) is the following formula (S1-a): 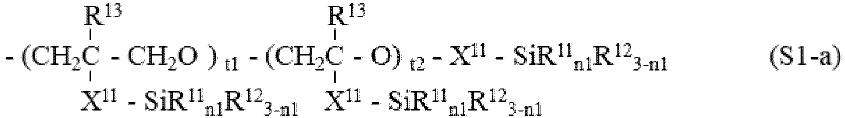 wherein
R¹¹, R¹², R¹³, X¹¹, and n1 have the same meanings as those described for the formula (S1),
t1 and t2 are each independently an integer of 1 or more, preferably an integer of 1 to 10, and more preferably an integer of 2 to 10, such as an integer of 1 to 5 or an integer of 2 to 5, and
the occurrence order of the respective repeating units enclosed in parentheses provided with t1 or t2 is not limited in the formula.

In a preferable embodiment, the formula (S1) is the following formula (S1-b): 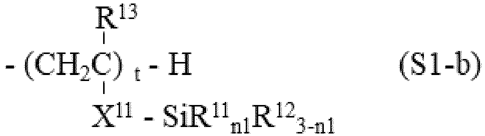 wherein R¹¹, R¹², R¹³, X¹¹, n1, and t have the same meanings as those described for the formula (S1).

R^{a1} is each independently -Z¹-SiR²¹ₚ₁R²²_{q1}R²³ᵣ₁.

Z¹ is each independently an oxygen atom or a divalent organic group. Below, the right side of the structure denoted as Z¹ binds to (SiR²¹ₚ₁R²²_{q1}R²³ᵣ₁).

In a preferable embodiment, Z¹ is a divalent organic group.

In a preferable embodiment, Z¹ does not include a group that forms a siloxane bond with the Si atom to which Z¹ is bonded. Preferably, in the formula (S3), (Si-Z¹-Si) does not include a siloxane bond.

Z¹ is preferably a C₁₋₃₀ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or -(CH₂)_{z3}-phenylene-(CH₂)_{z4}- (wherein z3 is an integer of 0 to 6 such as an integer of 1 to 6, and z4 is an integer of 0 to 6 such as an integer of 1 to 6). Such a C₁₋₃₀ alkylene group is more preferably a C₁₋₂₀ alkylene group, and even more preferably a C₁₋₁₅ alkylene group, and may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, Z¹ is a C₁₋₁₅ alkylene group or -(CH₂)_{z3}-phenylene-(CH₂)_{z4}-, and preferably -phenylene-(CH₂)_{z4}-.

In another preferable embodiment, Z¹ is a C₁₋₁₅ alkylene group. In one embodiment, Z¹ may be -CH₂CH₂CH₂-. In another embodiment, Z¹ may be - CH₂CH₂-. In another embodiment, Z¹ may be - CH₂CH₂CH₂CH₂CH₂CH₂CH₂CH₂CH₂CH₂CH₂-.

R²¹ is each independently -Z^{1***'***}-SiR^{21'}_{p1'}R^{22'}_{q1'}R^{23'}_{r1'}.

Z^{1'} is each independently an oxygen atom or a divalent organic group. Below, the right side of the structure denoted as Z^{1'} binds to (SiR^{21'}_{p1'}R^{22'}_{q1'}R^{23'}_{r1***'***}).

In a preferable embodiment, Z^{1'} is a divalent organic group.

In a preferable embodiment, Z^{1'} does not include a group that forms a siloxane bond with the Si atom to which Z^{1'} is bonded. Preferably, in the formula (S3), (Si-Z^{1'}-Si) does not include a siloxane bond.

Z^{1'} is preferably a C₁₋₁₅ alkylene group, -(CH₂)_{z1'}-O-(CH₂)_{z2'}- (wherein z1' is an integer of 0 to 6 such as an integer of 1 to 6, and z2' is an integer of 0 to 6 such as an integer of 1 to 6), or -(CH₂)_{z3'}-phenylene-(CH₂)_{z4'}- (wherein z3' is an integer of 0 to 6 such as an integer of 1 to 6, and z4' is an integer of 0 to 6 such as an integer of 1 to 6). Such a C₁₋₃₀ alkylene group is more preferably a C₁₋₂₀ alkylene group, and even more preferably a C₁₋₁₅ alkylene group, and may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, Z^{1'} is a C₁₋₁₅ alkylene group or -(CH₂)_{z3'}-phenylene-(CH₂)_{z4'}-, and preferably -phenylene-(CH₂)_{z4'}-.

In another preferable embodiment, Z^{1'} is a C₁₋₁₅ alkylene group. In one embodiment, Z^{1'} may be -CH₂CH₂CH₂-. In another embodiment, Z^{1'} may be - CH₂CH₂-. In another embodiment, Z^{1'} may be - CH₂CH₂CH₂CH₂CH₂CH₂CH₂CH₂CH₂CH₂CH₂-.

R^{21'} is each independently -Z^{1"}-SiR^{22"}_{q1"}R^{23"}_{r1"}.

Z^{1"} is each independently an oxygen atom or a divalent organic group. Below, the right side of the structure denoted as Z^{1"} binds to (SiR^{22"}_{q1"}R^{23"}_{r1"}).

In a preferable embodiment, Z^{1"} is a divalent organic group.

In a preferable embodiment, Z^{1"} does not include a group that forms a siloxane bond with the Si atom to which Z^{1"} is bonded. Preferably, in the formula (S3), (Si-Z^{1"}-Si) does not include a siloxane bond.

Z^{1"} is preferably a C₁₋₁₅ alkylene group, -(CH₂)_{z1"}-O-(CH₂)_{z2"}- (wherein z1" is an integer of 0 to 6 such as an integer of 1 to 6, and z2" is an integer of 0 to 6 such as an integer of 1 to 6), or -(CH₂)_{z3"}-phenylene-(CH₂)_{z4"}- (wherein z3" is an integer of 0 to 6 such as an integer of 1 to 6, and z4" is an integer of 0 to 6 such as an integer of 1 to 6). Such a C₁₋₆ alkylene group may be linear or may be branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, Z^{1"} is a C₁₋₁₅ alkylene group or -(CH₂)_{z3"}-phenylene-(CH₂)_{z4"}-, and preferably -phenylene-(CH₂)_{z4"}-. When Z^{1"} is such a group, light resistance, in particular ultraviolet resistance, can be more increased.

In another preferable embodiment, Z^{1"} is a C₁₋₁₅ alkylene group. In one embodiment, Z^{1"} may be -CH₂CH₂CH₂-. In another embodiment, Z^{1"} may be - CH₂CH₂-. In another embodiment, Z^{1"} may be - CH₂CH₂CH₂CH₂CH₂CH₂CH₂CH₂CH₂CH₂CH₂-.

R^{22"} is each independently a hydroxyl group or a hydrolyzable group.

R^{22"} is preferably, each independently, a hydrolyzable group.

R^{22"} is preferably, each independently, -OR^{h}, -OCOR^{h}, -O-N=CR^{h}₂, -NR^{h}₂, - NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23"} is each independently a monovalent organic group. Such a monovalent organic group is a monovalent organic group excluding the above hydrolyzable group.

In R^{23"}, the monovalent organic group is preferably a C₁₋₂₀ alkyl group, more preferably a C₁₋₆ alkyl group, and even more preferably a methyl group.

q1" is each independently an integer of 0 to 3, and r1" is each independently an integer of 0 to 3. The sum of q1" and r1" is 3 in the (SiR^{22"}_{q1"}R^{23"}_{r1"}) unit.

q1" is preferably, each independently, an integer of 1 to 3, more preferably 2 to 3, and even more preferably 3 for each (SiR^{22"}_{q1"}R^{23"}_{r1"}) unit.

R^{22'} is each independently a hydroxyl group or a hydrolyzable group.

R^{22'} is preferably, each independently, a hydrolyzable group.

R^{22'} is preferably, each independently, -OR^{h}, -OCOR^{h}, -O-N=CR^{h}₂, -NR^{h}₂, - NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23'} is each independently a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and even more preferably a methyl group.

p1' is each independently an integer of 0 to 3, q1' is each independently an integer of 0 to 3, and r1' is each independently an integer of 0 to 3. The sum of p', q1', and r1' is 3 in the (SiR^{21'}_{p1'}R^{22'}_{q1***'***}R^{23'}_{r1***'***}) unit.

In one embodiment, p1' is 0.

In one embodiment, p1' may be each independently an integer of 1 to 3, an integer of 2 to 3, or 3 for each (SiR^{21'}_{p1'}R^{22'}_{q1***'***}R^{23'}_{r1***'***}) unit. In a preferable embodiment, p1' is 3.

In one embodiment, q1' is each independently an integer of 1 to 3, preferably an integer of 2 to 3, and more preferably 3 for each (SiR^{21'}_{p1'}R^{22'}_{q1***'***}R^{23'}_{r1***'***}) unit.

In one embodiment, p1' is 0, and q1' is each independently an integer of 1 to 3, preferably an integer of 2 to 3, and even more preferably 3 for each (SiR^{21'}_{p1'}R^{22'}_{q1'}R^{23'}_{r1'}) unit.

R²² is each independently a hydroxyl group or a hydrolyzable group.

R²² is preferably, each independently, a hydrolyzable group.

R²² is preferably, each independently, -OR^{h}, -OCOR^{h}, -O-N=CR^{h}₂, -NR^{h}₂, - NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R²³ is each independently a monovalent organic group. Such a monovalent organic group is a monovalent organic group excluding the above hydrolyzable group.

In R²³, the monovalent organic group is preferably a C₁₋₂₀ alkyl group, more preferably a C₁₋₆ alkyl group, and even more preferably a methyl group.

p1 is each independently an integer of 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferable embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and even more preferably 3 for each (SiR²¹ₚ₁R²²_{q1}R²³ᵣ₁) unit.

In the formula, R^{b1} is each independently a hydroxyl group or a hydrolyzable group.

R^{b1} is preferably, each independently, a hydrolyzable group.

R^{b1} is preferably, each independently, -OR^{h}, -OCOR^{h}, -O-N=CR^{h}₂, -NR^{h}₂, - NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formula, R^{c1} is each independently a monovalent organic group. Such a monovalent organic group is a monovalent organic group excluding the above hydrolyzable group.

In R^{c1}, the monovalent organic group is preferably a C₁₋₂₀ alkyl group, more preferably a C₁₋₆ alkyl group, and even more preferably a methyl group.

k1 is each independently an integer of 0 to 3, l1 is each independently an integer of 0 to 3, and m1 is each independently an integer of 0 to 3. The sum of k1, l1, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferable embodiment, k1 is 3.

In the formula (S3), at least two Si atoms to which a hydroxyl group or a hydrolyzable group is bonded are present.

In a preferable embodiment, in the terminal moiety of the formula (S3), at least two Si atoms to which a hydroxyl group or a hydrolyzable group is bonded are present.

In a preferable embodiment, the group represented by the formula (S3) has any one of -Z¹-SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}_{r1'} (wherein q1' is an integer of 1 to 3, preferably 2 or 3, and more preferably 3, and r1' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'}, R^{22"}, and R^{23"} have the same meanings as those described above.

In a preferable embodiment, when R^{21'} is present in the formula (S3), q1" is an integer of 1 to 3, preferably 2 or 3, and more preferably 3 in at least one and preferably all R^{21'} groups.

In a preferable embodiment, when R²¹ is present in the formula (S3), p1' is 0, and q1' is an integer of 1 to 3, preferably 2 or 3, and more preferably 3 in at least one and preferably all R²¹ groups.

In a preferable embodiment, when R^{a1} is present in the formula (S3), p1 is 0, and q1 is an integer of 1 to 3, preferably 2 or 3, and more preferably 3 in at least one and preferably all R^{a1} groups.

In a preferable embodiment, in the formula (S3), k1 is 2 or 3 and is preferably 3, p1 is 0, q1 is 2 or 3 and is preferably 3.

R^{d1} is each independently -Z²-CR³¹ₚ₂R³²_{q2}R³³ᵣ₂.

Z² is each independently a single bond, an oxygen atom, or a divalent organic group. Below, the right side of the structure denoted as Z² binds to (CR³¹ₚ₂R³²_{q2}R³³ᵣ₂).

In a preferable embodiment, Z² is a divalent organic group.

In a preferable embodiment, Z² does not include a siloxane bond.

Z² is preferably a C₁₋₃₀ alkylene group, -(CH₂)_{z5}-O-(CH₂)_{z6}- (wherein z5 is an integer of 0 to 6 such as an integer of 1 to 6, and z6 is an integer of 0 to 6 such as an integer of 1 to 6), or -(CH₂)_{z7}-phenylene-(CH₂)_{z8}- (wherein z7 is an integer of 0 to 6 such as an integer of 1 to 6, and z8 is an integer of 0 to 6 such as an integer of 1 to 6). Such a C₁₋₃₀ alkylene group is more preferably a C₁₋₂₀ alkylene group, and even more preferably a C₁₋₁₅ alkylene group, and may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, Z² is a C₁₋₁₅ alkylene group or -(CH₂)_{z7}-phenylene-(CH₂)_{z8}-, and preferably -phenylene-(CH₂)_{z8}-. When Z² is such a group, light resistance, in particular ultraviolet resistance, can be more increased.

In another preferable embodiment, Z² is a C₁₋₁₅ alkylene group. In one embodiment, Z² may be -CH₂CH₂CH₂-. In another embodiment, Z² may be - CH₂CH₂-. In another embodiment, Z² may be - CH₂CH₂CH₂CH₂CH₂CH₂CH₂CH₂CH₂CH₂CH₂-.

R³¹ is each independently -Z^{2***'***}-CR^{32'}_{q2'}R^{33'}_{r2'}.

Z^{2'} is each independently a single bond, an oxygen atom, or a divalent organic group. Below, the right side of the structure denoted as Z^{2'} binds to (CR^{32'}_{q2'}R^{33'}_{r2'}).

In a preferable embodiment, Z^{2'} does not include a siloxane bond.

Z^{2'} is preferably a C₁₋₃₀ alkylene group, -(CH₂)_{z5'}-O-(CH₂)_{z6'}- (wherein z5' is an integer of 0 to 6 such as an integer of 1 to 6, and z6' is an integer of 0 to 6 such as an integer of 1 to 6), or -(CH₂)_{z7'}-phenylene-(CH₂)_{z8'}- (wherein z7' is an integer of 0 to 6 such as an integer of 1 to 6, and z8' is an integer of 0 to 6 such as an integer of 1 to 6). Such a C₁₋₃₀ alkylene group is more preferably a C₁₋₂₀ alkylene group, and even more preferably a C₁₋₁₅ alkylene group, and may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, Z^{2'} is a C₁₋₁₅ alkylene group or -(CH₂)_{z7'}-phenylene-(CH₂)_{z8'}-, and preferably -phenylene-(CH₂)_{z8'}-. When Z^{2***'***} is such a group, light resistance, in particular ultraviolet resistance, can be more increased.

In another preferable embodiment, Z^{2'} is a C₁₋₁₅ alkylene group. In one embodiment, Z^{2'} may be -CH₂CH₂CH₂-. In another embodiment, Z^{2'} may be - CH₂CH₂-. In another embodiment, Z^{2'} may be - CH₂CH₂CH₂CH₂CH₂CH₂CH₂CH₂CH₂CH₂CH₂-.

R^{32'} is each independently -Z³-SiR³⁴ₙ₂R³⁵₃₋ₙ₂.

Z³ is each independently a single bond, an oxygen atom, or a divalent organic group. Below, the right side of the structure denoted as Z³ binds to (SiR³⁴ₙ₂R³⁵₃₋ₙ₂).

In one embodiment, Z³ is an oxygen atom.

In one embodiment, Z³ is a divalent organic group.

In a preferable embodiment, Z³ does not include a siloxane bond.

Z³ is preferably a C₁₋₃₀ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), or -(CH₂)_{z9"}-OCONR^{z1}-(CH₂)_{z10"}- (wherein R^{z1} is a hydrogen atom or a C₁₋₆ alkyl group, in particular a hydrogen atom, z9" is an integer of 0 to 6 such as an integer of 1 to 6, and z10" is an integer of 0 to 6 such as an integer of 1 to 6). Such a C₁₋₃₀ alkylene group is more preferably a C₁₋₂₀ alkylene group, and even more preferably a C₁₋₁₅ alkylene group, and may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, Z³ is a C₁₋₁₅ alkylene group, -(CH₂)_{z7"}-phenylene-(CH₂)_{z8"}-, or -(CH₂)_{z9"}-OCONR^{z1}-(CH₂)_{z10"}-, and preferably -phenylene-(CH₂)_{z8"}- or - (CH₂)_{z9"}-OCONR^{z1}-(CH₂)_{z10"}-. When Z³ is such a group, light resistance, in particular ultraviolet resistance, can be more increased.

In another preferable embodiment, Z³ is a C₁₋₁₅ alkylene group. In one embodiment, Z³ may be -CH₂CH₂CH₂-. In another embodiment, Z³ may be - CH₂CH₂-. In another embodiment, Z³ may be - CH₂CH₂CH₂CH₂CH₂CH₂CH₂CH₂CH₂CH₂CH₂-.

R³⁴ is each independently a hydroxyl group or a hydrolyzable group.

R³⁴ is preferably, each independently, a hydrolyzable group.

R³⁴ is preferably, each independently, -OR^{h}, -OCOR^{h}, -O-N=CR^{h}₂, -NR^{h}₂, - NHR^{h}, -NCO, or a halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R³⁵ is each independently a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and even more preferably a methyl group.

n2 is each independently an integer of 0 to 3 for each (SiR³⁴ₙ₂R³⁵₃₋ₙ₂) unit, provided that, in the terminal moiety of the formula (S4), at least two (SiR³⁴ₙ₂R³⁵₃₋ₙ₂) units wherein n2 is 1 to 3 are present. In other words, in the terminal moiety of the formula (S4), at least two Si atoms to which a hydroxyl group or a hydrolyzable group is bonded are present.

n2 is each independently an integer of preferably 1 to 3, more preferably 2 to 3, and even more preferably 3 for each (SiR³⁴ₙ₂R³⁵₃₋ₙ₂) unit.

R^{33'} is each independently a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group or - (CₛH₂ₛ)ₜ₁-(O-CₛH₂ₛ)ₜ₂H (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently an integer of 0 to 3, and r2' is each independently an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and even more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R³³ is each independently a hydrogen atom, a hydroxyl group, or a monovalent organic group. Such a monovalent organic group is a monovalent organic group excluding the above hydrolyzable group.

In R³³, the monovalent organic group is preferably a C₁₋₂₀ alkyl group or - (CₛH₂ₛ)ₜ₁-(O-CₛH₂ₛ)ₜ₂H (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently an integer of 0 to 3, q2 is each independently an integer of 0 to 3, and r2 is each independently an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferable embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and even more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R^{f1} is each independently a hydrogen atom, a hydroxyl group, or a monovalent organic group. Such a monovalent organic group is a monovalent organic group excluding the above hydrolyzable group.

In R^{f1}, the monovalent organic group is preferably a C₁₋₂₀ alkyl group, a C₂₋₂₀ alkenyl group, or -(CₛH₂ₛ)ₜ₁-(O-CₛH₂ₛ)ₜ₂H (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group or a C₂₋₂₀ alkenyl group, even more preferably a C₁₋₆ alkyl group or a C₂₋₆ alkenyl group, and particularly preferably a methyl group, an ethyl group, or a 2-propenyl group.

In one embodiment, R^{f1} is a hydrogen atom.

In one embodiment, R^{f1} is a hydroxyl group.

In another embodiment, R^{f1} is a monovalent organic group, preferably a C₁₋₂₀ alkyl group or a C₂₋₂₀ alkenyl group, and even more preferably a C₁₋₆ alkyl group or a C₂₋₆ alkenyl group.

k2 is each independently an integer of 0 to 3, l2 is each independently an integer of 0 to 3, and m2 is each independently an integer of 0 to 3. The sum of k2, l2, and m2 is 3 in the (CR^{d1}ₖ₂R^{e1}ₗ₂R^{f1}ₘ₂) unit.

In one embodiment, two or more such as 2 to 27, preferably 2 to 9, more preferably 2 to 6, even more preferably 2 to 3, and particularly preferably 3 (SiR³⁴ₙ₂R³⁵₃₋ₙ₂) units in which n2 is 1 to 3, preferably 2 or 3, and more preferably 3 are present in each terminal moiety of the formula (S4).

In a preferable embodiment, when R^{32'} is present in the formula (S4), n2 is an integer of 1 to 3, preferably 2 or 3, and more preferably 3 in at least one and preferably all R^{32'} groups.

In a preferable embodiment, when R³² is present in the formula (S4), n2 is an integer of 1 to 3, preferably 2 or 3, and more preferably 3 in at least one and preferably all R³² groups.

In a preferable embodiment, when R^{e1} is present in the formula (S4), n2 is an integer of 1 to 3, preferably 2 or 3, and more preferably 3 in at least one and preferably all R^{a1} groups.

In a preferable embodiment, in the formula (S4), k2 is 0, l2 is 2 or 3 and is preferably 3, and n2 is 2 or 3 and is preferably 3.

R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, l1, m1, k2, l2, and m2 have the same meanings as above.

In a preferable embodiment, R^{g1} and R^{h1} are each independently -Z⁴-SiR¹¹ₙ₁R¹²₃₋ₙ₁.

Z⁴ is each independently a single bond, an oxygen atom, or a divalent organic group. Below, the right side of the structure denoted as Z⁴ binds to (SiR¹¹ₙ₁R¹²₃₋ₙ₁).

In one embodiment, Z⁴ is an oxygen atom.

In one embodiment, Z⁴ is a divalent organic group.

In a preferable embodiment, Z⁴ does not include a siloxane bond.

Z⁴ is preferably a C₁₋₃₀ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6). The C₁₋₃₀ alkylene group is more preferably a C₁₋₂₀ alkylene group, and even more preferably a C₁₋₁₅ alkylene group, and may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and are preferably unsubstituted.

In a preferable embodiment, Z⁴ is a C₁₋₃₀ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be more increased.

In another preferable embodiment, Z⁴ is a C₁₋₃₀ alkylene group such as a C₁₋₁₅ alkylene group, a C₁₋₆ alkylene group, or a C₁₋₃ alkylene group. In one embodiment, Z⁴ may be -CH₂CH₂CH₂-. In another embodiment, Z⁴ may be - CH₂CH₂-. In another embodiment, Z⁴ may be - CH₂CH₂CH₂CH₂CH₂CH₂CH₂CH₂CH₂CH₂CH₂-.

In one embodiment, none of the formulae (S1), (S2), (S3), (S4), and (S5) contain a siloxane bond.

In one embodiment, R^{ASi} is a group represented by the formula (S2). In a preferable embodiment, the formula (S2) is -SiR^{a1}₂R^{c1} or -SiR^{a1}₃, R^{a1} is -Z¹-SiR²²_{q1}R²³ᵣ₁, Z¹ is a C₁₋₁₅ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or -(CH₂)_{z3}-phenylene-(CH₂)_{z4}- (wherein z3 is an integer of 0 to 6 such as an integer of 1 to 6, and z4 is an integer of 0 to 6 such as an integer of 1 to 6), preferably a C₁₋₁₅ alkylene group, and q1 is 1 to 3, preferably 2 to 3, and even more preferably 3.

In one embodiment, R^{BSi} is a group represented by the formula (S2), (S3), (S4), or (S5).

In one embodiment, R^{BSi} is a group represented by the formula (S2), (S3), or (S4).

In one embodiment, R^{BSi} is a group represented by the formula (S3), (S4), or (S5).

In one embodiment, R^{BSi} is a group represented by the formula (S3) or (S4).

In one embodiment, R^{BSi} is a group represented by the formula (S4) or (S5).

In one embodiment, R^{BSi} is a group represented by the formula (S1). In a preferable embodiment, n1 is 1 to 3, preferably 2 to 3, and even more preferably 3.

In one embodiment, R^{BSi} is a group represented by the formula (S2). In a preferable embodiment, the formula (S2) is -SiR^{a1}₂R^{c1} or -SiR^{a1}₃, R^{a1} is -Z¹-SiR²²_{q1}R²³ᵣ₁, Z¹ is a C₁₋₁₅ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or -(CH₂)_{z3}-phenylene-(CH₂)_{z4}- (wherein z3 is an integer of 0 to 6 such as an integer of 1 to 6, and z4 is an integer of 0 to 6 such as an integer of 1 to 6), preferably a C₁₋₁₅ alkylene group, and q1 is 1 to 3, preferably 2 to 3, and even more preferably 3.

In a preferable embodiment, the formula (S2) is the following formulae. In the following formulae, * represents the point of bonding to X^{A} or X^{B}.
* -Si(OCH₃)₃
* -Si(OCH₂CH₃)₃

In one embodiment, R^{BSi} is a group represented by the formula (S3). In a preferable embodiment, the formula (S3) is -CR^{e1}₂R^{f1} or -CR^{e1}₃, R^{e1} is -Z³-SiR³⁴ₙ₂R³⁵₃₋ₙ₂, Z³ is a C₁₋₁₅ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), preferably a C₁₋₁₅ alkylene group, and n2 is 1 to 3, preferably 2 to 3, and even more preferably 3.

In a preferable embodiment, the formula (S3) is the following formulae. In the following formulae, * represents the point of bonding to X^{A} or X^{B}.

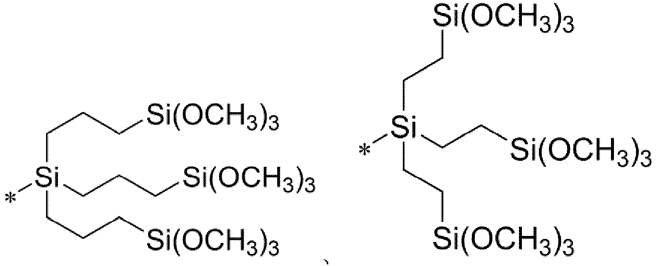

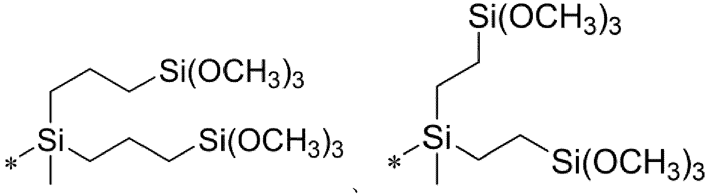

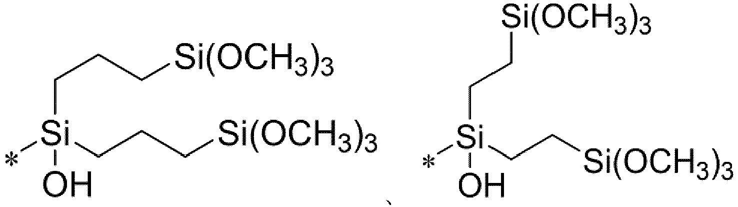

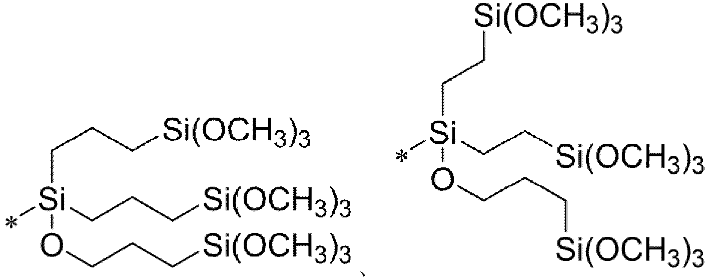

In one embodiment, R^{BSi} is a group represented by the formula (S4). In a preferable embodiment, R^{g1} and R^{h1} are -Z⁴-SiR¹¹ₙ₁R¹²₃₋ₙ₁, Z⁴ is a C₁₋₁₅ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), preferably a C₁₋₁₅ alkylene group, and n1 is 1 to 3, preferably 2 to 3, and even more preferably 3.

In a preferable embodiment, the formula (S4) is the following formulae. In the following formulae, * represents the point of bonding to X^{A} or X^{B}.

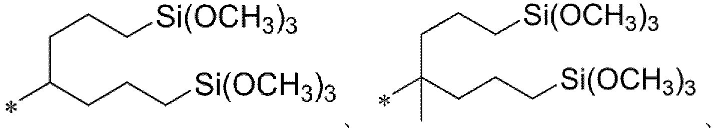

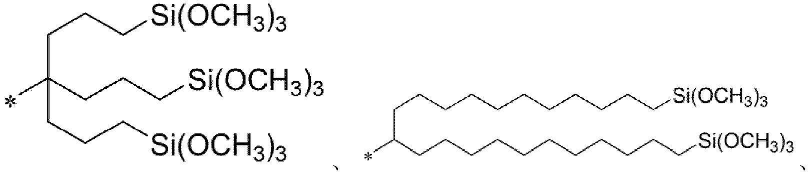

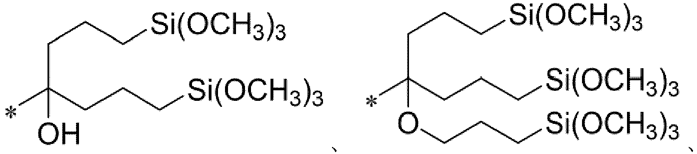

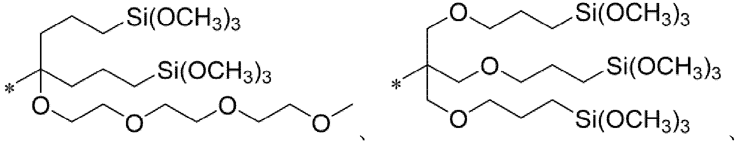

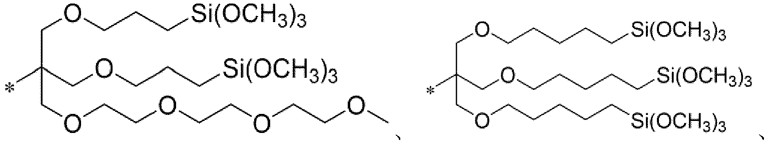

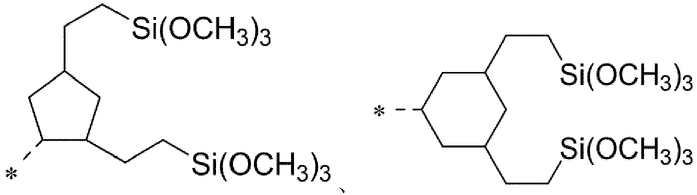

In one embodiment, R^{Si} is a group represented by the formula (S5). In a preferable embodiment, R^{g1} and R^{h1} are -Z⁴-SiR¹¹ₙ₁R¹²₃₋ₙ₁, Z⁴ is a C₁₋₁₅ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), preferably a C₁₋₁₅ alkylene group, and n1 is 1 to 3, preferably 2 to 3, and even more preferably 3.

In a preferable embodiment, the formula (S5) is the following formulae. In the following formulae, * represents the point of bonding to X^{A} or X^{B}.

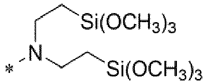

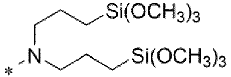

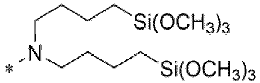

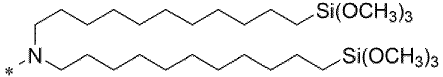

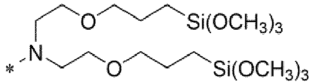

Examples of the silane compounds used in the composition of the present disclosure include:
- CH₃-[Si(CH₃)₂O]ₙ₁Si(CH₃)₂-(CH₂)_{H1}-C(=O)NHCH₂CH₂CH₂Si(OCH₃)₃
- CH₃CH₂CH₂CH₂-[Si(CH₃)₂O]ₙ₁Si(CH₃)₂-(CH₂)_{H1}-C(=O)NHCH₂CH₂CH₂Si(OCH₃)₃
- [(CH₃)₃SiO)]₂(CH₃)Si-O-[Si(CH₃)₂O]ₙ₁Si(CH₃)₂-(CH₂)_{H1}-C(=O)NHCH₂CH₂CH₂Si(OCH₃)₃
- [(CH₃)₃SiO)]₃Si-O-[Si(CH₃)₂O]ₙ₁Si(CH₃)₂-(CH₂)_{H1}-C(=O)NHCH₂CH₂CH₂Si(OCH₃)₃
- CH₃-[Si(CH₃)₂O]ₙ₁Si(CH₃)₂-(CH₂)_{H1}-O-(CH₂)_{H2}-C(=O)NHCH₂CH₂CH₂Si(OCH₃)₃
- CH₃CH₂CH₂CH₂-[Si(CH₃)₂O]ₙ₁Si(CH₃)₂-(CH₂)_{H1}-O-(CH₂)_{H2}-C(=O)NHCH₂CH₂CH₂Si(OCH₃)₃
- CH₃-[Si(CH₃)₂O]ₙ₁Si(CH₃)₂-(CH₂)_{H1}-Si(OCH₃)₃
- CH₃CH₂CH₂CH₂-[Si(CH₃)₂O]ₙ₁Si(CH₃)₂-(CH₂)_{H1}-Si(OCH₃)₃
- [(CH₃)₃SiO)]₂(CH₃)Si-O-[Si(CH₃)₂O]ₙ₁Si(CH₃)₂-(CH₂)_{H1}-Si(OCH₃)₃
- [(CH₃)₃SiO)]₃Si-O-[Si(CH₃)₂O]ₙ₁Si(CH₃)₂-(CH₂)_{H1}-Si(OCH₃)₃
- CH₃-[Si(CH₃)₂O]ₙ₁Si(CH₃)₂-(CH₂)_{H1}-C(=O)NHCH₂CH[CH₂CH₂CH₂Si(OCH₃)₃]₂
- CH₃CH₂CH₂CH₂-[Si(CH₃)₂O]ₙ₁Si(CH₃)₂-(CH₂)_{H1}-C(=O)NHCH₂CH[CH₂CH₂CH₂Si(OCH₃)₃]₂
- [(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂Si(OCH₃)₃]₂
- [(CH₃)₃SiO)]₃Si-O-[Si(CH₃)₂O]ₙ₁Si(CH₃)₂-(CH₂)_{H1}-C(=O)NHCH₂CH[CH₂CH₂CH₂Si(OCH₃)₃]₂
- CH₃-[Si(CH₃)₂O]ₙ₁Si(CH₃)₂-(CH₂)_{H1}-O-(CH₂)_{H2}-C(=O)NHCH₂CH[CH₂CH₂CH₂Si(OCH₃)₃]₂
- CH₃CH₂CH₂CH₂-[Si(CH₃)₂O]ₙ₁Si(CH₃)₂-(CH₂)_{H1}-O-(CH₂)_{H2}-C(=O)NHCH₂CH[CH₂CH₂CH₂Si(OCH₃)₃]₂
- CH₃-[Si(CH₃)₂O]ₙ₁Si(CH₃)₂-(CH₂)_{H1}-CH[CH₂CH₂CH₂Si(OCH₃)₃]₂
- CH₃CH₂CH₂CH₂-[Si(CH₃)₂O]ₙ₁Si(CH₃)₂-(CH₂)_{H1}-CH[CH₂CH₂CH₂Si(OCH₃)₃]₂
- [(CH₃)₃SiO)]₂(CH₃)Si-O-[Si(CH₃)₂O]ₙ₁Si(CH₃)₂-(CH₂)_{H1}-CH[CH₂CH₂CH₂Si(OCH₃)₃]₂
- [(CH₃)₃SiO)]₃Si-O-[Si(CH₃)₂O]ₙ₁Si(CH₃)₂-(CH₂)_{H1}-CH[CH₂CH₂CH₂Si(OCH₃)₃]2
- CH₃-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
- CH₃CH₂CH₂CH₂-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
- [(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
- [(CH₃)₃SiO)]₃Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
- CH₃-[Si(CH₃)₂O]ₙ₁Si(CH₃)₂-(CH₂)_{H1}-O-(CH₂)_{H2}-C(=O)NHCH₂CH[CH₂CH₂CH₂CH₂CH₂CH₂CH₂CH₂CH₂CH₂CH₂Si(OCH₃)₃]₂
- CH₃CH₂CH₂CH₂-[Si(CH₃)₂O]ₙ₁Si(CH₃)₂-(CH₂)_{H1}-O-(CH₂)_{H2}-C(=O)NHCH₂CH[CH₂CH₂CH₂CH₂CH₂CH₂CH₂CH₂CH₂CH₂CH₂Si(OCH₃)₃]₂
- CH₃-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
- CH₃CH₂CH₂CH₂-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
- [(CH₃)₃SiO)]₂(CH₃)Si-O-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
- [(CH₃)₃SiO)]₃Si-O-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
- CH₃-[Si(CH₃)₂O]ₙ₁Si(CH₃)₂-(CH₂)_{H1}-C(=O)N[CH₂CH₂CH₂Si(OCH₃)₃]₂
- CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂
- [(CH₃)₃SiO)]₂(CH₃)Si-O-[Si(CH₃)₂O]ₙ₁Si(CH₃)₂-(CH₂)_{H1}-C(=O)N[CH₂CH₂CH₂Si(OCH₃)₃]₂
- [(CH₃)₃SiO)]₃Si-O-[Si(CH₃)₂O]ₙ₁Si(CH₃)₂-(CH₂)_{H1}-C(=O)N[CH₂CH₂CH₂Si(OCH₃)₃]₂
- CH₃-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂
- CH₃CH₂CH₂CH₂-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂
- CH₃-[Si(CH₃)₂O]ₙ₁Si(CH₃)₂-(CH₂)_{H1}-N[CH₂CH₂CH₂Si(OCH₃)₃]₂
- CH₃CH₂CH₂CH₂-[Si(CH₃)₂O]ₙ₁Si(CH₃)₂-(CH₂)_{H1}-N[CH₂CH₂CH₂Si(OCH₃)₃]₂
- [(CH₃)₃SiO)]₂(CH₃)Si-O-[Si(CH₃)₂O]ₙ₁Si(CH₃)₂-(CH₂)_{H1}-N[CH₂CH₂CH₂Si(OCH₃)₃]₂
- [(CH₃)₃SiO)]₃Si-O-[Si(CH₃)₂O]ₙ₁Si(CH₃)₂-(CH₂)_{H1}-N[CH₂CH₂CH₂Si(OCH₃)₃]₂
- CH₃-[Si(CH₃)₂O]ₙ₁Si(CH₃)₂-(CH₂)_{H1}-C(=O)NHCH₂C[CH₂CH₂CH₂Si(OCH₃)₃]₃
- CH₃CH₂CH₂CH₂-[Si(CH₃)₂O]ₙ₁Si(CH₃)₂-(CH₂)_{H1}-C(=O)NHCH₂C[CH₂CH₂CH₂Si(OCH₃)₃]₃
- [(CH₃)₃SiO)]₂(CH₃)Si-O-[Si(CH₃)₂O]ₙ₁Si(CH₃)₂-(CH₂)_{H1}-C(=O)NHCH₂C[CH₂CH₂CH₂Si(OCH₃)₃]₃
- [(CH₃)₃SiO)]₃Si-O-[Si(CH₃)₂O]ₙ₁Si(CH₃)₂-(CH₂)_{H1}-C(=O)NHCH₂C[CH₂CH₂CH₂Si(OCH₃)₃]₃
- CH₃-[Si(CH₃)₂O]ₙ₁Si(CH₃)₂-(CH₂)_{H1}-O-(CH₂)_{H2}-C(=O)NHCH₂C[CH₂CH₂CH₂Si(OCH₃)₃]₃
- CH₃CH₂CH₂CH₂-[S1(CH₃)₂O]ₙ₁Si(CH₃)₂-(CH₂)_{H1}-O-(CH₂)_{H2}-C(=O)NHCH₂C[CH₂CH₂CH₂Si(OCH₃)₃]₃
- CH₃-[Si(CH₃)₂O]ₙ₁Si(CH₃)₂-(CH₂)_{H1}-C[CH₂CH₂CH₂Si(OCH₃)₃]₃
- CH₃CH₂CH₂CH₂-[Si(CH₃)₂O]ₙ₁Si(CH₃)₂-(CH₂)_{H1}-C[CH₂CH₂CH₂Si(OCH₃)₃]₃
- [(CH₃)₃SiO)]₂(CH₃)Si-O-[Si(CH₃)₂O]ₙ₁Si(CH₃)₂-(CH₂)_{H1}-C[CH₂CH₂CH₂Si(OCH₃)₃]₃
- [(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃
- [(CH₃)₃SiO)]₂(CH₃)Si-(CH₂)_{H1}-C(=O)NHCH₂CH₂CH₂Si(OCH₃)₃
- [(CH₃)₃SiO)]₃Si-(CH₂)_{H1}-C(=O)NHCH₂CH₂CH₂Si(OCH₃)₃
- [(CH₃)₃SiO)]₂(CH₃)Si-(CH₂)_{H1}-Si(OCH₃)₃
- [(CH₃)₃SiO)]₃Si-(CH₂)_{H1}-Si(OCH₃)₃
- [(CH₃)₃SiO)]₂(CH₃)Si-(CH₂)_{H1}-C(=O)NHCH₂CH[CH₂CH₂CH₂Si(OCH₃)₃]₂
- [(CH₃)₃SiO)]₃Si-(CH₂)_{H1}-C(=O)NHCH₂CH[CH₂CH₂CH₂Si(OCH₃)₃]₂
- [(CH₃)₃SiO)]₂(CH₃)Si-(CH₂)_{H1}-CH[CH₂CH₂CH₂Si(OCH₃)₃]₂
- [(CH₃)₃SiO)]₃Si-(CH₂)_{H1}-CH[CH₂CH₂CH₂Si(OCH₃)₃]₂
- [(CH₃)₃SiO)]₂(CH₃)Si-(CH₂)_{H1}-C(=O)NHCH₂CH[CH₂CH₂CH₂CH₂CH₂CH₂CH₂CH₂CH₂CH₂CH₂Si(OCH₃)₃]₂
- [(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂
- [(CH₃)₃SiO)]₂(CH₃)Si-(CH₂)_{H1}-CH[CH₂CH₂CH₂CH₂CH₂CH₂CH₂CH₂CH₂CH₂CH₂Si(OCH₃)₃]₂
- [(CH₃)₃SiO)]₃Si-(CH₂)_{H1}-CH[CH₂CH₂CH₂CH₂CH₂CH₂CH₂CH₂CH₂CH₂CH₂Si(OCH₃)₃]₂
- [(CH₃)₃SiO)]₂(CH₃)Si-(CH₂)_{H1}-C(=O)N[CH₂CH₂CH₂Si(OCH₃)₃]₂
- [(CH₃)₃SiO)]₃Si-(CH₂)_{H1}-C(=O)N[CH₂CH₂CH₂Si(OCH₃)₃]₂
- [(CH₃)₃SiO)]₂(CH₃)Si-(CH₂)_{H1}-N[CH₂CH₂CH₂Si(OCH₃)₃]₂
- [(CH₃)₃SiO)]₃Si-(CH₂)_{H1}-C(=O)N[CH₂CH₂CH₂Si(OCH₃)₃]₂
- [(CH₃)₃SiO)]₂(CH₃)Si-(CH₂)_{H1}-C(=O)NHCH₂C[CH₂CH₂CH₂Si(OCH₃)₃]₃
- [(CH₃)₃SiO)]₃Si-(CH₂)_{H1}-C(=O)NHCH₂C[CH₂CH₂CH₂Si(OCH₃)₃]₃
- [(CH₃)₃SiO)]₂(CH₃)Si-(CH₂)_{H1}-C[CH₂CH₂CH₂Si(OCH₃)₃]₃
- [(CH₃)₃SiO)]₃Si-(CH₂)_{H1}-C[CH₂CH₂CH₂Si(OCH₃)₃]₃ 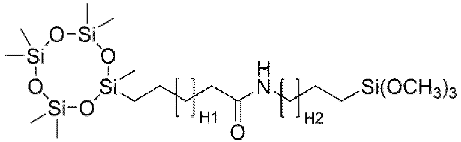 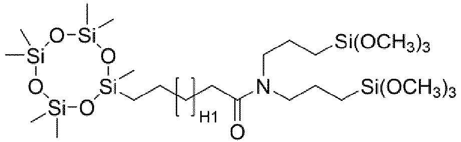 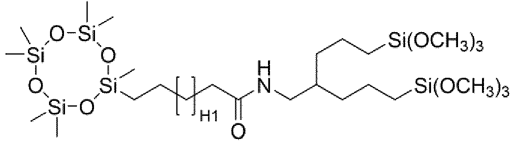 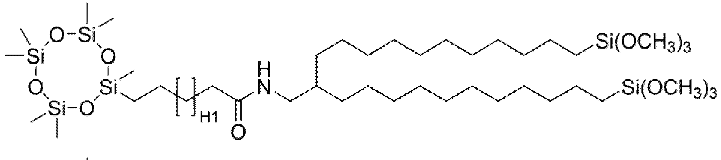 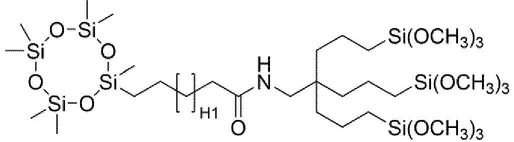
- CH₃CH₂CH₂CH₂-[Si(CH₃)₂O]ₙ₁Si(CH₃)₂-(CH₂)_{H1}-O-(CH₂)_{H2}-C(CH₂CH₃)[CH₂OC(=O)NHCH₂CH₂CH₂Si(OCH₃)₃]₂
- CH₃-[Si(CH₃)₂O]ₙ₁Si(CH₃)₂-(CH₂)_{H1}-O-(CH₂)_{H2}-C(CH₂CH₃)[CH₂OC(=O)NHCH₂CH₂CH₂Si(OCH₃)₃]₂
- CH₃CH₂CH₂CH₂-[Si(CH₃)₂O]ₙ₁Si(CH₃)₂-(CH₂)_{H1}-O-(CH₂)_{H2}-C(CH₂CH₃)[CH₂OC(=O)NHCH₂CH₂OC(=O)CH(CH₃)CH₂Si(OCH₃)₃]₂
- CH₃-[Si(CH₃)₂O]ₙ₁Si(CH₃)₂-(CH₂)_{H1}-O-(CH₂)_{H2}-C(CH₂CH₃)[CH₂OC(=O)NHCH₂CH₂OC(=O)CH(CH₃)CH₂Si(OCH₃)₃]₂
- CH₃CH₂CH₂CH₂-[Si(CH₃)₂O]ₙ₁Si(CH₃)₂--(CH₂)_{H1}-O-(CH₂)_{H2}-C[CH₂OC(=O)NHCH₂CH₂CH₂Si(OCH₃)₃]₃
- CH₃-[(Si(CH₃)₂O)]ₙ₁Si(CH₃)₂-(CH₂)_{H1}-O-(CH₂)_{H2}-C[CH₂OC(=O)NHCH₂CH₂CH₂Si(OCH₃)₃]₃
- [CH₃CH₂CH₂CH₂-[(Si(CH₃)₂O)]ₙ₁Si(CH₃)₂-(CH₂)_{H1}-O-(CH₂)_{H2}-]₂-C[CH₂OC(=O)NHCH₂CH₂CH₂Si(OCH₃)₃]₂
- [CH₃-[(Si(CH₃)₂O)]ₙ₁Si(CH₃)₂-(CH₂)_{H1}-O-(CH₂)_{H2}-]₂-C[CH₂OC(=O)NHCH₂CH₂CH₂Si(OCH₃)₃]₂
- CH₃CH₂CH₂CH₂-[Si(CH₃)₂O]ₙ₁Si(CH₃)₂-(CH₂)_{H1}-O-(CH₂)_{H2}-OC(=O)NHCH₂CH₂CH₂Si(OCH₃)₃
- CH₃-[Si(CH₃)₂O]ₙ₁Si(CH₃)₂-(CH₂)_{H1}-O-(CH₂)_{H2}-OC(=O)NHCH₂CH₂CH₂Si(OCH₃)₃
- CH₃CH₂CH₂CH₂-[Si(CH₃)₂O]ₙ₁Si(CH₃)₂-(CH₂)_{H1}-O-(CH₂)_{H2}-OC(=O)NHCH₂CH₂OC(=O)CH(CH₃)CH₂Si(OCH₃)₃
- CH₃-[Si(CH₃)₂O]ₙ₁Si(CH₃)₂-(CH₂)_{H1}-O-(CH₂)_{H2}-OC(=O)NHCH₂CH₂OC(=O)CH(CH₃)CH₂Si(OCH₃)₃
- [CH₃CH₂CH₂CH₂-[Si(CH₃)₂O]ₙ₁Si(CH₃)₂-(CH₂)_{H1}-O-(CH₂)_{H2}-]₃C-CH₂OC(=O)NHCH₂CH₂CH₂Si(OCH₃)₃
- [CH₃-[Si(CH₃)₂O]ₙ₁Si(CH₃)₂-(CH₂)_{H1}-O-(CH₂)_{H2}-]₃C-CH₂OC(=O)NHCH₂CH₂CH₂Si(OCH₃)₃
- [CH₃CH₂CH₂CH₂-[Si(CH₃)₂O]ₙ₁Si(CH₃)₂-(CH₂)_{H1}-O-(CH₂)_{H2}-]₂C(CH₂CH₃)[CH₂OC(=O)NHCH₂CH₂CH₂Si(OCH₃)₃]
- [CH₃-[(Si(CH₃)₂O)]ₙ₁Si(CH₃)₂-(CH₂)_{H1}-O-(CH₂)_{H2}-]₂C(CH₂CH₃)[CH₂OC(=O)NHCH₂CH₂CH₂Si(OCH₃)₃] 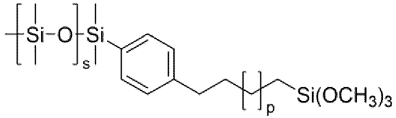 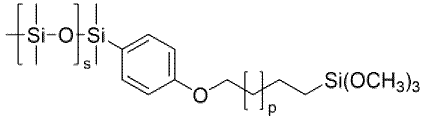 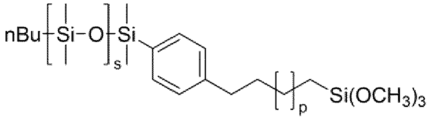 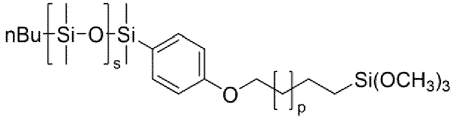 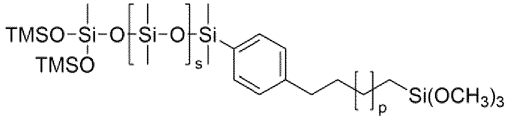 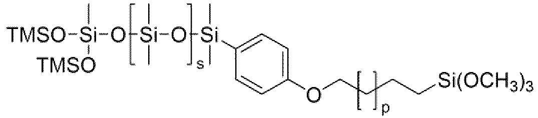 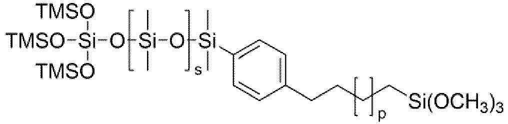 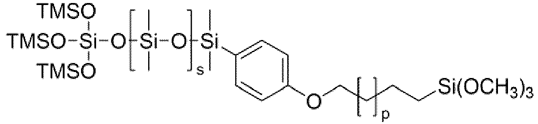 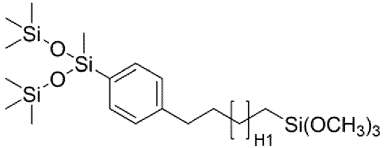 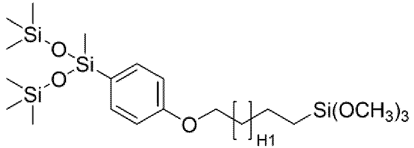 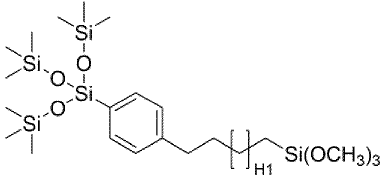 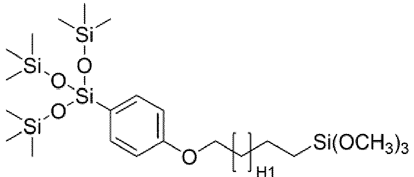 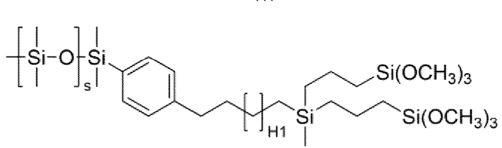 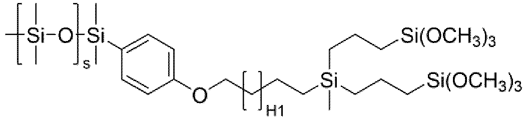 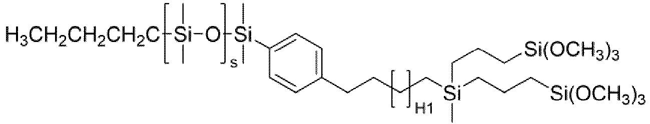 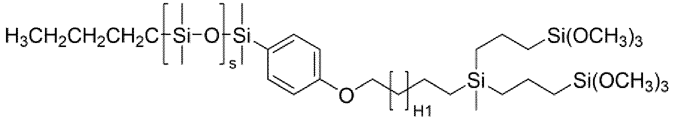 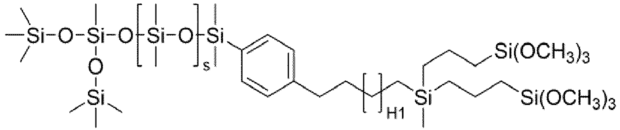 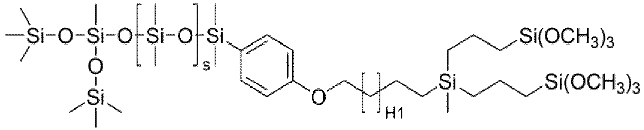 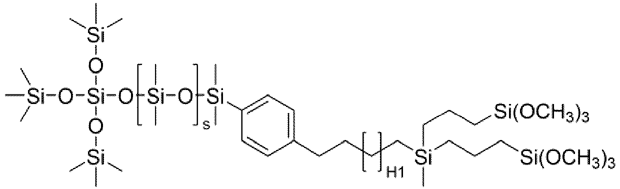 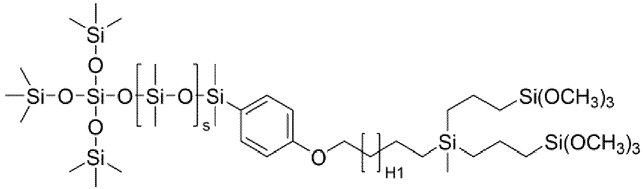 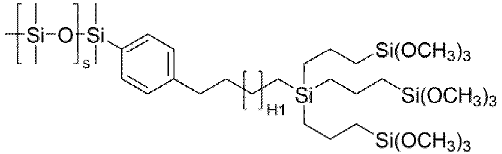 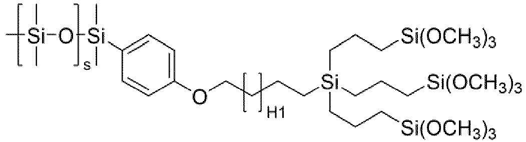 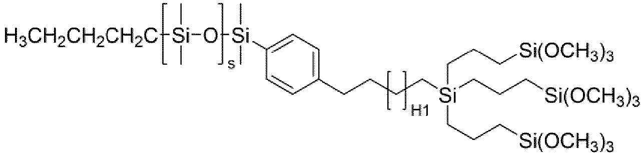 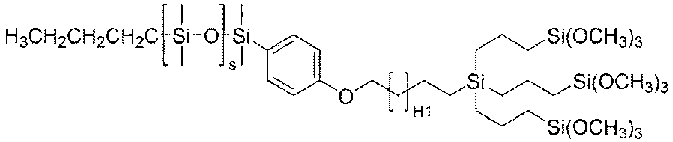 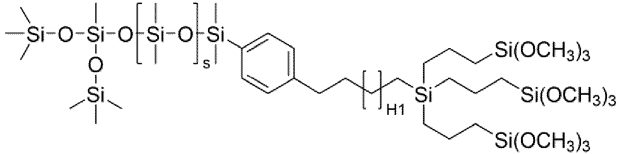 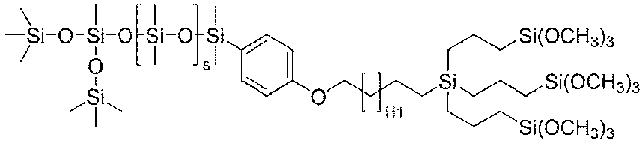 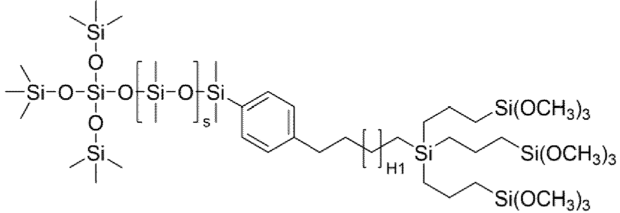 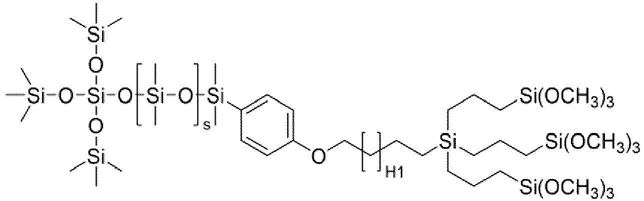
wherein TMS represents a trimethylsilyl group, n1 and s are each independently 0 to 150, and H1 and H2 are each independently 1 to 50.

In one embodiment, n1 and s are each independently 0 or 1, p and H1 are each independently 8 to 40, and H2 is each independently 1 to 10.

In another embodiment, n1 and s are, each independently, preferably 5 to 150, and more preferably 5 to 100, p and H1 are each independently 8 to 40, and H2 is each independently 1 to 10.

The silane compound (A) is preferably a compound selected from the following group:

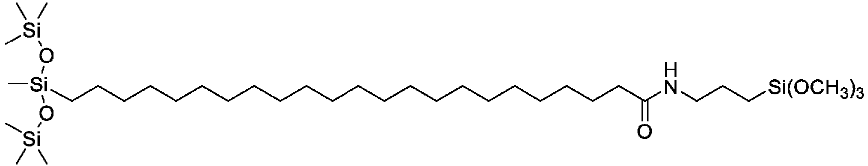

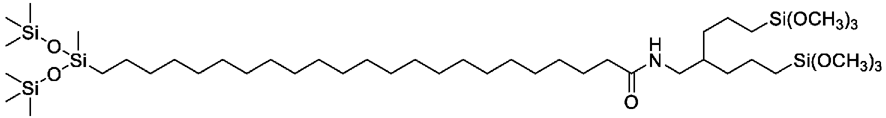

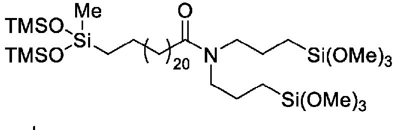

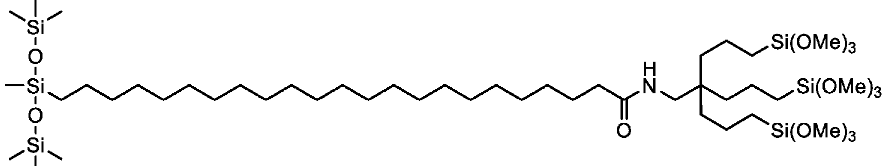

[(CH₃)₃SiO]₂CH₃SiO(Si(CH₃)₂O)ₙ₁Si(CH₃)₂(CH₂)₂₂CONHCH₂CH[CH₂CH₂CH₂Si(O CH₃)₃]₂

(wherein n1 is 10 to 80, preferably 10 to 50, and more preferably 26)

CH₃[Si(CH₃)₂O]ₙ₁Si(CH₃)₂(CH₂)₂₂CONH-CH₂CH[CH₂CH₂CH₂Si(OCH₃)₃]₂

(wherein n1 is 10 to 80, preferably 30 to 70, and more preferably 57)

[(CH₃)₃SiO]₂CH₃Si- CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH(CH₂CH=CH₂)[CH₂CH₂CH₂Si(OCH₃)₃]

[(CH₃)₃SiO]₂CH₃Si-

CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH(CH₂CH=CH₂)₂

[(CH₃)₃SiO]₂CH₃Si- CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH[CH₂CH₂CH₂Si(OCH₃)₃]₂

CH₃[Si(CH₃)₂O]ₙ₁Si(CH₃)₂(CH₂)₂₂CONH- CH₂CH(CH₂CH=CH₂)[CH₂CH₂CH₂Si(OCH₃)₃]

(wherein n1 is 10 to 80, preferably 30 to 70, and more preferably 57)

CH₃[Si(CH₃)₂O]ₙ₁Si(CH₃)₂(CH₂)₂₂CONH-CH₂CH(CH₂CH=CH₂)₂

(wherein n1 is 10 to 80, preferably 30 to 70, and more preferably 57)

CH₃[Si(CH₃)₂O]ₙ₁Si(CH₃)₂(CH₂)₂₂CONH-CH₂CH[CH₂CH₂CH₂Si(OCH₃)₃]₂

(wherein n1 is 10 to 80, preferably 30 to 70, and more preferably 57)
(wherein n1 is 10 to 80, preferably 30 to 70, and more preferably 57)

   CH₃CH₂CH₂CH₂-[Si(CH₃)₂O]ₙ₁Si(CH₃)₂-CH₂CH₂CH₂-O-CH₂CH₂O- C(=O)NHCH₂CH₂CH₂Si(OCH₃)₃

   (wherein n1 is 10 to 80, preferably 30 to 70, and more preferably 60)
wherein TMS means a trimethylsilyl group.

The silane compound (B) is preferably a compound selected from the following group:

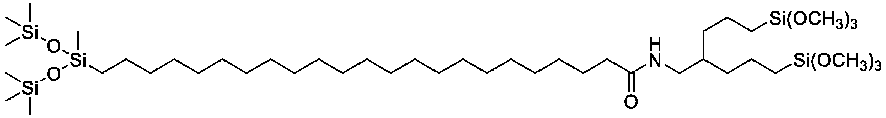

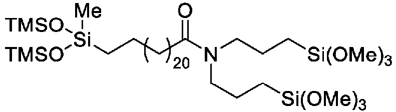

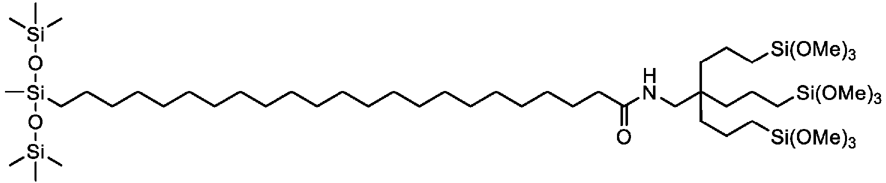

CH₃[Si(CH₃)₂O]ₙ₂Si(CH₃)₂(CH₂)₂₂CONH-CH₂CH[CH₂CH₂CH₂Si(OCH₃)₃]₂

(wherein n2 is 10 to 80, preferably 30 to 70, and more preferably 57)

[(CH₃)₃SiO]₂CH₃SiO(Si(CH₃)₂O)ₙ₂Si(CH₃)₂(CH₂)₂₂CONHCH₂C[CH₂CH₂CH₂Si(OC H₃)₃]₃

(wherein n2 is 10 to 80, preferably 10 to 30, and more preferably 18)

CH₃[Si(CH₃)₂O]ₙ₂Si(CH₃)₂(CH₂)₂₂CONH-CH₂C[CH₂CH₂CH₂Si(OCH₃)₃]₃

(wherein n2 is 10 to 80, preferably 30 to 70, and more preferably 52)

CH₃CH₂CH₂CH₂-[Si(CH₃)₂O]ₙ₂Si(CH₃)₂-CH₂CH₂CH₂-O-CH₂- C(CH₂CH₃)[CH₂OC(=O)NHCH₂CH₂CH₂Si(OCH₃)₃]₂

(wherein n2 is 10 to 80, preferably 40 to 75, and more preferably 63)
wherein TMS means a trimethylsilyl group.

In the composition of the present disclosure, the total content of the silane compound (A) and the silane compound (B) may be preferably 30% by mass or more and 100% by mass or less, more preferably 50% by mass or more and 100% by mass or less, even more preferably 70% by mass or more and 100% by mass or less, and yet more preferably 90% by mass or more and 100% by mass or less, based on 100% by mass of the composition of the present disclosure.

### [Production Method]

Below, the method for producing the silane compounds of the present disclosure will now be described in detail. Note that the method for producing the silane compounds of the present disclosure is not limited to the following methods.

### (Production Method 1)

The above siloxane group-containing silane compounds can be obtained by, for example, reacting a compound having an organosiloxane group with a compound having a hydrolyzable silane group.

For example, a compound represented by the following formula:

R⁶¹-COOH

(wherein R⁶¹ is an organosiloxane group-containing group)
is reacted with a compound represented by the following formula:

   NH₂-R⁶²
(wherein R⁶² is an allyl group-containing group),
to give a compound represented by the following formula:

   R⁶¹-CONH-R⁶³-R⁶⁴ₙ
(wherein
   R⁶¹ is an organosiloxane group-containing group,
   R⁶³ is a linker group having a valence of (n + 1), and
   R⁶⁴ is an allyl group).

Then, the resulting allyl compound is reacted with a compound represented by:

HSiR⁶⁵ₘR⁶⁶₃₋ₘ

(wherein
R⁶⁵ is each independently at each occurrence a hydroxyl group or a hydrolyzable group,
R⁶⁶ is each independently at each occurrence a monovalent organic group, and
m is 1 to 3), and
thereby the silane compound represented by the formula (A) or formula (B) can be obtained.

### (Production Method 2)

As an alternative method, according to the scheme below, an oxadiazole compound is obtained from R⁶¹-COOH and used as a raw material, and thereby the silane compound represented by the formula (A) or the formula (B) can be obtained. For example, when R has a terminal allyl group, by reacting with HSiR⁶⁵ₘR⁶⁶₃₋ₘ as described above, the silane compound represented by the formula (A) or the formula (B) can be obtained: 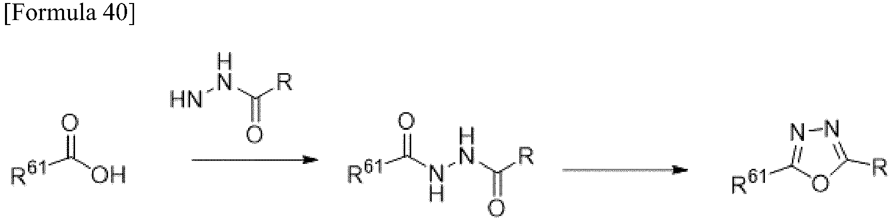 wherein
R⁶¹ is an organosiloxane group-containing group,
R is an alkyl or aryl optionally comprising a terminal functional group, and
the functional group is a carboxylic acid derivative such as an ester (for example, allyl, ester, amide, carboxylic acid, acid anhydride, acid chloride, or nitrile), amine, epoxide, benzene ring, alcohol, or unsaturated bond.

As an alternative method, a compound represented by the following formula:

R⁶¹-CWₘX₃₋ₘ

(wherein
R⁶¹ is an organosiloxane group-containing group,
X is a hydrolyzable group,
W is each independently at each occurrence a monovalent organic group, and
m is 1 to 3)
is reacted with a compound represented by the following formula:

M-R⁶²

(wherein
M is a metal-containing group such as Li, halogen-Mg, and Zn, and
R⁶² is an allyl group-containing group),
to give a compound represented by the following formula:

R⁶¹-CWₘ(-R⁶³-R⁶⁴)₃₋ₘ

(wherein
R⁶¹ is an organosiloxane group-containing group,
R⁶³ is a divalent group,
R⁶⁴ is an allyl group,
W is each independently at each occurrence a monovalent organic group, and
m is 1 to 3).

Then, the resulting allyl compound is reacted with a compound represented by:

HSiR⁶⁵ₘR⁶⁶₃₋ₘ

(wherein
R⁶⁵ is each independently at each occurrence a hydroxyl group or a hydrolyzable group,
R⁶⁶ is each independently at each occurrence a monovalent organic group, and
m is 1 to 3).
thereby the silane compound represented by the formula (A) or the formula (B) can be obtained.

### (Production Method 3)

As an alternative method, a compound represented by the following formula:

R⁶¹-COR⁶⁷

(wherein
R⁶¹ is an organosiloxane group-containing group,
R⁶⁷ is OH, or a hydrolyzable group such as a halogen element, NR₂, -OCOR', or an alkoxy group,
R is each independently a hydrogen atom or an alkyl group, and
R' is a hydrogen atom or an alkyl group)
is reacted with a compound represented by:

M-R⁶²

(wherein
M is a metal-containing group, such as Li, halogen-Mg, or Zn, and
R⁶² is an allyl group-containing group),
to give a compound represented by the following formula:

R⁶¹-C(OH)(-R⁶³-R⁶⁴)₂

(wherein
R⁶¹ is an organosiloxane group-containing group,
R⁶³ is a divalent group, and
R⁶⁴ is an allyl group).
The resulting compound is reacted with a compound of the following formula:

L-R⁶²

(wherein
L is a leaving group, and
R⁶² is an allyl group-containing group),
to give a compound represented by:

R⁶¹-C(-O-R⁶³-R⁶⁴)(-R⁶³-R⁶⁴)₂

(wherein
R⁶¹ is an organosiloxane group-containing group,
R⁶³ is a divalent group, and
R⁶⁴ is an allyl group).
Then, the resulting allyl compound is reacted with a compound represented by:

HSiR⁶⁵ₘR⁶⁶₃₋ₘ

(wherein
R⁶⁵ is each independently at each occurrence a hydroxyl group or a hydrolyzable group,
R⁶⁶ is each independently at each occurrence a monovalent organic group, and
m is 1 to 3), and
thereby the silane compound represented by the formula (A) or the formula (B) can be obtained.

### (Production Method 4)

As an alternative method, a compound represented by the following formula:

R⁶¹-CH=CH₂

(wherein R⁶¹ is an organosiloxane group-containing group)
is reacted with a compound represented by the following formula:

   H-SiX₃
(wherein X is a hydrolyzable group),
to give a compound represented by the following formula:

   R⁶¹-CH₂CH₂SiX₃.
Then, the resulting compound is reacted with a compound represented by:

M-R⁶²

(wherein
M is a metal-containing group, such as Li, halogen-Mg, or Zn, and
R⁶² is an allyl group-containing group),
to give a compound represented by the following formula:

R⁶¹-CH₂CH₂Si(-R⁶³-R⁶⁴)₃

(wherein
R⁶¹ is an organosiloxane group-containing group,
R⁶³ is a divalent group, and
R⁶⁴ is an allyl group).
Subsequently, an allyl compound is obtained. Then, the resulting allyl compound is reacted with a compound represented by:

HSiR⁶⁵ₘR⁶⁶₃₋ₘ

(wherein
R⁶⁵ is each independently at each occurrence a hydroxyl group or a hydrolyzable group,
R⁶⁶ is each independently at each occurrence a monovalent organic group, and
m is 1 to 3), and
thereby the silane compound represented by the formula (A) or the formula (B) can be obtained.

In the above reaction, R⁶¹-CH=CH₂ is reacted with an oxidizing agent to thereby form an epoxy compound, and using such an epoxy compound, the silane compound represented by the formula (A) or the formula (B) of the present disclosure can be obtained.

Furthermore, R⁶¹-CH=CH₂ is reacted with a thiol compound represented by HSR to form a thio compound represented by R⁶¹-CH₂-CH₂-SR or R⁶¹-CH(SR)-CH₃, and using such a thio compound, the silane compound represented by the formula (A) or the formula (B) of the present disclosure can be obtained. Here, R is any group.

Furthermore, as shown in the following scheme, R⁶¹-CH=CH₂ is reacted with a diene to form a cyclic compound, and using such a cyclic compound, the silane compound represented by the formula (A) or the formula (B) of the present disclosure can be obtained: 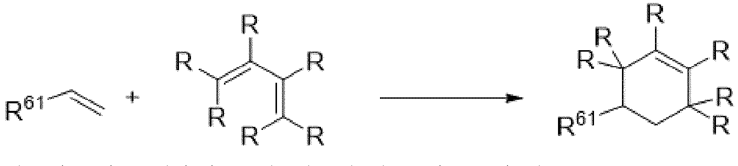 wherein R is each independently a hydrocarbon, a hydrogen atom, an oxygen atom, a nitrogen atom, or -COR', and R' is any group.

Furthermore, as shown in the following scheme, R⁶¹-CH=CH₂ is reacted with a boron reagent such as diborane, borane dimethyl sulfide complex, and 9-borabicyclo[3,3,1]-nonane, then the resulting borane derivative is converted to an alcohol compound, and using such an alcohol compound, the compound represented by the formula (A) or the formula (B) of the present disclosure can be obtained: 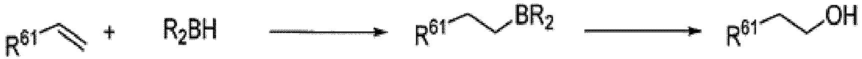 wherein R is each independently a hydrogen atom or a hydrocarbon group.

As an alternative method, a compound represented by the following formula:

R⁶¹-SiW²-H

(wherein
R⁶¹ is an organosiloxane group-containing group, and
W is each independently at each occurrence a monovalent organic group) is reacted with a compound represented by the following formula:

   H₂C=CH-R⁶⁷
(wherein R⁶⁷ is a group comprising a functional group such as amide, carboxylic acid, acid anhydride, acid chloride, nitrile, amine, epoxide, benzene ring, or alcohol), to give a compound represented by the following formula:

R⁶¹-SiX₂-CH₂CH₂-R⁶⁷.

By using such a compound as a raw material and utilizing the above reactions as appropriate, the silane compound represented by the formula (A) or the formula (B) can be obtained.

### (Production Method 6)

As an alternative method, a compound represented by the following formula:

R⁶¹-CH₂NR⁶⁸H

(wherein R⁶¹ is an organosiloxane group-containing group, and
R⁶⁸ is any group)
is reacted with a compound represented by the following formula:

HOCO-R⁶⁹

(wherein R⁶⁹ is a double bond group-containing group),
to give a compound represented by the following formula:

   R⁶¹-CH₂NR⁶⁸CO-R⁶⁹.
By using such a compound as a raw material and performing the above hydrosilylation reaction on the double bond comprised in R⁶⁹, the silane compound represented by the formula (A) or the formula (B) can be obtained.

### (Production Method 7)

As an alternative method, a compound represented by the following formula:

R⁶¹-CH₂NH₂

(wherein R⁶¹ is an organosiloxane group-containing group)
is reacted with a compound represented by:

   R⁷⁰-COOH
(wherein R⁷⁰ is a group comprising a functional group such as double bond, amide, carboxylic acid, acid anhydride, acid chloride, nitrile, amine, epoxide, benzene ring, or alcohol),
to give

   R⁶¹-CH₂NHCO-R⁷⁰,
and by using such a compound as a raw material, the silane compound represented by the formula (A) or the formula (B) can be obtained.

### (Production Method 8)

As an alternative method, as shown in the following scheme, an epoxy compound is reacted with a compound as shown below to give a compound, and using such a compound as a raw material, the silane compound represented by the formula (A) or the formula (B) can be obtained: 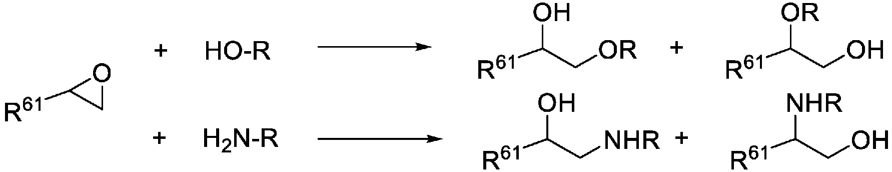 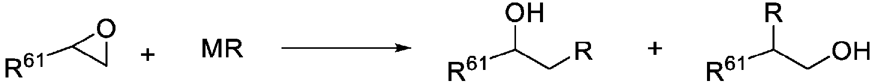 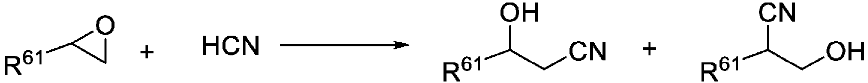 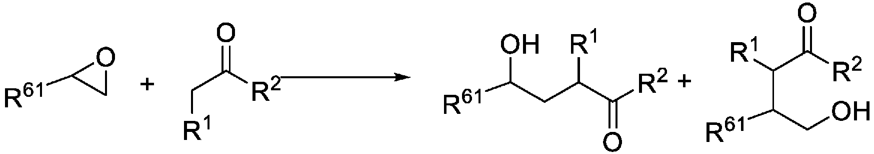 wherein
R⁶¹ is an organosiloxane group-containing group,
R¹ is a hydrogen atom or an alkyl group,
R² is a hydrogen atom or an alkyl group,
R is a hydrocarbon group optionally comprising a terminal functional group, and
the functional group is a carboxylic acid derivative such as an ester (for example, ester, amide, carboxylic acid, acid anhydride, acid chloride, or nitrile), amine, epoxide, benzene ring, alcohol, or unsaturated bond.

### (Production Method 9)

As an alternative method, according to the following scheme, R⁶¹-CH₂X is reacted with isocyanuric acid in the presence of an appropriate base (sodium hydride, sodium carbonate, potassium t-butoxide, metal hexamethyldisilazide, or the like), and a substituted isocyanurate compound can be obtained. Here, X is a leaving functional group, such as chloride, bromide, iodide, paratoluenesulfonate, trifluoromethanesulfonate, or carboxylate.

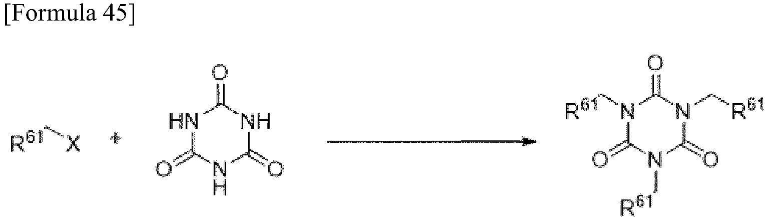

The above hydrosilylation is suitably carried out using a transition metal catalyst. Such a transition metal catalyst is preferably a Group 8 to 10 transition metal catalyst, and in particular, examples include a platinum catalyst, a ruthenium catalyst, and a rhodium catalyst. In particular, a platinum catalyst is preferable. Examples of the platinum catalyst include a Pt/divinyltetramethyldisiloxane complex, a Pt/tetramethyltetravinylcyclotetrasiloxane complex, chloroplatinic acid, and platinum oxide. In particular, either a Pt/divinyltetramethyldisiloxane complex or a Pt/tetramethyltetravinylcyclotetrasiloxane complex is preferable.

The amount of the above transition metal catalyst used is preferably 0.1 to 1,000 ppm, and particularly preferably 1 to 100 ppm, in mass ratio relative to the compound having a double bond, which is the reaction target. By setting the amount used as described above, the reaction proceeds appropriately and discoloration caused by the catalyst can be suppressed.

In a preferable embodiment, the above catalyst, in particular a platinum catalyst, is used in combination with a nitrogen-containing compound or a sulfur-containing compound. One of these compounds may be used, or two or more may be used.

Examples of the nitrogen-containing compound include aliphatic amine compounds, triethylamine, aromatic amine compounds (such as aniline and pyridine), phosphoric acid amides (such as hexamethylphosphoramide), amide compounds (such as N,N-diethylacetamide, N,N-diethylformamide, N,N-dimethylacetamide, N-methylformamide, and N,N-dimethylformamide), urea compounds (such as tetramethylurea), and cyclic amide compounds (such as N-methylpyrrolidone). Among the nitrogen-containing compounds, compounds having a large number of donors, as will be described below, are preferable, and aliphatic amine compounds, aromatic amine compounds, phosphoric acid amides, and urea compounds are preferable. Also, when the basicity of the nitrogen-containing compound is high, side reactions such as hydrolysis of a hydrolyzable group or condensation reaction more likely proceed, and, therefore, compounds with low basicity or neutral compounds are favorable. From such a viewpoint, aromatic amine compounds, phosphoric acid amides, and urea compounds are preferable.

Examples of the sulfur-containing compound include sulfoxide compounds (such as tetramethylene sulfoxide and dimethyl sulfoxide).

The above compounds may be preferably one or more of aromatic amine compounds and sulfoxide compounds, and particularly preferably one or more of tetramethylene sulfoxide or dimethyl sulfoxide.

The above nitrogen-containing compounds and sulfur-containing compounds both have a large number of donors. The number of donors is one of the solvent parameters and is a measure of electron (pair) donation. When a compound having a large number of donors is used in combination with the above transition metal catalyst, it is considered that such a compound coordinates to the transition metal in the transition metal catalyst, thus controlling the coordination of the compound having a double bond to the transition metal. As a result, a composition having a specific formulation can be obtained.

Here, the number of donors is the calorific value when a nitrogen-containing compound or sulfur-containing compound and SbCl₅ form a 1:1 adduct. The number of donors of various compounds and the method for calculating the donor number are disclosed in, for example, the following References (1) and (2): (1) Pure & Appl. Chem., Vol. 41, No. 3, pp. 291-326, 1975. (2) Pure & Appl. Chem., Vol. 58, No. 8, pp. 1153-1161, 1986.

The amount of the above nitrogen-containing compound or sulfur-containing compound used is preferably 0.001 to 1,000 parts by mass, and particularly preferably 0.01 to 10 parts by mass, based on 100 parts by mass of the compound having a double bond. Also, the mass ratio of the amount of the transition metal catalyst to the amount of the nitrogen-containing compound or sulfur-containing compound used (nitrogen-containing compound or sulfur-containing compound:transition metal catalyst) is preferably 10:1 to 10,000:1, and particularly preferably 20:1 to 1,000:1.

### (Production Method 10)

In the present production method, a carbonyl group (-C(=O)-)-containing compound having terminal R^{s3} is reacted with an olefin (-CH=CH₂)-containing amine compound to produce an olefin-containing amide compound, and the silane compound of the present disclosure can be synthesized from this olefin-containing amide compound. For example, an amide compound comprising a terminal olefin is reacted with a compound represented by the following formula:

HSiR^{j27}ₘ₃R^{j28}₃₋ₘ₃

(wherein
R^{j27} is each independently a hydroxyl group or a hydrolyzable group,
R^{j28} is each independently a monovalent organic group, and
m3 is 1 to 3), and
thereby a silane compound can be obtained. The monovalent organic group does not include a hydrolyzable group.

The olefin-containing amine compound is a compound having H₂N- and - CH=CH₂, and is, for example, H₂N(CH₂)ₓ₃₁Q((CH₂)ₓ₃₂CH=CH₂)ₓ₃₃R^{x3}ₓ₃₄ (wherein x31 is an integer of 0 to 30, x32 is an integer of 0 to 6, x33 is an integer of 1 or more, x34 is an integer of 0 or more, the sum of x33 and x34 is the valence of Q minus 1, Q is N, Si or C, and R^{x3} is a hydrogen atom, a hydroxyl group, or a monovalent organic group).

Examples of the olefin-containing amine compound include allylamine, diallylamine, 2-allylpent-4-en-1-amine (H₂NCH₂CH(CH₂CH=CH₂)₂), 2,2-diallylpent-4-en-1-amine (H₂N-CH₂C(CH₂CH=CH₂)₃), 3-buten-1-amine, 4-penten-1-amine, 5-hexen-1-amine, 6-hepten-1-amine, 7-octen-1-amine, 8-nonen-1-amine, 9-decen-1-amine, 10-undecen-1-amine, 11-dodecen-1-amine, 12-tridecen-1-amine, 13-tetradecene-1-amine, 14-pentadecen-1-amine, 15-hexadecen-1-amine, 16-heptadecen-1-amine, 17-octadecen-1-amine, 18-nonadecen-1-amine, 19-icosen-1-amine, 20-henicosen-1-amine, 23-tetracosen-1-amine, and 29-triaconten-1-amine.

The carbonyl group-containing compound is a compound comprising R^{s3}- and a C(=O) group. Examples of the carbonyl group-containing compound include a compound obtained by the synthesis method described below, or a compound represented by the formula:

R^{s3}-R^{j13}-CO-R^{j14}.

In the formula, R^{s3} is the same as R^{s3} in the formula (2); R^{j13} is a single bond or a divalent group; and R^{j14} is a hydroxyl group, a fluorine atom, a chlorine atom, or a -O-lower alkyl group (i.e., an alkoxide group), and is, for example, a hydrogen atom, a methoxide group, or an ethoxide group, and specifically, a hydrogen atom or a methoxide group.

When the carbonyl group-containing compound has an acid chloride (C(=O)Cl), the olefin-containing amide compound can be obtained by reacting it with an olefin-containing amine compound in the presence of a trialkylamine. Examples of the trialkyl amine include triethylamine.

When the carbonyl group-containing compound has a carboxylic acid, the olefin-containing amide compound can be obtained by reacting it with a condensing agent.

The condensing agent may be preferably 1-(3-dimethylaminopropyl)-3-ethylcarbodiimide (EDC), 1-(3-dimethylaminopropyl)-3-ethylcarbodiimide hydrochloride (EDC-HCl), N,N'-dicyclohexylcarbodiimide (DCC), 1-[bis(dimethylamino)methylene]-1H-1,2,3-triazolo[4,5-b]pyridinium 3-oxide hexafluorophosphate (HATU), 1-[bis(dimethylamino)methylene]-1H-benzotriazolium 3-oxide hexafluorophosphate (HBTU), 1-[bis(dimethylamino)methylene]-1H-1,2,3-triazolo[4,5-b]pyridinium 3-oxide tetrafluoroborate (TATU), 1-[bis(dimethylamino)methylene]-1H-benzotriazolium 3-oxide tetrafluoroborate (TBTU), (1-cyano-2-ethoxy-2-oxoethylideneaminooxy)dimethylaminomorpholinocarbenium hexafluorophosphate (COMU), O-[(ethoxycarbonyl)cyanomethyleneamino]-N,N,N',N'-tetramethyluronium hexafluorophosphate (HOTU), 1H-benzotriazol-1-yloxytripyrrolidinophosphonium hexafluorophosphate (PyBOP), 1H-benzotriazol-1-yloxytris(dimethylamino)phosphonium hexafluorophosphate (BOP), bromotripyrrolidinophosphonium hexafluorophosphate (PyBroP), diphenylphosphoryl azide (DPPA), 4-(4,6-dimethoxy-1,3,5-triazin-2-yl)-4-methylmorpholinium chloride (DMT-MM), 1-hydroxybenzotriazole (HOBt), or 1-hydroxy-7-azabenzotriazole (HOAt), and it is preferable to use 1-(3-dimethylaminopropyl)-3-ethylcarbodiimide hydrochloride, N,N'-dicyclohexylcarbodiimide, or 1-hydroxybenzotriazole. Moreover, a catalyst such as 4-dimethylaminopyridine (DMAP) may be added.

When the carbonyl group-containing compound has an ester, the olefin-containing amide compound can be obtained by reacting it in the presence of a base.

The base may be preferably 1,5,7-triazabicyclo[4.4.0]dec-5-ene (TBD), 1,2,4-triazole, 1,8-diazabicyclo[5.4.0]-7-undecene (DBU), sodium methoxide, or sodium tert-butoxide, and more preferably 1,5,7-triazabicyclo[4.4.0]dec-5-ene.

The reaction temperature is not limited. For example, the reaction temperature may be 0 to 150°C, 0 to 100°C, or 0 to 50°C.

The solvent may be, for example, at least one selected from the group consisting of diethyl ether, tetrahydrofuran, cyclopentyl methyl ether, ethylene glycol, dichloromethane, chloroform, benzene, toluene, and 1,3-bis(trifluoromethyl)benzene. Preferable are acetonitrile, dichloromethane, chloroform, toluene, diethyl ether, and tetrahydrofuran. Also, the reaction may be carried out without a solvent.

### (Production Method 11)

In this production method, an olefin group-containing compound is used as a raw material to produce the silane compound.

The olefin group-containing compound is a compound having R¹- and an olefin group (-CH=CH₂). Examples of the olefin group-containing compound include a compound obtained by the synthesis method described below.

For example, by a method comprising reacting an olefin group with HSiM₃ (wherein M is each independently a halogen atom or a C₁₋₆ alkoxy group) and further reacting the resulting compound with
a compound represented by the formula: Hal-J-CH=CH₂ (wherein J represents Mg, Cu, Pd, or Zn, and Hal represents a halogen atom) and,
as desired, a compound represented by the formula:

   R^{c}_{h'}L

   (wherein R^{c} has the same meanings as above, L represents a group capable of bonding with R^{c}, and h' is an integer of 1 to 3)
to give the following compound:

   R^{s3}-R^{j21}-CH₂CH₂-SiR^{c'}ₘ(CH=CH₂)_{k'}
(wherein R^{s3} has the same meanings as those described for the formula (2); and -R^{j21}-CH₂CH₂- corresponds to X¹, or for example, -R^{j21}-CH₂CH₂- is an alkylene group or
an alkylene group comprising an ether bond, such as a C₁₋₃₀ alkylene group or a C₁₋₃₀ alkylene group comprising an ether bond, specifically a C₁₀₋₂₅ alkylene group or a C₁₀₋₂₅ alkylene group comprising an ether bond); and
   reacting the above compound with HSiM₃ (wherein M is each independently a halogen atom or a C₁₋₆ alkoxy group) and, as desired,
   a compound represented by the formula: R²³_{i'}L' (wherein R²³ has the same meanings as above, L' represents a group capable of bonding with R²³, and i' is an integer of 1 to 3),
and, as desired,
a compound represented by the formula: R²⁴_{j'}L" (wherein R²⁴ has the same meanings as above, L" represents a group capable of bonding with R²⁴, and j' is an integer of 1 to 3),
the formula:

   R^{s3}-R^{j22}-R^{Si}
(wherein R¹ has the same meanings as those described for the formula (2), R^{j22} is a divalent organic group and corresponds to -R^{j21}-CH₂CH₂-, and R^{Si} has the same meanings as above)
can be produced. The above description is also applicable to other olefin group-containing compounds.

### (Production Method 12)

In this production method, the silane compound is produced by reacting a carbonyl group-containing compound with an amine-containing silane compound.

The carbonyl group-containing compound is a compound comprising R^{s3}- and C(=O). Examples of the carbonyl group-containing compound include a compound obtained by the synthesis method described below.

The amine-containing silane compound is a compound having an H₂N- group and an R^{Si} group. Examples of the amine-containing silane compound include H₂N-R^{j23}-R^{Si}, and may specifically be aminopropyltrimethoxysilane. The R^{j23} is an alkylene group such as a C₁₋₄ alkylene group, and is specifically a methylene group, an ethylene group, or a propylene group; and R^{Si} has the same meanings as above and, for example, R^{Si} is represented by the formula (S2).

The reaction temperature is preferably 0°C to 150°C, and more preferably 20°C to 100°C.

Usable solvents may be the same as those in Production Method 1, and preferably toluene, dichloromethane, chloroform, methanol, and ethanol are usable.

### (Production Method 13)

In this production method, the silane compounds are produced by reacting an olefin group-containing compound.

Specifically, the silane compounds can be obtained by reacting an olefin group-containing compound with a compound represented by the following formula:

HSiR^{j25}ₘ₃R^{j26}₃₋ₘ₃

wherein
R^{j25} is each independently a hydroxyl group or a hydrolyzable group,
R^{j26} is each independently a monovalent organic group, and
m3 is 1 to 3.
The above description is also applicable to other olefin group-containing compounds.

The olefin group-containing compound is a compound having R¹- and an olefin group. Examples of the olefin group-containing compound include compounds obtained by the synthesis method described below.

The carbonyl group-containing compound having terminal R¹ can be produced by the following method.

First, an unsaturated carboxylic acid or an unsaturated carboxylic acid ester such as a compound represented by the formula:

CH₂=CH-R⁸¹-COOR⁸²

(wherein
R⁸¹ is an alkylene group optionally comprising an ether bond, and
R⁸² is a hydrogen atom or a C₁₋₆ alkyl group)
is reacted with a silane compound such as a compound represented by the formula:

R¹-(SiR⁸⁴₂O)ₙ-SiR⁸⁴₂-H

(wherein
R¹ has the same meanings as those described for the formula (1),
R⁸⁴ is each independently a C₁₋₁₂ alkyl group, and
n is 1 to 1,500)
to give a compound represented by the formula:

R¹-(SiR⁸⁴₂O)ₙ-SiR⁸⁴₂-CH₂CH₂-R⁸¹-COOR⁸².

The unsaturated carboxylic acid or the unsaturated carboxylic acid ester is an unsaturated carboxylic acid or an unsaturated carboxylic acid having 10 to 30 carbon atoms, and specific examples include 22-tricosenoic acid, methyl 22-tricosenoate, 10-undecenoic acid, and methyl 10-undecenoate.

The unsaturated carboxylic acid or the unsaturated carboxylic acid ester may contain an ether structure, and specific examples include the following structures:

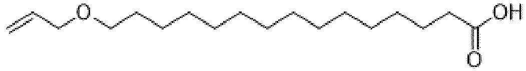

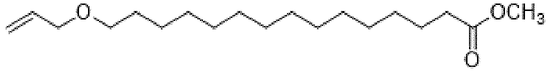

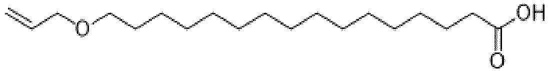

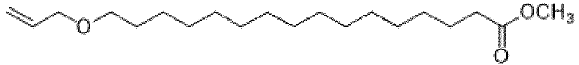

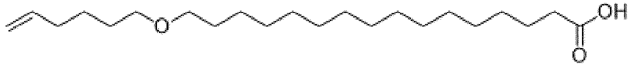

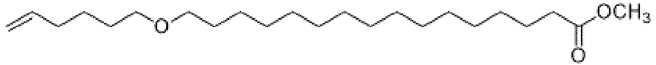

Specific examples of the silane compound include 1,1,1,3,5,5,5-heptamethyltrisiloxane, tris(trimethylsilyloxy)silane, and the following structure: 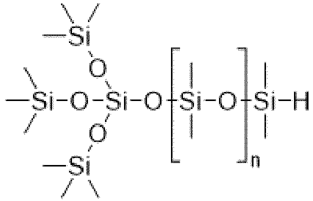 wherein, n is 0 to 500, and preferably 0 to 200;
in one embodiment, n is 0;
in one embodiment, n is 1 to 200, preferably 10 to 100, and more preferably 10 to 50; and
in one embodiment, n is preferably 1 to 10, and more preferably 1 to 6.

Alternatively, the carbonyl group-containing compound having terminal R¹ can be produced by the following method.

First, a carboxylic acid or a carboxylic acid ester having a terminal hydroxyl group, such as a compound represented by the formula:

HO-CH₂-R⁸¹-COOR⁸²

(wherein
R⁸² is an alkylene group optionally comprising an ether bond, and
R⁸² is a hydrogen atom or a C₁₋₆ alkyl group)
is reacted with a silane compound such as a compound represented by the formula:

R¹-(SiR⁸⁴₂O)ₙ-SiR⁸⁴₂-H

(wherein
R¹ has the same meanings as those described for the formula (1),
R⁸⁴ is each independently a C₁₋₁₂ alkyl group, and
n is 1 to 1,500)
to give a compound represented by the formula:

R¹-(SiR⁸⁴₂O)ₙ-SiR⁸⁴₂-O-CH₂-R⁸¹-COOR⁸².

Specific examples of the carboxylic acid or the carboxylic acid ester having a terminal hydroxyl group include 15-hydroxypentadecanoic acid, methyl 15-hydroxypentadecanoate, 16-hydroxyhexadecanoic acid, and methyl 16-hydroxyhexadecanoate.

Specific examples of the silane compound include 1,1,1,3,5,5,5-heptamethyltrisiloxane, tris(trimethylsilyloxy)silane, and the following structure: 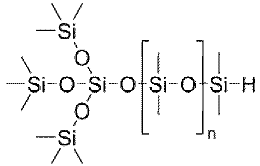 wherein, n is 0 to 500, and preferably 0 to 200;
in one embodiment, n is 0;
in one embodiment, n is 1 to 200, preferably 10 to 100, and more preferably 10 to 50; and
in one embodiment, n is preferably 1 to 10, and more preferably 1 to 6.

Alternatively, the carbonyl group-containing compound having terminal R¹ can be produced by, for example, the following method.

First, a carboxylic acid or a carboxylic acid ester having terminal chlorosilane, such as a compound represented by the formula:

Cl-Si(CH₃)₂-R⁸¹-COOR⁸²

(wherein
R⁸¹ is an alkylene group optionally comprising an ether bond, and
R⁸² is a hydrogen atom or a C₁₋₆ alkyl group)
is reacted with a silane compound such as a compound represented by the formula:

R¹-(SiR⁸⁴₂O)ₙ-SiR⁸⁴₂-OH

(wherein
R¹ has the same meanings as those described for the formula (1),
R⁸⁴ is each independently a C₁₋₁₂ alkyl group, and
n is 1 to 1,500)
to give a compound represented by the formula:

R¹-(SiR⁸⁴₂O)ₙ-SiR⁸⁴₂-O-Si(CH₃)₂-R⁸¹-COOR⁸².

Specific examples of the carboxylic acid or the carboxylic acid ester having terminal chlorosilane include the following structures:

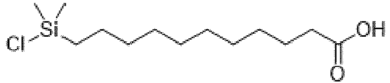

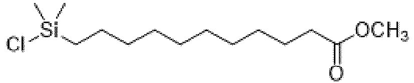

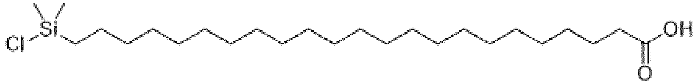

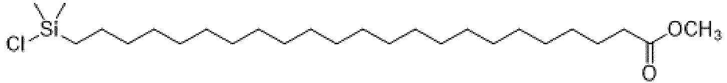

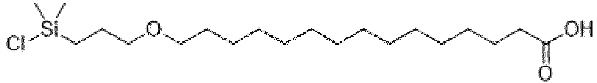

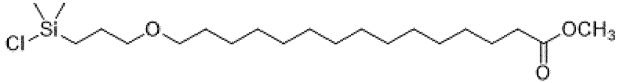

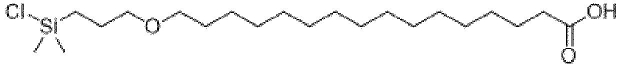

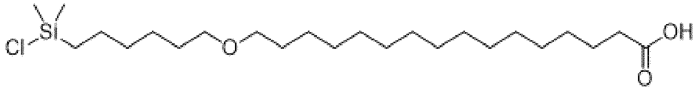

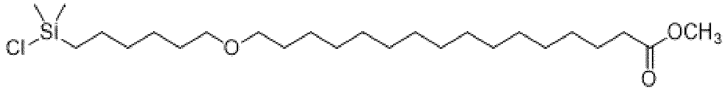

Specific examples of the silane compound include the following structures: 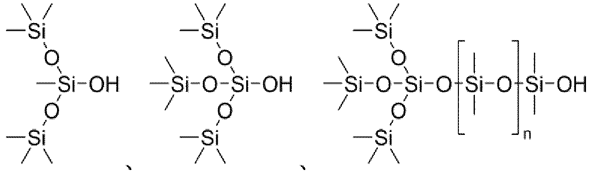 wherein, n is 0 to 500, and preferably 0 to 200;
in one embodiment, n is 0;
in one embodiment, n is 1 to 200, preferably 10 to 100, and more preferably 10 to 50; and
in one embodiment, n is preferably 1 to 10, and more preferably 1 to 6.

Alternatively, the carbonyl group-containing compound having terminal R^{s3} can be produced by, for example, the following method.

First, a carboxylic acid or a carboxylic acid ester having a terminal hydroxyl group such as a compound represented by the formula:

XO-[Si(CH₃)₂]ₙ-Si(CH₃)₂-R⁸¹-COOR⁸²

(wherein
R⁸¹ is an alkylene group optionally comprising an ether bond,
R⁸² is a hydrogen atom or a C₁₋₆ alkyl group, and
X is hydrogen or lithium)
is reacted with a silane compound such as a compound represented by the formula:

R^{s3}-(SiR⁸⁴₂O)ₙ-SiR⁸⁴₂-Cl

(wherein
R^{s3} has the same meanings as those described for the formula (1),
R⁸⁴ is each independently a C₁₋₁₂ alkyl group, and
n is 1 to 1,500)
to give a compound represented by the formula:

R^{s3}-(SiR⁸⁴₂O)ₙ-SiR⁸⁴₂-O-[Si(CH₃)₂]ₙ-Si(CH₃)₂-R⁸¹-COOR⁸².

Specific examples of the carboxylic acid or the carboxylic acid ester having a terminal hydroxyl group include 15-hydroxypentadecanoic acid, methyl 15-hydroxypentadecanoate, 16-hydroxyhexadecanoic acid, and methyl 16-hydroxyhexadecanoate.

Specific examples of the silane compound include the following structures: 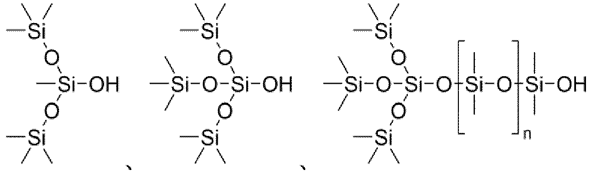 wherein, n is 0 to 500, and preferably 0 to 200;
in one embodiment, n is 0;
in one embodiment, n is 1 to 200, preferably 10 to 100, and more preferably 10 to 50; and
in one embodiment, n is preferably 1 to 10, and more preferably 1 to 6.

The olefin group-containing compound can be produced by the following method.

First, an olefin having a terminal hydroxyl group, such as a compound represented by the formula:

HO-CH₂-R⁸¹-CH=CH₂

(wherein
R⁸¹ is an alkylene group optionally comprising an ether bond) is reacted with a silane compound such as a compound represented by the formula:
R^{s3}-(SiR⁸⁴₂O)ₙ-SiR⁸⁴₂-H
(wherein
R^{s3} has the same meanings as those described for the formula (2),
R⁸⁴ is each independently a C₁₋₁₂ alkyl group, and
n is 1 to 1,500)
to give a compound represented by the formula:

R¹-(SiR⁸⁴₂O)ₙ-SiR⁸⁴₂-O-CH₂-R⁸¹-CH=CH₂.

Specific examples of the olefin having a terminal hydroxyl group include 3-hydroxypropene, 4-hydroxy-1-butene, 5-hydroxy-1-pentene, 6-hydroxy-1-hexene, 7-hydroxy-1-heptene, 8-hydroxy-1-octene, 9-hydroxy-1-nonene, 10-hydroxy-1-decene, 11-hydroxy-1-undecene, 12-hydroxy-1-dodecene, 13-hydroxy-1-tridecene, 14-hydroxy-1-tetradecene, 15-hydroxy-1-pentadecene, 16-hydroxy-1-hexadecene, 17-hydroxy-1-heptadecene, 18-hydroxy-1-octadecene, 19-hydroxy-1-nonadecene, 20-hydroxy-1-icosene, 21-hydroxy-1-henicosene, 24-hydroxy-1-tetracosene, and 30-hydroxy-1-triacontene.

Specific examples of the silane compound include 1,1,1,3,5,5,5-heptamethyltrisiloxane, tris(trimethylsilyloxy)silane, and the following structure:

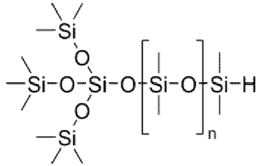

Alternatively, the olefin group-containing compound can be produced by the following method.

First, a carboxylic acid or a carboxylic acid ester having a terminal hydroxyl group such as a compound represented by the formula:

XO-[Si(CH₃)₂]ₙ-Si(CH₃)₂-R⁸¹-CH=CH₂

(wherein
R⁸¹ is an alkylene group optionally comprising an ether bond, and
X is hydrogen or lithium)
is reacted with a silane compound such as a compound represented by the formula:

R^{s3}-(SiR⁸⁴₂O)ₙ-SiR⁸⁴₂-Cl

(wherein
R^{s3} has the same meanings as those described for the formula (1),
R⁸⁴ is each independently a C₁₋₁₂ alkyl group, and
n is 1 to 1,500)
to give a compound represented by the formula:

R^{s3}-(SiR⁸⁴₂O)ₙ-SiR⁸⁴₂-O-[Si(CH₃)₂]ₙ-Si(CH₃)₂-R⁸¹-CH=CH₂.

Specific examples of the carboxylic acid or the carboxylic acid ester having a terminal hydroxyl group include 15-hydroxypentadecanoic acid, methyl 15-hydroxypentadecanoate, 16-hydroxyhexadecanoic acid, and methyl 16-hydroxyhexadecanoate.

Specific examples of the silane compound include the following structures: 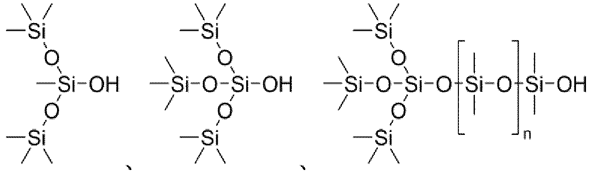 wherein, n is 0 to 500, and preferably 0 to 200;
in one embodiment, n is 0;
in one embodiment, n is 1 to 200, preferably 10 to 100, and more preferably 10 to 50; and
in one embodiment, n is preferably 1 to 10, and more preferably 1 to 6.

The composition of the present disclosure can be prepared by mixing the silane compound (A), the silane compound (B), and other components that are used as necessary. In a preferable embodiment, the silane compound (A) and the silane compound (B) are preferably mixed and then left to stand still. Such a procedure enables the silane compound (A) and the silane compound (B) to be sufficiently mixed. The temperature at which the silane compound (A) and the silane compound (B) are mixed is preferably 5 to 50°C, more preferably 10 to 40°C, and even more preferably 20 to 30°C, and the mixing time is preferably 5 minutes to 2 hours, more preferably 10 minutes to 1 hour, and even more preferably 20 to 40 minutes. The standing time may preferably be 3 to 30 hours, and more preferably 5 to 20 hours.

Next, the surface-treating agent of the present invention will now be described.

The surface-treating agent of the present disclosure comprises the composition of the present disclosure, so the silane compound (A) and the silane compound (B) are comprised. The surface-treating agent of the present disclosure can be used in a coating, and the surface-treating agent used in a coating is also simply referred to as a coating solution.

In one embodiment, the surface-treating agent (the coating solution) of the present disclosure is the composition itself comprising the silane compound (A) and the silane compound (B).

In one embodiment, the total content of the silane compound (A) and the silane compound (B) may be preferably 0.1 to 50.0% by mass, more preferably 1.0 to 30.0% by mass, even more preferably 5.0 to 25.0% by mass, and particularly preferably 10.0 to 20.0% by mass, based on the entirety of the surface-treating agent.

In another embodiment, the total content of the silane compound (A) and the silane compound (B) may be preferably 0.001 to 30% by mass, more preferably 0.01 to 10% by mass, even more preferably 0.05 to 5% by mass, and particularly preferably 0.05 to 2% by mass, based on the entirety of the surface-treating agent.

In one embodiment, the surface-treating agent (the coating solution) of the present disclosure may contain the above composition and at least one of compounds composed of a condensate in which the silane compounds comprised in the composition are at least partially condensed. In other words, the surface-treating agent of the present disclosure may contain the silane compound (A), the silane compound (B), and a condensate in which the silane compound (A) and/or the silane compound (B) is at least partially condensed.

In the above embodiment, the content of the condensate may be preferably 40% by mass or less and more preferably 30% by mass or less based on the sum of the silane compound (A), the silane compound (B), and the condensate. Here, the content of the condensate can be determined from, for example, the abundance ratio of the peak position to the area in GPC (gel permeation chromatography).

The surface-treating agent (the coating solution) of the present disclosure may further contain a solvent, a (non-reactive) silicone compound that may be understood as silicone oil (hereinafter, referred to as "silicone oil"), an amine compound, an alcohol, a catalyst, a surfactant, a polymerization inhibitor, a sensitizer, and the like.

In one embodiment, the surface-treating agent (the coating solution) of the present disclosure comprises a compound represented by R⁹⁰-OH.

R⁹⁰ is a monovalent organic group and is preferably a C₁₋₂₀ alkyl group or a C₃₋₂₀ alkylene group, and these groups may be substituted with one or more substituents. Examples of substituents include a hydroxyl group and -OR⁹¹ wherein R⁹¹ is a C₁₋₁₀ alkyl group, and preferably a C₁₋₃ alkyl group, such as a methyl group.

In one embodiment, the surface-treating agent (the coating solution) of the present disclosure may further contain a solvent selected from the compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉, wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

The monovalent organic group having 1 to 10 carbon atoms may be linear or branched, and may further contain a cyclic structure.

In one embodiment, the monovalent organic group having 1 to 10 carbon atoms may contain an oxygen atom, a nitrogen atom, or a halogen atom.

In another embodiment, the monovalent organic group having 1 to 10 carbon atoms does not contain a halogen atom.

In a preferable embodiment, the monovalent organic group having 1 to 10 carbon atoms is a hydrocarbon group optionally substituted with a halogen, and preferably a hydrocarbon group not substituted with a halogen.

In one embodiment, the hydrocarbon group is linear.

In another embodiment, the hydrocarbon group is branched.

In another embodiment, the hydrocarbon group comprises a cyclic structure.

In one embodiment, the solvent is R⁸¹OR⁸².

R⁸¹ and R⁸² may be, each independently, preferably a hydrocarbon group having 1 to 8 carbon atoms, and more preferably a C₁₋₆ alkyl group or a C₅₋₈ cycloalkyl group.

In one embodiment, the solvent is R⁸³ₙ₈C₆H₆₋ₙ₈.

C₆H₆₋ₙ₈ is a benzene ring having a valence of n8. That is to say, R⁸³ₙ₈C₆H₆₋ₙ₈ is benzene substituted with n8 R⁸³.

R⁸³ may be each independently a halogen, or a C₁₋₆ alkyl group optionally substituted with a halogen.

n8 is preferably an integer of 1 to 3.

In one embodiment, the solvent is R⁸⁴R⁸⁵R⁸⁶Si-(O-SiR⁸⁷R⁸⁸)ₘ₈-R⁸⁹.

In one embodiment, the solvent is (OSiR⁸⁷R⁸⁸)ₘ₉. (OSiR⁸⁷R⁸⁸)ₘ₉ is a cyclic siloxane formed by multiple OSiR⁸⁷R⁸⁸ units bonded in a cyclic form.

R⁸⁴ to R⁸⁹ are each independently a hydrogen atom or a C₁₋₆ alkyl group, preferably a C₁₋₆ alkyl group, more preferably a C₁₋₃ alkyl group, and even more preferably a methyl group.

m8 is preferably an integer of 1 to 6, more preferably an integer of 1 to 5, and even more preferably 1 to 2.

m9 is preferably an integer of 3 to 6, and more preferably an integer of 3 to 5.

In one embodiment, examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl-2-hydroxybutyrate, ethyl acetacetate, amyl acetate, methyl lactate, ethyl lactate, methyl 3-methoxypropionate, ethyl 3-methoxypropionate, methyl 2-hydroxyisobutyrate, ethyl 2-hydroxyisobutyrate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

Examples of the silicone oil include, but are not limited to, compounds represented by the following general formula (3a):

R^{1a}-(SiR^{3a}₂-O)ₐ₁-SiR^{3a}₂-R^{1a} (3a)

wherein
R^{1a} is each independently a hydrogen atom or a hydrocarbon group,
R^{3a} is each independently a hydrogen atom or a hydrocarbon group, and
a1 is 2 to 3,000.

R^{3a} is each independently a hydrogen atom or a hydrocarbon group. Such a hydrocarbon group may be substituted.

R^{3a} is, each independently, preferably an unsubstituted hydrocarbon group or a hydrocarbon group substituted with a halogen atom. Such a halogen atom is preferably a fluorine atom.

R^{3a} is, each independently, preferably a C₁₋₆ alkyl group or an aryl group optionally substituted with a halogen atom, and more preferably a C₁₋₆ alkyl group or an aryl group.

The C₁₋₆ alkyl group may be linear or may be branched, and is preferably linear.
The C₁₋₆ alkyl group is preferably a C₁₋₃ alkyl group, and more preferably a methyl group.

The aryl group is preferably a phenyl group.

In one embodiment, R^{3a} is each independently a C₁₋₆ alkyl group, preferably a C₁₋₃ alkyl group, and more preferably a methyl group.

In another embodiment, R^{3a} is a phenyl group.

In another embodiment, R^{3a} is a methyl group or a phenyl group, and preferably a methyl group.

R^{1a} is each independently a hydrogen atom or a hydrocarbon group, and has the same meanings as those described for R^{3a}.

R^{1a} is, each independently, preferably a C₁₋₆ alkyl group or an aryl group optionally substituted with a halogen atom, and more preferably a C₁₋₆ alkyl group or an aryl group.

In one embodiment, R^{1a} is each independently a C₁₋₆ alkyl group, preferably a C₁₋₃ alkyl group, and more preferably a methyl group.

In another embodiment, R^{1a} is a phenyl group.

In another embodiment, R^{1a} is a methyl group or a phenyl group, and preferably a methyl group.

a1 is 2 to 1,500. a1 may be preferably 5 or more, more preferably 10 or more, and even more preferably 15 or more, such as 30 or more or 50 or more. a1 may be preferably 1,000 or less, more preferably 500 or less, even more preferably 200 or less, and yet more preferably 150 or less, such as 100 or less or 80 or less.

a1 may be preferably 5 to 1,000, more preferably 10 to 500, even more preferably 15 to 200, and yet more preferably 15 to 150.

Other examples of the silicone oil include compounds represented by (3b) below:

R^{1a}-R^{SO2}-R^{3a} (3b)

wherein
R^{1a} is each independently a hydrocarbon group,
R^{3a} is each independently a hydrocarbon group, and
R^{SO2} is -R^{S}-SiR⁵₂-, wherein R^{S} and R⁵ have the same meanings as above.

The silicone oil may have an average molecular weight of 500 to 1,000,000, and preferably 1,000 to 100,000. The molecular weight of the silicone oil may be measured using GPC.

The silicone oil may be, for example, a linear or cyclic silicone oil in which a1 in -(SiR^{3a}₂-O)ₐ₁- is 30 or less. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. The cyclic silicone oil may be, for example, cyclic dimethylsiloxane oil.

The silicone oil may be comprised in an amount of, for example, 0 to 50% by mass, preferably 0.001 to 30% by mass, and more preferably 0.1 to 5% by mass based on the surface-treating agent (the coating solution) of the present disclosure.

In the surface-treating agent (the coating solution) of the present disclosure, the silicone oil may be comprised in an amount of, for example, 0 to 300 parts by mass, preferably 0 to 100 parts by mass, more preferably 0 to 50 parts by mass, and even more preferably 0 to 10 parts by mass, based on total 100 parts by mass of the compound comprised in the composition of the present disclosure (in the case of two or more kinds, the total thereof, and the same applies below).

The silicone oil contributes to increasing the surface lubricity of the surface-treating layer.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. Such an alcohol added to the composition improves the stability of the composition.

Examples of the catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur-containing compounds or nitrogen-containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compound include diethylamine and triethylamine. Examples of the aromatic amine compound include aniline and pyridine.

In a preferable embodiment, the transition metal is comprised as a transition metal compound represented by M-R, wherein M is a transition metal atom, and R is a hydrolyzable group. By using a compound obtained by bonding a transition metal and a hydrolyzable group as the transition metal compound, the transition metal atom can be comprised in the surface-treating layer more efficiently, and the friction durability and the chemical resistance of the surface-treating layer can be more increased.

The hydrolyzable group means a group that can undergo a hydrolysis reaction in the same manner as the hydrolyzable group concerning the above compound, i.e., means a group that can be removed from the transition metal atom by a hydrolysis reaction. Examples of the hydrolyzable group include -OR^{m}, -OCOR^{m}, -ON=CR^{m}₂, -NR^{m}₂, -NHR^{m}, -NCO, and a halogen (in these formulae, R^{m} represents a substituted or unsubstituted C₁₋₄ alkyl group).

In a preferable embodiment, the hydrolyzable group is -OR^{m}, and preferably methoxy or ethoxy. By using an alkoxy group as the hydrolyzable group, the transition metal atom can be comprised in the surface-treating layer more efficiently, and the friction durability and the chemical resistance of the surface-treating layer can be more increased.

In one embodiment, the hydrolyzable group may be the same as the hydrolyzable group comprised in the above compound. By causing the hydrolyzable groups in the compound and in the transition metal compound to be the same group, the influence of such hydrolyzable groups being mutually exchanged, if ever, can be minimized.

In another embodiment, the hydrolyzable group may be different from the hydrolyzable group comprised in the above compound. By causing the hydrolyzable groups in the above compound and in the transition metal compound to be different, the reactivity of hydrolysis can be controlled.

In one embodiment, the above hydrolyzable group and the hydrolyzable group comprised in the above compound may be mutually exchanged in the composition.

In a preferable embodiment, the transition metal compound may be Ta(OR^{m})₅ (wherein R^{m} is a substituted or unsubstituted C₁₋₄ alkyl group), preferably Ta(OCH₂CH₃)₅ or Si(OR^{m})₁₋ₘ₁R^{m'}ₘ₁ (wherein R^{m} is a substituted or unsubstituted C₁₋₄ alkyl group, R^{m'} is a C₁₋₄ alkyl group, and m1 is 0 or 1), and preferably tetraethoxysilane, methyltrimethoxysilane, methyltriethoxysilane, tetraisopropoxysilane, dimethyldiethoxysilane, or dimethyldimethoxysilane.

The catalyst may be comprised in an amount of, for example, 0.0002% by mass or more based on the entirety of the surface-treating agent (the coating solution). The catalyst may be comprised in an amount of preferably 0.02% by mass or more, and more preferably 0.04% by mass or more, based on the entirety of the surface-treating agent (the coating solution). The catalyst may be comprised in an amount of, for example, 10% by mass or less based on the entirety of the surface-treating agent (the coating solution), and in particular, it is comprised in an amount of 1% by mass or less. The surface-treating agent (the coating solution) of the present disclosure can contribute to the formation of a surface-treating layer having better durability when the catalyst having a concentration as described above is comprised.

The content of the catalyst is preferably 0 to 10% by mass, more preferably 0 to 5% by mass, and particularly preferably 0 to 1% by mass, based on the compound comprised in the composition of the present disclosure.

The catalyst promotes hydrolysis and dehydrative condensation of the compound comprised in the composition of the present disclosure, and promotes formation of a layer formed of the composition of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The composition of the present disclosure may contain, in addition to the components described above, trace amounts of Pt, Rh, Ru, 1,3-divinyltetramethyldisiloxane, triphenylphosphine, NaCl, KCl, silane condensates, and the like as impurities.

In one embodiment, the surface-treating agent (the coating solution) of the present disclosure is for a dry coating method, preferably for vacuum deposition.

In one embodiment, the surface-treating agent (the coating solution) of the present disclosure is for a wet coating method, preferably for dip coating.

The surface-treating agent (the coating solution) of the present disclosure can be formed into pellets by impregnating a porous material such as a porous ceramic material or a metal fiber such as a fiber obtained by, for example, solidifying steel wool in a cotton-like form with the composition. Such pellets can be used in, for example, vacuum deposition.

The composition of the present disclosure is preferably used as a surface-treating agent or as a component of a surface-treating agent.

Below, the article of the present disclosure will now be described.

The article of the present disclosure comprises a substrate and a layer (a surface-treating layer) on the substrate surface, the layer being formed of the surface-treating agent (the coating solution) of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The form of the substrate is not limited, and may be, for example, a plate, a film, or the like. The surface region of the substrate on which a surface-treating layer is to be formed may be at least a portion of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) that forms a natural oxidized film or a thermal oxidized film on its surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere comprising oxygen, nitrogen, or the like.

In another embodiment, the substrate, or at least the surface portion thereof, may be composed of a material comprising another reactive group such as a silicone compound having one or more Si-H groups or alkoxysilane.

In a preferable embodiment, the substrate is glass. Such glass is preferably sapphire glass, soda-lime glass, alkali aluminosilicate glass, borosilicate glass, alkali-free glass, crystal glass, quartz glass, or crystallized glass, and is particularly preferably chemically strengthened soda-lime glass, chemically strengthened alkali aluminosilicate glass, or chemically bonded borosilicate glass.

In one embodiment, the article of the present disclosure may include a silicon oxide-containing intermediate layer between glass and the surface-treating layer. By providing such an intermediate layer, adhesion between glass and the surface-treating layer is increased, and durability is increased.

In a preferable embodiment, the intermediate layer may contain an alkali metal in addition to silicon oxide.

Examples of the alkali metal include lithium, sodium, and potassium. The alkali metal is preferably sodium.

The thickness of the intermediate layer is not limited, and is preferably 1 to 200 nm and particularly preferably 1 to 20 nm. By causing the thickness of the intermediate layer to be at the lower limit of the above range or greater, the effect of increasing adhesion provided by the intermediate layer is more increased.

The concentration of alkali metal atoms in the intermediate layer can be measured by various surface analysis apparatuses such as TOF-SIMS, XPS, and XRF.

The proportion of alkali metal atoms to all atoms in the entirety of the intermediate layer can be obtained by XPS depth profile analysis using ion sputtering, wherein measurement by XPS and surface etching by ion sputtering using an ion gun provided in an XPS apparatus are alternately performed.

In the intermediate layer, the average alkali metal concentration in a region having a depth of 1 nm or less from the surface that is in contact with the surface-treating layer is determined by obtaining a depth profile of the alkali metal atom concentration by TOF-SIMS (time-of-flight secondary ion mass spectrometry) depth analysis using ion sputtering, and then calculating the average alkali metal atom concentration in the profile. TOF-SIMS depth profile analysis by ion sputtering is performed by alternately repeating measurement by TOF-SIMS and surface etching by ion sputtering using an ion gun provided in a TOF-SIMS apparatus.

The article of the present disclosure can be produced by forming a layer of the surface-treating agent of the present disclosure on the surface of the substrate and post-treating this layer as necessary, thereby forming a layer from the surface-treating agent of the present disclosure.

The layer of the surface-treating agent of the present disclosure can be formed by applying the surface-treating agent to the surface of the substrate so as to coat the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, high-frequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by Zeon Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M LIMITED), perfluorobutyl methyl ether (C₄F₉OCH₃) (for example, Novec(TM) 7100 manufactured by SUMITOMO 3M LIMITED), perfluorobutyl ethyl ether (C₄F₉OC₂H₅) (for example, Novec(TM) 7200 manufactured by SUMITOMO 3M LIMITED), and perfluorohexyl methyl ether (C₂F₅CF(OCH₃)C₃F₇) (for example, Novec(TM) 7300 manufactured by SUMITOMO 3M LIMITED), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more of such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl-2-hydroxybutyrate, ethyl acetacetate, amyl acetate, methyl lactate, ethyl lactate, methyl 3-methoxypropionate, ethyl 3-methoxypropionate, methyl 2-hydroxyisobutyrate, ethyl 2-hydroxyisobutyrate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

In one embodiment, the solvent when the wet coating method is used may be, for example, a compound represented by R⁹⁰-OH. R⁹⁰ is a monovalent organic group and is preferably a C₁₋₂₀ alkyl group or a C₃₋₂₀ alkylene group, and these groups may be substituted with one or more substituents. Examples of substituents include a hydroxyl group and -OR⁹¹ wherein R⁹¹ is a C₁₋₁₀ alkyl group, and preferably a C₁₋₃ alkyl group, such as a methyl group.

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists in the layer with a catalyst for hydrolysis and dehydrative condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used in a deposition (usually vacuum deposition) treatment, or a pellet-like material may be used in a deposition (usually vacuum deposition) treatment, wherein pellets are obtained by impregnating a porous body of metal such as iron or copper with the surface-treating agent of the present disclosure to which the catalyst has been added.

The catalyst may be any suitable acid or base, transition metal (such as Ti, Ni, Sn, Zr, Al, or B), sulfur-containing compound or nitrogen-containing compound having an unshared electron pair in the molecular structure (such as a sulfoxide compound, an aliphatic amine compound, an aromatic amine compound, a phosphoric acid amide compound, an amide compound, or an urea compound), or the like. The acid catalyst may be, for example, acetic acid, formic acid, trifluoroacetic acid, hydrochloric acid, nitric acid, sulfuric acid, phosphoric acid, sulfonic acid, methanesulfonic acid, or p-toluenesulfonic acid. Also, the base catalyst may be, for example, ammonia, sodium hydroxide, potassium hydroxide, or an organic amine such as triethylamine or diethylamine. Examples of the transition metal, the aliphatic amine compound, and the aromatic amine compound include those described above.

The surface-treating layer comprised in the article of the present disclosure may have high abrasion durability. Moreover, the surface-treating layer may have not only high abrasion durability but also have, depending on the composition of the surface-treating agent used, water-repellency, oil-repellency, antifouling properties (e.g., preventing grime such as fingerprints from adhering), waterproof properties (preventing water from entering electronic components and the like), surface lubricity (or lubricity, for example, such as removability by wiping of grime such as fingerprints, and excellent tactile sensations to the fingers), chemical resistance, and the like, and may be suitably used as a functional thin film.

Accordingly, the present disclosure further relates to an optical material having the surface-treating layer as the outermost layer.

The optical material preferably comprises a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The article of the present disclosure may be medical equipment or a medical material. The article having a layer obtained according to the present disclosure may be an automobile interior/exterior material. Examples of the exterior material are as follows: windows, light covers, and external camera covers. Examples of the interior material are as follows: instrument panel covers, navigation system touch panels, and decorative interior materials.

The thickness of the layer is not limited. The thickness of the layer in the case of an optical member may be in the range of, for example, 1 to 50 nm, preferably 1 to 30 nm, and more preferably 1 to 15 nm, from the viewpoint of optical performance, abrasion durability, and antifouling properties.

The apparatus for performing X-ray photoelectron spectroscopy for measuring the atomic composition and the ratio of constitutional atoms of the surface-treating layer may be XPS or PHI 5000 VersaProbe II manufactured by ULVAC-PHI, Inc. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and sputtering with a gas cluster ion beam or Ar ions. The compositions of the surface-treating layer and the intermediate layer can be determined by observing the peak areas of C1s, O1s, and Si2p under the above apparatus and measurement conditions, and calculating the atomic ratio of carbon, oxygen, and silicon.

Also, depth profile analysis may be performed as well. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and Ar ions, gas cluster ions, C60 ions, or the like as sputtering ions. Etching may be performed to 1 to 100 nm by sputtering, and the composition in the coating film at each etching depth may be obtained as well.

By adjusting the photoelectron detection angle of the XPS analysis, the detection depth can be suitably adjusted. For example, a shallow angle close to 20 degrees allows a detection depth of about 3 nm, while a deep angle close to 90 degrees allows a detection depth of about 10 nm.

The silicon oxide-containing intermediate layer described above can be formed by applying a silicon oxide precursor to the substrate surface. When the intermediate layer comprises an alkali metal, the intermediate layer can be formed by applying a composition comprising a silicon oxide precursor and an alkali metal source to the substrate surface.

Examples of the silicon oxide precursor include silicic acid, a partial condensate of silicic acid, an alkali metal silicate, a silane compound having a hydrolyzable group that is bonded to a silicon atom, and a partially hydrolyzed condensate of such a silane compound. Silicic acid and a partial condensate thereof can be converted to silicon oxide by dehydrative condensation, and an alkali metal silicate can be converted to silicon oxide by being converted first to silicic acid or a partial condensate thereof with an acid or a cation exchange resin and then dehydratively condensing the resulting silicic acid or partial condensate thereof. Examples of the hydrolyzable group in the silane compound having a hydrolyzable group that is bonded to a silicon atom include an alkoxy group and a chlorine atom. The hydrolyzable group of the silane compound can be hydrolyzed to give a hydroxyl group, and the resulting silanol compound can be dehydratively condensed to give silicon oxide. Examples of the silane compound having a hydrolyzable group that is bonded to a silicon atom include alkoxysilanes such as tetraalkoxysilane and alkyltrialkoxysilane, and tetrachlorosilane.

The alkali metal source comprises alkali metal hydroxides, water-soluble alkali metal salts, and the like. Examples of the water-soluble alkali metal salts include alkali metal carbonates, alkali metal hydrogen carbonates, alkali metal hydrochlorides, and alkali metal nitrates. The alkali metal source is preferably an alkali metal hydroxide and an alkali metal carbonate, more preferably an alkali metal hydroxide, and even more preferably NaOH.

Note that the alkali metal silicate can be used as a silicon oxide precursor and an alkali metal source. The alkali metal silicate can be converted to silicon oxide via silicic acid, and in this process, a small amount of alkali metal may remain in the produced silicon oxide. Accordingly, regulating the amount of the remaining alkali metal enables silicon oxide comprising a predetermined amount of alkali metal atoms to be obtained.

The thickness of the intermediate layer is not limited, and is in the range of, for example, 1 to 50 nm, preferably 1 to 30 nm, more preferably 2 to 15 nm, and even more preferably 3 to 10 nm.

So far, the compound, the composition, and the article of the present disclosure have been described in detail. The compound, the composition, the article, and the like of the present disclosure are not limited to those exemplified above.

### Examples

The present invention will now be described more specifically by way of Examples below, but the present invention is not limited to the Examples.

### (Synthetic Example 1)

First, 3.02 g of 22-tricosenoic acid, 26 mL of toluene, and 17 mL of methanol were each added, then 20 mL of trimethylsilyldiazomethane was added dropwise, and the mixture was stirred at room temperature for 3 hours. Thereafter, the mixture was concentrated under reduced pressure to give 3.11 g of a compound (1).

¹H NMR (CDCl₃, 400 MHz) δ [ppm]: 1.249-1.649 (m), 2.005-2.061 (m), 2.279-2.316 (t), 1.567-1.622 (m), 3.662 (s), 4.904-5.015 (m), 5.760-5.862 (m)

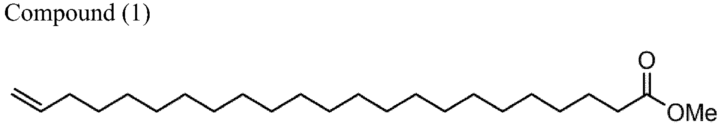

### (Synthetic Example 2)

First, 0.50 g of the compound (1) obtained in Synthetic Example 1, 10.0 mL of toluene, 0.05 mL of pyridine, and 0.3 mL of a xylene solution comprising 2% of a Pt complex of 1,3-divinyl-1,1,3,3-tetramethyldisiloxane were each added, and then 1.2 mL of 1,1,1,3,5,5,5-heptamethyltrisiloxane was added dropwise. After being stirred at room temperature for 17 hours, the mixture was purified to give 0.87 g of the following compound (2).

¹H NMR (CDCl₃, 400 MHz) δ [ppm]: 0.033-0.241 (m), 0.438-0.550 (m), 1.191-1.413 (m), 1.607-1.642 (m), 2.242-2.325 (m), 3.669 (s)

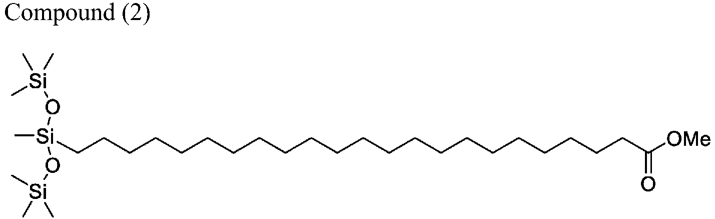

### (Synthetic Example 3)

First, 0.86 g of the compound (2) obtained in Synthetic Example 2, 5.0 mL of allylamine, and 0.20 g of 1,5,7-triazabicyclo[4.4.0]dec-5-ene were each added, and the mixture was then stirred at 75°C for 3 hours. Thereafter, the mixture was washed with an aqueous hydrochloric acid solution, dehydrated over magnesium sulfate, and concentrated under reduced pressure to give 0.72 g of a compound (3).

¹H NMR (CDCl₃, 400 MHz) δ [ppm]: 0.076-0.128 (m), 0.413-0.465 (t), 1.183-1.1.404 (m), 1.604-1.677 (m), 2.173-2.248 (t), 3.841-3.942 (m), 5.122-5.210 (m), 5.809-5.877 (m)

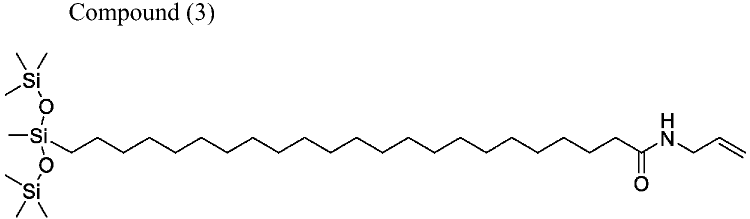

### (Synthetic Example 4)

First, 0.72 g of the compound (3) obtained in Synthetic Example 3, 6.0 mL of toluene, 0.04 mL of pyridine, and 0.26 mL of a xylene solution comprising 2% of a Pt complex of 1,3-divinyl-1,1,3,3-tetramethyldisiloxane were each added, then 1.4 mL of trimethoxysilane was added, and the mixture was stirred at room temperature for 16 hours. Thereafter, the mixture was purified to give 0.48 g of the following compound having a terminal trimethoxysilyl group (4).

¹H NMR (CDCl₃, 400 MHz) δ [ppm]: 0.054-0.149 (m), 0.425-0.464 (t), 0.628-0.681 (m), 1.181-1.402 (m), 1.544-1.768 (m), 2.125-2.164 (t), 3.558-3.646 (m)

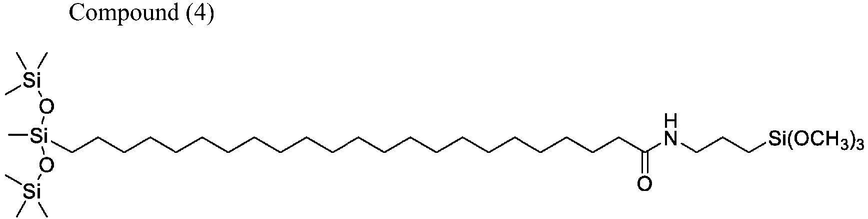

### (Synthetic Example 5)

First, 1.8 g of the compound (2), 2.01 mL of 2-allylpent-4-en-1-amine, and 0.43 g of 1,5,7-triazabicyclo[4.4.0]dec-5-ene were each added, and then the mixture was stirred at 75°C for 3 hours. Thereafter, the mixture was washed with an aqueous hydrochloric acid solution, dehydrated over magnesium sulfate, and concentrated under reduced pressure to give 1.92 g of a compound (5).

¹H NMR (CDCl₃, 400 MHz) δ [ppm]: 0.076-0.128 (m), 0.413-0.465 (t), 1.183-1.1.404 (m), 1.604-1.677 (m), 1.704-1.769 (m), 1.994-2.093 (m), 2.103-2.285 (m), 3.161-3.328 (t), 4.997-5.195 (m), 5.397-5.595 (s), 5.708-5.975 (m)

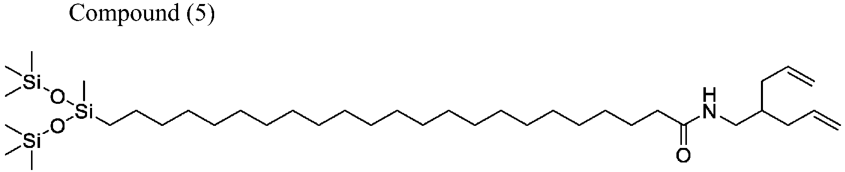

### (Synthetic Example 6)

First, 0.47 g of the compound (5), 3.5 mL of toluene, 0.014 mL of pyridine, and 0.1 mL of a xylene solution comprising 2% of a Pt complex of 1,3-divinyl-1,1,3,3-tetramethyldisiloxane were each added, then 0.52 mL of trimethoxysilane was added, and the mixture was stirred at room temperature for 3 hours. Thereafter, the mixture was purified to give 0.48 g of a compound (6).

¹H NMR (CDCl₃, 400 MHz) δ [ppm]: 0.054-0.149 (m), 0.425-0.464 (t), 0.628-0.681 (t), 1.181-1.402 (m), 1.544-1.768 (m), 2.125-2.164 (t), 3.135-3.203 (t), 3.558-3.646 (m), 5.449-5.528 (s)

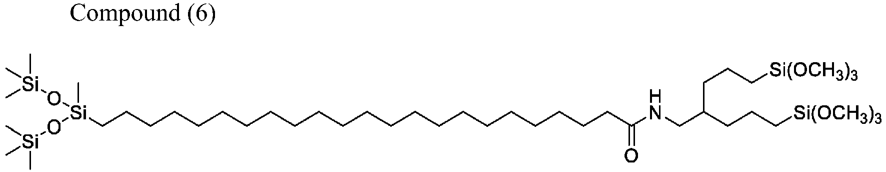

### (Synthetic Example 7)

First, 2.22 g of the compound (2) obtained in Synthetic Example 2, 12.8 ml of toluene, 0.54 g of 1,5,7-triazabicyclo[4.4.0]dec-5-ene, and 0.66 ml of diallylamine were each added, and the mixture was then stirred at 70°C for 2 hours. Thereafter, the mixture was purified to give 2.12 g of the following siloxane compound (7).

1H NMR (CDCl3, 400 MHz) δ [ppm]: -0.011 (s), 0.081 (s), 0.424-0.462 (t), 1.250 (brs), 1.600-1.672 (m), 2.281-2.319 (t), 3.862-3.873 (d), 3.976-3.990 (d), 5.088-5.210 (m), 5.710-5.806 (m)

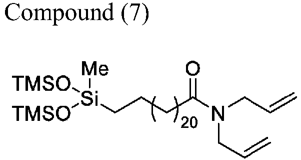

### (Synthetic Example 8)

First, 1.10 g of the siloxane compound (8) obtained in Synthetic Example 7, 6.5 ml of toluene, 0.01 g of triacetoxymethylsilane, and 0.15 ml of a xylene solution comprising 2% of a Pt complex of 1,3-divinyl-1,1,3,3-tetramethyldisiloxane were each added, then 0.64 mL of trimethoxysilane was added, and the mixture was heated to 40°C and stirred for 3 hours. Thereafter, the mixture was purified to give 1.15 g of the following siloxane compound (8).

1H NMR (CDCl3, 400 MHz) δ [ppm]: -0.014 (s), 0.077 (s), 0.420-0.458 (t), 0.558-0.610 (t), 1.247 (br s), 1.601-1.661 (m), 2.256-2.293 (t), 3.181-3.221 (t), 3.262-3.300 (t), 3.555 (s), 3.574 (s)

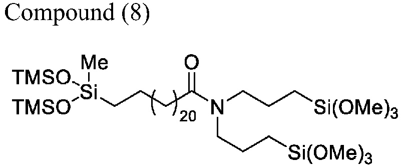

### (Synthetic Example 9)

First, 2.11 g of 22-tricosenoic acid: CH₂=CH(CH₂)₂₀COOH, 95 ml of toluene, and 1.26 g of 1,1'-carbonyldiimidazole were each added, and the mixture was stirred at room temperature for 1 hour. Thereafter, the mixture was purified to give 2.22 g of the following amide compound (9): CH₂=CH(CH₂)₂₀CO(C₃H₄N₂).

¹H NMR (CDCl₃, 400 MHz) δ [ppm]: 1.250 (s), 1.333-1.426 (m), 1.761-1.836 (m), 2.007-2.061 (dd), 2.837-2.875 (t), 4.909-5.016 (m), 5.761-5.863 (m), 7.104 (s), 7.481 (s), 8.174 (s)

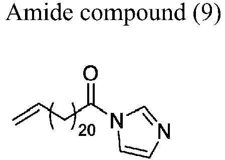

### (Synthetic Example 10)

First, 1.01 g of the amide compound (9): CH₂=CH(CH₂)₂₀CO(C₃H₄N₂) obtained in Synthetic Example 9, 6.6 ml of toluene, 0.02 g of triacetoxymethylsilane, 0.11 ml of a xylene solution comprising 2% of a Pt complex of 1,3-divinyl-1,1,3,3-tetramethyldisiloxane, and 6.6 ml of 1,1,1,3,5,5,5-heptamethyltrisiloxane were each added, and the mixture was stirred at room temperature for 3 hours. Thereafter, the mixture was purified to give 1.33 g of the following siloxane compound (10):

((CH₃)₃SiO)₂SiCH₃(CH₂)₂₂CO(C₃H₄N₂).

¹H NMR (CDCl₃, 400 MHz) δ [ppm]: -0.011 (s), 0.081 (s), 0.422-0.459 (dd), 1.250 (s), 1.370-1.426 (m), 1.761-1.836 (m), 2.836-2.873 (t), 7.102 (s), 7.480 (s), 8.167 (s)

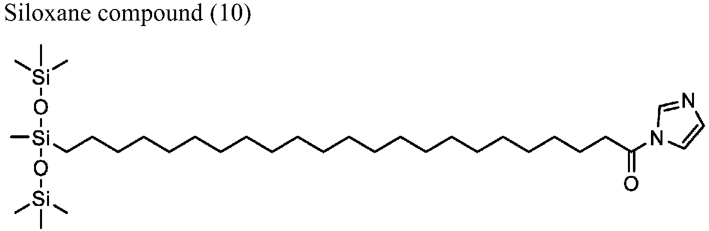

### (Synthetic Example 11)

First, 1.75 g of the amide compound (10) obtained in Synthetic Example 10 and 10 ml of toluene were added, the mixture was stirred, 0.82 ml of 2,2-diallylpent-4-en-1-amine was added dropwise thereto, and the mixture was stirred at room temperature for 16 hours. Thereafter, the mixture was purified to give 1.2 g of the following trisiloxane-containing amide compound (11).

¹H NMR (CDCl₃, 400 MHz) δ [ppm]: -0.069-0.133 (m), 0.422-0.461 (t), 1.248-1.427 (m), 1.569-1.650 (m), 2.020-2.039 (d), 2.139-2.177 (t), 3.186-3.201 (d), 5.068-5.114 (m), 5.520-5.580 (m), 5.810-5.916 (m),

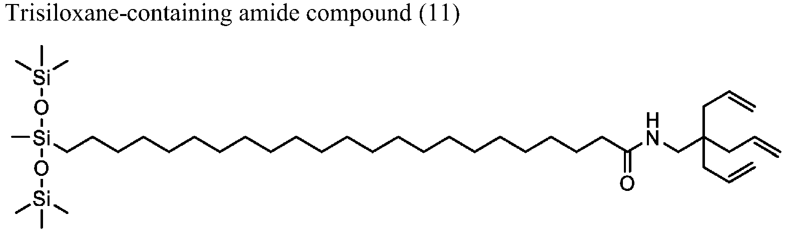

### (Synthetic Example 12)

First, 1.2 g of the trisiloxane-containing amide compound (11) obtained in Synthetic Example 11, 5 ml of toluene, 0.05 ml of a xylene solution comprising 2% of a Pt complex of 1,3-divinyl-1,1,3,3-tetramethyldisiloxane, and 0.04 ml of aniline were added, the mixture was stirred, 1.3 ml of trimethoxysilane was added dropwise, and then the mixture was heated to 60°C and stirred for 16 hours. Thereafter, volatile components were distilled off under reduced pressure, and the mixture was purified to give 1.8 g of the following trisiloxane-containing trimethoxysilane compound (12).

¹H NMR (CDCl₃, 400 MHz) δ [ppm]: -0.075-0.128 (m), 0.417-0.455 (t), 0.575-0.613 (t), 1.092-1.394 (m), 1.583-1.634 (m), 2.107-2.170 (t), 3.092-3.108 (d), 3.472-3.611 (m), 5.696-5.726 (m)

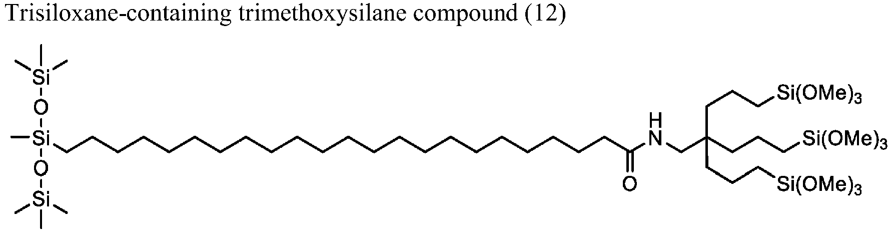

### (Synthetic Example 13)

First, 2.00 g of [(CH₃)₃SiO]₂CH₃SiO(Si(CH₃)₂O)ₙSi(CH₃)₂CH₂CH₂CH₂CH₂CH₂CH₂CH₂CH₂CH₂C H₂CH₂CH₂CH₂CH₂CH₂CH₂CH₂CH₂CH₂CH₂CH₂CH₂CONHCH₂CH(CH₂CH=CH₂)₂ (n≈26), 10 ml of toluene, 0.05 ml of a xylene solution comprising 2% of a Pt complex of 1,3-divinyl-1,1,3,3-tetramethyldisiloxane, and 0.01 ml of aniline were added, the mixture was stirred, 0.24 ml of trimethoxysilane was added dropwise at room temperature, and then the mixture was heated to 45°C and stirred for 2 hours. Thereafter, volatile components were distilled off under reduced pressure, and the mixture was purified to give 2.0 g of a compound (13):

[(CH₃)₃SiO]₂CH₃SiO(Si(CH₃)₂O)ₙSi(CH₃)₂CH₂CH₂CH₂CH₂CH₂CH₂CH₂CH₂CH₂C H₂CH₂CH₂CH₂CH₂CH₂CH₂CH₂CH₂CH₂CH₂CH₂CH₂CONHCH₂CH[CH₂CH₂CH₂Si (OCH₃)₃]₂ (n≈26).

¹H-NMR (CDCl₃, 400MHz) δ [ppm]:-0.089-0.207 (m), 0.492-0.531 (m), 0.595-0.635 (t), 1.200-1.308 (m), 1.378-1.681 (m), 2.123-2.160 (t), 3.157-3.187 (t), 3.517-3.592 (m), 3.494-3.602 (m), 5.465-5.492 (m)

### (Synthetic Example 14)

First, 4.03 g of perfluorophenyl 22-tricosenoate and 5.0 ml of THF were each added, the mixture was stirred, 1.30 ml of dimethylchlorosilane and 0.080 ml of a xylene solution comprising 2% of a Pt complex of 1,3-divinyl-1,1,3,3-tetramethyldisiloxane were added at room temperature, and the mixture was stirred at room temperature for 16 hours. Thereafter, volatile components were distilled off under reduced pressure to give 4.6 g of a compound (14-1): chlorodimethylsilyltricosanoic acid ester.

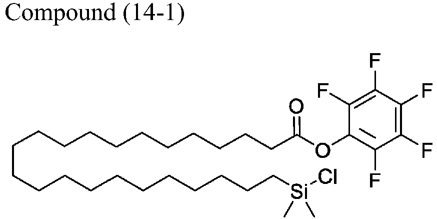

In a separate reactor, 1.33 g of hexamethyldisiloxane and 10 ml of THF were each added, the mixture was stirred, and, in a 30°C water bath, 2.57 ml of a 15% n-butyllithium solution in hexane was added. After cooling in an ice bath, 17.79 g of hexamethylcyclotrisiloxane and 20 ml of THF were added to the solution, and the mixture was stirred for 8 more hours. While cooling in an ice bath, 2.3 g of the previously synthesized compound (14-1), i.e., chlorodimethylsilyltricosanoic acid ester, was added as a 10 ml THF solution, the mixture was stirred for 1 hour, moreover, 1.50 g of 2-allylpent-4-ene-1-amine was added, and the mixture was stirred for 16 hours while being retained in an ice bath. Subsequently, the reaction solution was partially purified to give 2.8 g of a compound (14-2): CH₃[Si(CH₃)₂O]ₙSi(CH₃)₂(CH₂)₂₂CONH-CH₂CH[CH₂CH=CH₂]₂. The average value of n is 57.

¹H NMR (CDCl₃, 400 MHz) δ [ppm]: -0.089 - 0.211 (m), 0.494 - 0.533 (t), 1.242 - 1.335 (m), 1.586 - 1.623 (m), 1.692 - 1.758 (m), 2.000 - 2.160 (m), 3.193 - 3.224 (t), 5.023 - 5.077 (m), 5.455 (br), 5.728 - 5.832 (m)

### (Synthetic Example 15)

First, 2.74 g of the compound (14-2), 5.5 mL of toluene, 14 µL of pyridine, and 70 µL of a xylene solution comprising 2% of a Pt complex of 1,3-divinyl-1,1,3,3-tetramethyldisiloxane were each added, then 0.29 mL of trimethoxysilane was added, and the mixture was stirred at room temperature for 16 hours. Thereafter, the mixture was purified to give 2.63 g of a compound (15): CH₃[Si(CH₃)₂O]ₙSi(CH₃)₂(CH₂)₂₂CONH-CH₂CH[CH₂CH₂CH₂Si(OCH₃)₃]₂. The average number of dimethylsiloxane repeating units is 57.

¹H NMR (CDCl₃, 400 MHz) δ [ppm]: -0.104-0.196 (m), 0.498 (t), 0.604 (t), 1.226-1.339 (m), 1.404 (quin), 1.568-1.664 (m), 2.130 (t), 3.160 (t), 3.496-3.584 (m), 5.471 (br)

### (Synthetic Example 16)

First, 2.00 g of [(CH₃)₃SiO]₂CH₃SiO(Si(CH₃)₂O)ₙSi(CH₃)₂CH₂CH₂CH₂CH₂CH₂CH₂CH₂CH₂CH₂C H₂CH₂CH₂CH₂CH₂CH₂CH₂CH₂CH₂CH₂CH₂CH₂CH₂CONHCH₂C(CH₂CH=CH₂)₃ (n≈18), 10 ml of toluene, 0.06 ml of a xylene solution comprising 2% of a Pt complex of 1,3-divinyl-1,1,3,3-tetramethyldisiloxane, and 0.01 ml of aniline were added, the mixture was stirred, 0.76 ml of trimethoxysilane was added dropwise at room temperature, and then the mixture was heated to 45°C and stirred for 2 hours. Thereafter, volatile components were distilled off under reduced pressure, and the mixture was purified to give 2.3 g of a compound (16):

[(CH₃)₃SiO]₂CH₃SiO(Si(CH₃)₂O)ₙSi(CH₃)₂CH₂CH₂CH₂CH₂CH₂CH₂CH₂CH₂CH₂C H₂CH₂CH₂CH₂CH₂CH₂CH₂CH₂CH₂CH₂CH₂CH₂CH₂CONHCH₂C[CH₂CH₂CH₂Si( OCH₃)₃]₃ (n≈18).

¹H-NMR (CDCl₃, 400MHz) δ [ppm]:-0.091-0.208 (m), 0.490-0.529 (m), 0.570-0.608 (t), 1.147-1.386 (m), 1.514-1.685 (m), 2.125-2.164 (t), 3.087-3.103 (t), 3.513-3.587 (m), 5.680-5.709 (m)

### (Synthetic Example 17)

First, 4.03 g of perfluorophenyl 22-tricosenoate and 5.0 ml of THF were each added, the mixture was stirred, 1.30 ml of dimethylchlorosilane and 0.080 ml of a xylene solution comprising 2% of a Pt complex of 1,3-divinyl-1,1,3,3-tetramethyldisiloxane were added at room temperature, and the mixture was stirred at room temperature for 16 hours. Thereafter, volatile components were distilled off under reduced pressure to give 4.6 g of a compound (17-1): chlorodimethylsilyltricosanoic acid ester.

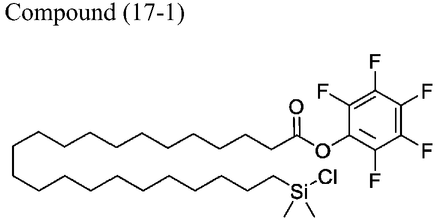

In a separate reactor, 0.63 g of hexamethyldisiloxane and 5 ml of THF were each added, the mixture was stirred, and 1.29 ml of a 15% n-butyllithium solution in hexane was added at room temperature. After cooling in an ice bath, 8.90 g of hexamethylcyclotrisiloxane and 10 ml of THF were added to the solution, and the mixture was stirred for 8 more hours. While cooling in an ice bath, 1.2 g of the previously synthesized compound (F-1), i.e., chlorodimethylsilyltricosanoic acid ester, was added as a 5 ml THF solution, the mixture was stirred for 1 hour, moreover, 1.03 g of 2,2-diallylpent-4-ene-1-amine was added, and the mixture was stirred for 16 hours while being retained in an ice bath. Subsequently, the reaction solution was partially purified to give 3.1 g of a compound (17-2): CH₃[Si(CH₃)₂O]ₙSi(CH₃)₂(CH₂)₂₂CONH-CH₂C[CH₂CH=CH₂]₃. The average value of n is 52.

¹H NMR (CDCl₃, 400 MHz) δ [ppm]: -0.087 - 0.212 (m), 0.498 - 0.536 (t), 1.244 - 1.338 (m), 1.585 - 1.620 (m), 2.017 - 2.036 (d), 2.129 - 2.167 (t), 3.183 - 3.198 (d), 5.062 - 5.109 (m), 5.502 (br), 5.807 - 5.912 (m)

### (Synthetic Example 18)

First, 3.02 g of the compound (17-2), 6 mL of toluene, 16 µL of pyridine, and 80 µL of a xylene solution comprising 2% of a Pt complex of 1,3-divinyl-1,1,3,3-tetramethyldisiloxane were each added, then 0.51 mL of trimethoxysilane was added, and the mixture was stirred at room temperature for 16 hours. Thereafter, the mixture was purified to give 2.63 g of a compound (18):

CH₃[Si(CH₃)₂O]ₙSi(CH₃)₂(CH₂)₂₂CONH-CH₂C[CH₂CH₂CH₂Si(OCH₃)₃]₃.

The average number of dimethylsiloxane repeating units is 52.

¹H NMR (CDCl₃, 400 MHz) δ [ppm]: -0.104-0.195 (m), 0.498 (t), 0.578 (t), 1.136-1.376 (m), 1.467-1.685 (m), 2.133 (t), 3.084 (d), 3.356-714 (m), 5.681 (br)

### (Synthetic Example 19)

First, 0.32 g of the compound (5), 2.4 mL of toluene, 0.010 mL of pyridine, and 0.03 mL of a xylene solution comprising 2% of a Pt complex of 1,3-divinyl-1,1,3,3-tetramethyldisiloxane were each added, then 0.09 mL of trimethoxysilane was added, and the mixture was stirred at room temperature for 3 hours. Thereafter, the mixture was purified to give 0.26 g of a compound (19), which is a composition of three components: [(CH₃)₃SiO]₂CH₃Si-CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH(CH₂CH=CH₂)[CH₂CH₂CH₂Si(OCH₃)₃], [(CH₃)₃SiO]₂CH₃Si-CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH(CH₂CH=CH₂)₂, and [(CH₃)₃SiO]₂CH₃Si-CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH[CH₂CH₂CH₂Si(OCH₃)₃]₂.

### (Synthetic Example 20)

First, 0.98 g of the compound (14-2), 2.0 mL of toluene, 5 µL of pyridine, and 13 µL of a xylene solution comprising 2% of a Pt complex of 1,3-divinyl-1,1,3,3-tetramethyldisiloxane were each added, then 0.03 mL of trimethoxysilane was added, and the mixture was stirred at room temperature for 16 hours. Thereafter, the mixture was purified to give 0.83 g of a compound (20), which is a composition of three components: CH₃[Si(CH₃)₂O]ₙSi(CH₃)₂(CH₂)₂₂CONH-CH₂CH(CH₂CH=CH₂)[CH₂CH₂CH₂Si(OCH₃)₃], CH₃[Si(CH₃)₂O]ₙSi(CH₃)₂(CH₂)₂₂CONH-CH₂CH(CH₂CH=CH₂)₂, CH₃[Si(CH₃)₂O]ₙSi(CH₃)₂(CH₂)₂₂CONH-CH₂CH[CH₂CH₂CH₂Si(OCH₃)₃]₂. The average number of dimethylsiloxane repeating units is 57.

### (Synthetic Example 21)

First, 2.0 g of CH₃CH₂CH₂CH₂-[Si(CH₃)₂O]ₙSi(CH₃)₂-CH₂CH₂CH₂-O-CH₂CH₂OH (average molecular weight 4,800) and 0.48 mL of (3-isocyanatopropyl)trimethoxysilane were added, and the mixture was stirred at 55°C for 1 hour, then at 65°C for 3 hours, and then at 70°C for 5 hours. Thereafter, the mixture was washed with methanol and then concentrated to give 1.5 g of a compound (21): CH₃CH₂CH₂CH₂-[Si(CH₃)₂O]ₙSi(CH₃)₂-CH₂CH₂CH₂-O-CH₂CH₂O-C(=O)NHCH₂CH₂CH₂Si(OCH₃)₃. The average number of dimethylsiloxane repeating units is 60.

¹H-NMR (400 MHz, CHLOROFORM-D) δ 4.87 (s, 1H), 4.20-4.18 (t, 2H), 3.60-3.53 (m, 9H), 3.43-3.40 (t, 2H), 3.30-3.26 (t, 2H), 3.18-3.13 (m, 2H), 1.75-1.69 (m, 2H), 1.64-1.58 (m, 2H), 1.34-1.24 (m, 4H), 0.89-0.85 (t, 3H), 0.69-0.60 (m, 2H), 0.54-0.49 (m, 4H), 0.21 - -0.09 (m)

### (Synthetic Example 22)

First, 2.0 g of CH₃CH₂CH₂CH₂-[Si(CH₃)₂O]ₙSi(CH₃)₂-CH₂CH₂CH₂-O-CH₂-C(CH₂CH₃)(CH₂OH)₂ (average molecular weight 4,700) and 0.49 mL of (3-isocyanatopropyl)trimethoxysilane were added, and the mixture was stirred at 40°C for 2.5 hours, then at 55°C for 3.5 hours, and then at 60°C for 6 hours. Thereafter, the mixture was washed with methanol and then concentrated to give 1.5 g of a compound (22): CH₃CH₂CH₂CH₂-[Si(CH₃)₂O]ₙSi(CH₃)₂-CH₂CH₂CH₂-O-CH₂-C(CH₂CH₃)[CH₂OC(=O)NHCH₂CH₂CH₂Si(OCH₃)₃]₂. The average number of dimethylsiloxane repeating units is 63.

¹H-NMR (400 MHz, CHLOROFORM-D) δ 4.83 (s, 2H), 4.01-3.94 (m, 6H), 3.57-3.49 (m, 18H), 3.32-3.24 (m, 2H), 3.16-3.12 (m, 4H), 1.60-1.54 (m, 6H), 1.40-1.24 (m, 6H), 0.90-0.82 (t, 6H), 0.66-0.58 (m, 4H), 0.54-0.47 (m, 4H), 0.21 - -0.09 (m)

### <Preparation of surface-treating agent>

Surface-treating agents were prepared by combining compounds as shown in Table 1 below and dissolving them in a solvent. Heptane was used as a solvent, and the solid content based on the solvent was 20% by weight. The mixture was stirred at room temperature for 30 minutes to thoroughly mix components A and B, and left to stand for 12 hours.

**[Table 1]**

| Surface-treating agent number | Component A | Component B | Proportion of component A | Presence of amide-bonded H in component B |
|---|---|---|---|---|
| | | | % by weight | |
| Surface-treating agent 1 | Compound 4 | Compound 6 | 90 | Yes |
| Surface-treating agent 2 | Compound 4 | Compound 6 | 60 | Yes |
| Surface-treating agent 3 | Compound 4 | Compound 6 | 45 | Yes |
| Surface-treating agent 4 | Compound 4 | Compound 6 | 30 | Yes |
| Surface-treating agent 5 | Compound 4 | Compound 8 | 75 | No |
| Surface-treating agent 6 | Compound 4 | Compound 8 | 50 | No |
| Surface-treating agent 7 | Compound 4 | Compound 8 | 25 | No |
| Surface-treating agent 8 | Compound 4 | Compound 12 | 50 | Yes |
| Surface-treating agent 9 | Compound 4 | - | 100 | - |
| Surface-treating agent 10 | Compound 6 | - | 100 | - |
| Surface-treating agent 11 | Compound 8 | - | 100 | - |
| Surface-treating agent 12 | Compound 12 | - | 100 | - |
| Surface-treating agent 13 | Compound 13 | Compound 16 | 60 | Yes |
| Surface-treating agent 14 | Compound 15 | Compound 18 | 60 | Yes |
| Surface-treating agent 15 | Compound 19 | Compound 6 | 60 | Yes |
| Surface-treating agent 16 | Compound 20 | Compound 15 | 60 | Yes |
| Surface-treating agent 17 | Compound 21 | Compound 22 | 60 | Yes |

### <Na-containing, intermediate layer-forming material>

First, 2.2 g of sodium hydroxide (manufactured by FUJIFILM Wako Pure Chemical Corporation) was dissolved in 24 g of distilled water to give a 8.4% by mass aqueous sodium hydroxide solution. Then, 24 g of this 8.4% by mass aqueous sodium hydroxide solution and 20 g of MS gel (M.S. GEL D-100-60A (manufactured by AGC Si-Tech Co., Ltd.)) were mixed so that the aqueous sodium hydroxide solution was absorbed into the MS gel. The MS gel that had absorbed the aqueous sodium hydroxide solution was dried at 25°C for 8 hours, then molded with a tableting machine (4 MPa for 1 minute), and fired at 1,000°C for 1 hour to give a formed article 1 (pellets).

### <Formation of intermediate layer and surface-treating layer>

### (Na-containing SiO₂ intermediate layer)

The surface-treating agent prepared above was vacuum-deposited onto chemically tempered glass (Gorilla Glass, manufactured by Corning Incorporated, thickness 0.7 mm). Specifically, a molybdenum boat in a vacuum deposition system was filled with 0.1 g of the surface-treating agent, and the vacuum deposition system was evacuated to a pressure of 3.0 × 10⁻³ Pa or lower. Thereafter, vapor deposition by the electron beam deposition scheme was performed using the formed article 1 to form a Na-containing silicon dioxide film having a thickness of 5 nm, followed by heating the boat by the resistance heating scheme to form a surface-treating layer. Thereafter, heat treatment was performed in an oven at 150°C for 2 hours to give a surface-treating layer.

### (SiO₂ intermediate layer)

The surface-treating agent prepared above was vacuum-deposited onto chemically tempered glass (Gorilla Glass, manufactured by Corning Incorporated, thickness 0.7 mm). Specifically, a molybdenum boat in the vacuum deposition device was filled with 0.1 g of the surface-treating agent, and the vacuum deposition device was evacuated to a pressure of 3.0 × 10⁻³ Pa or lower. Thereafter, a silicon dioxide film having a thickness of 5 nm was formed, followed by heating the boat by the resistance heating scheme to form a surface-treating layer. Thereafter, heat treatment was performed in an oven at 150°C for 2 hours to give a surface-treating layer.

### <Evaluation>

### [Measurement of oil droplet contact angle after film formation]

The surface of a substrate provided with the surface-treating layer prepared by the above method was thoroughly wiped with Kimwipe S-200 (product name, manufactured by NIPPON PAPER CRECIA CO., LTD.) that had been impregnated with ethanol, and then the oil contact angle was measured.

### (Method for measuring contact angle)

For contact angle measurement, a fully automatic contact angle meter DropMaster 700 (manufactured by Kyowa Interface Science Co., Ltd.) was used in an environment of 25°C. Specifically, the substrate having the measurement target, i.e., the surface-treating layer, was placed horizontally, 2 µL of oleic acid was dripped from a microsyringe onto the surface, and a static image was taken with a video microscope one second after the dripping of water to thereby measure the static contact angle. The static contact angle was measured at five different points on the surface-treating layer of the substrate, and the average value calculated therefrom was used.

### [Evaluation of fingerprint removability by wiping]

Concerning the surface-treating layer formed above, fingerprint removability by wiping was evaluated according to the following procedure.

### (Adhesion of artificial fingerprint stamp)

After the surface-treating layer was formed, excessive materials on the surface were wiped off with ethanol. An artificial fingerprint solution was stamped onto the surface of the surface-treating layer.

Note that the composition of the artificial fingerprint solution and the stamping conditions are shown below.

### (Method for preparing artificial fingerprint solution)

The preparation of the artificial fingerprint solution was performed as follows in reference to JP 2006-120317 A.

First, 1.6 g of KANTO (Japanese) loam (JIS Test Powders 1 (Class 11), The Association of Powder Process Industry and Engineering, Japan) and 32 g of methoxypropanol (manufactured by Tokyo Chemical Industry Co., Ltd.) were mixed. In addition, 4 g of triolein (manufactured by Tokyo Chemical Industry Co., Ltd.) was added, and the mixture was stirred.

### (Method for preparing artificial fingerprint sheet)

A glass plate (Gorilla Glass, manufactured by Corning Incorporated, thickness of 0.7 mm) was UV-cleaned for 10 minutes. The glass plate was spin-coated (5,000 rpm for 10 seconds) with 1.1 mL of the artificial fingerprint solution prepared above. Thereafter, the glass was heated in a drying oven at 60°C for 3 minutes.

### (Stamping conditions)

### Stamp: Silicone rubber (imprinted surface Φ16 mm)

The stamp was pressed onto the artificial fingerprint sheet prepared above with a load of 5 kgw for 10 seconds to transfer the artificial fingerprint. The stamp onto which the artificial fingerprint had been transferred was pressed against a sample for evaluating removability by wiping with a load of 5 kgw for 10 seconds to allow the artificial fingerprint solution to adhere to the sample.

### (Method for wiping off artificial fingerprint)

The surface-treating layer imprinted with the artificial fingerprint was subjected to 10 times of a wiping operation using a rubbing tester (manufactured by Imoto machinery Co., Ltd.) under the following conditions.
- Wiping method:
   Friction block: BEMCOT M-3II (product name, manufactured by Asahi Kasei Corp.)
   Moving distance (one way): 60 mm
   Moving speed: 8,400 mm/min
   Load: 1,000 g/3 cm²

After the wiping operation described above, the degree of artificial fingerprint adhesion in the stamped area was visually checked and numerically graded.

The evaluation criteria for fingerprint removability by wiping are as follows:
(Evaluation-judgment criteria for fingerprint removability by wiping)
5 Not observed
4 Barely observed
3 Only faintly observed
2 Observed
1 Clearly observed

### [Evaluation of abrasion resistance]

### (Method for testing abrasion resistance)

After the surface-treating layer was formed, excessive materials on the surface were wiped off. Then, the following friction block was brought into contact with the formed surface-treating layer, a load of 5 N was applied thereto, and the friction block was moved back and forth at a speed of 40 mm/sec while applying the load. The static water contact angle (°) was measured after 100 friction cycles.

### - Measurement criteria

80° or higher: Excellent (double circle)
70° or higher: Good (circle)
Lower than 70°: Poor (cross mark)

### - Friction block

The surface of the silicone rubber processed product shown below was covered with cotton impregnated with artificial sweat having the composition shown below, and the product was used as a friction block.
- Silicone rubber processed product:
   Obtained by processing Silicone Rubber Stopper SR-51 manufactured by Tigers Polymer Corporation into a cylinder having a diameter of 1 cm and a thickness of 1 cm.
- Composition of artificial sweat:
   Anhydrous disodium hydrogen phosphate: 2 g
   Sodium chloride: 20 g
   85% Lactic acid: 2 g
   Histidine hydrochloride: 5 g
   Distilled water: 1 kg

### (Method for measuring contact angle)

For contact angle measurement, a fully automatic contact angle meter DropMaster 700 (manufactured by Kyowa Interface Science Co., Ltd.) was used in an environment of 25°C. Specifically, the substrate having the measurement target, i.e., the surface-treating layer, was placed horizontally, 2 µL of water was dripped from a microsyringe onto the surface, and a static image was taken with a video microscope one second after the dripping of water to thereby measure the static contact angle. The static contact angle was measured at five different points on the surface-treating layer of the substrate, and the average value calculated therefrom was used.

Table 2 below shows the results of evaluating fingerprint removability by wiping and evaluating abrasion resistance.

**[Table 2]**

| | Surface-treating agent number | Intermediate layer | Oleic acid contact angle after film formation | Abrasion resistance | Fingerprint removability by wiping |
|---|---|---|---|---|---|
| | | | ° | | |
| Example 1 | Surface-treating agent 1 | Na-containing silicon dioxide film | 57.5 | ○ | 5 |
| Example 2 | Surface-treating agent 2 | Na-containing silicon dioxide film | 57.5 | ○ | 5 |
| Example 3 | Surface-treating agent 3 | Na-containing silicon dioxide film | 57.3 | ○ | 5 |
| Example 4 | Surface-treating agent 4 | Na-containing silicon dioxide film | 56.2 | ⊚ | 4 |
| Example 5 | Surface-treating agent 5 | Na-containing silicon dioxide film | 56.7 | ○ | 4 |
| Example 6 | Surface-treating agent 6 | Na-containing silicon dioxide film | 55.7 | ⊚ | 4 |
| Example 7 | Surface-treating agent 7 | Na-containing silicon dioxide film | 54.7 | ⊚ | 3 |
| Example 8 | Surface-treating agent 8 | Na-containing silicon dioxide film | 56.9 | ○ | 4 |
| Comparative Example 1 | Surface-treating agent 9 | Na-containing silicon dioxide film | 57.8 | × | 5 |
| Comparative Example 2 | Surface-treating agent 10 | Na-containing silicon dioxide film | 52.1 | ⊚ | 2 |
| Comparative Example 3 | Surface-treating agent 11 | Na-containing silicon dioxide film | 51.5 | ⊚ | 2 |
| Comparative Example 4 | Surface-treating agent 12 | Na-containing silicon dioxide film | 45.1 | ⊚ | 1 |
| Example 9 | Surface-treating agent 2 | Na-containing silicon dioxide film | 56.8 | ○ | 5 |
| Example 10 | Surface-treating agent 3 | Silicon dioxide film | 43.5 | ○ | 4 |
| Comparative Example 5 | Surface-treating agent 9 | Silicon dioxide film | 57.8 | × | 5 |
| Comparative Example 6 | Surface-treating agent 10 | Silicon dioxide film | 52.1 | ○ | 2 |
| Example 11 | Surface-treating agent 13 | Na-containing silicon dioxide film | 54.2 | ⊚ | 4 |
| Example 12 | Surface-treating agent 14 | Na-containing silicon dioxide film | 53.2 | ⊚ | 4 |
| Example 13 | Surface-treating agent 15 | Na-containing silicon dioxide film | 53.3 | ⊚ | 3 |
| Example 14 | Surface-treating agent 16 | Na-containing silicon dioxide film | 53 | ⊚ | 4 |
| Example 15 | Surface-treating agent 17 | Na-containing silicon dioxide film | 53.2 | ○ | 4 |

### Industrial Applicability

The composition of the present disclosure is capable of forming a surface-treating layer that exhibits high abrasion durability and high fingerprint removability by wiping. Accordingly, the composition of the present disclosure can be suitably utilized in a variety of applications.

## Claims

1. A composition comprising:
a silane compound (A) represented by the following formula (A):
R^{A}_{α1}-X^{A}-R^{ASi}_{α2} (A)
wherein
R^{A} each independently represents a monovalent group comprising no fluorine atom and comprising one or more Si atoms to which neither a hydroxyl group nor a hydrolyzable group is directly bonded,
X^{A} represents an organic group having a valence of α1+α2,
R^{ASi} each independently represents a monovalent group comprising a Si atom to which a hydroxyl group or a hydrolyzable group is bonded,
α1 each independently represents an integer of 1 to 9, and
α2 each independently represents an integer of 1 to 9; and
a silane compound (B) represented by the following formula (B):
R^{B}_{β1}-X^{B}-R^{BSi}_{β2} (B)
wherein
R^{B} each independently represents a monovalent group comprising no fluorine atom and comprising one or more Si atoms to which neither a hydroxyl group nor a hydrolyzable group is directly bonded,
X^{B} represents an organic group having a valence of β1+β2,
R^{BSi} each independently represents a monovalent group comprising a Si atom to which a hydroxyl group or a hydrolyzable group is bonded,
β1 each independently represents an integer of 1 or more, and
β2 each independently represents an integer of 1 or more,
wherein the number of Si atoms which are comprised in -(R^{BSi})_{β2} and to which a hydroxyl group or a hydrolyzable group is bonded is greater than the number of Si atoms which are comprised in -(R^{ASi})_{α2} and to which a hydroxyl group or a hydrolyzable group is bonded.

2. The composition according to claim 1, wherein R^{A} and R^{B} are each independently:
a group represented by the following formula (1):
R^{s1}-R^{S}-R^{s2}_{q}- (1)
wherein
R^{s1} represents a hydrocarbon group or formula (2),
R^{S} each independently at each occurrence represents a divalent linear organosiloxane group,
R^{s2} represents -SiR^{s3}₂-,
R^{s3} each independently at each occurrence represents a hydrocarbon group, and
q is each independently 0 or 1; or
a group represented by the following formula (2):
R^{s4}ₙₐR^{s5}₃₋ₙₐSi-Oₚ- (2)
wherein
R^{s4} is each independently a group represented by -(R^{s7}-SiR^{s6}₂)ₘₐ₁-R^{s6},
R^{s7} is each independently an oxygen atom or a C₁₋₆ alkylene group,
R^{s6} is each independently a hydrocarbon group or R^{s4'},
R^{s4'} has the same meaning as R^{s4},
ma1 each independently represents an integer of 1 to 5,
provided that, in R^{s4}, the number of R^{s4***'***} is 20 or less,
R^{s5} each independently represents a hydrocarbon group,
p is 0 or 1, and
na represents an integer of 1 to 3.

3. The composition according to claim 2, wherein R^{S} is a group represented by the following formula: 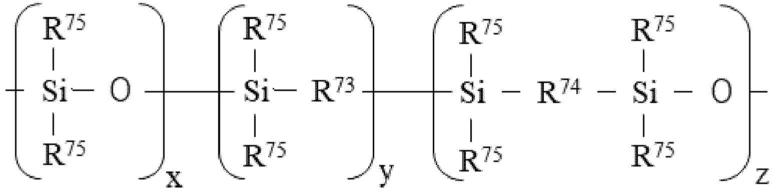 wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted phenylene group or naphthylene group,
R⁷⁸ is each independently a single bond or a C₁₋₆ alkylene group,
R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula.

4. The composition according to any one of claims 1 to 3, wherein R^{A} and R^{B} have the same structure.

5. The composition according to any one of claims 1 to 4, wherein α1 and β1 are equal.

6. The composition according to any one of claims 1 to 5, wherein α2 is 1.

7. The composition according to any one of claims 1 to 6, wherein R^{ASi} and R^{BSi} are each independently a group represented by the following formula (S1), (S2), (S3), (S4), or (S5): 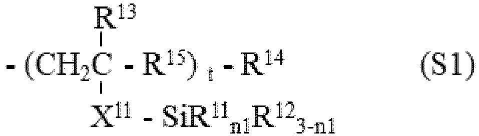
- SiR¹¹ₙ₁^{R12}₃₋ₙ₁ (S2)
- SiR^{a1}ₖ₁R^{b1}ₗ₁R^{c1}ₘ₁ (S3)
- CR^{d1}ₖ₂R^{e1}ₗ₂R^{f1}ₘ₂ (S4)
- NR^{g1}R^{h1} (S5)
wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently a divalent organic group,
R²¹ is each independently -Z^{1***'***}-SiR^{21'}_{p1'}R^{22'}_{q1'}R^{23'}_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
l1 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2***'***}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

8. The composition according to any one of claims 1 to 7, wherein R^{ASi} is each independently a group represented by the formula (S2).

9. The composition according to any one of claims 1 to 8, wherein the content of the silane compound (B) is 0.1% by mass or more based on 100% by mass of the total amount of the composition.

10. The composition according to any one of claims 1 to 9, wherein X^{A} and X^{B} are each independently:
a group represented by:
-(X¹²¹)ₐ₀-[(X¹¹¹)ₐ₁-(X¹¹²)ₐ₂]-
wherein
X¹²¹ is R⁶¹_{b1}R⁶²_{3-b1}C-, R⁶³_{b2}R⁶⁴_{3-b2}Si-, or R⁶⁵₂N-,
R⁶¹ is a single bond or a divalent organic group,
R⁶² is a hydrogen atom or a monovalent organic group,
R⁶³ is a single bond or a divalent organic group,
R⁶⁴ is a hydrogen atom or a monovalent organic group,
R⁶⁵ is a divalent organic group,
b1 is 1 to 3,
b2 is 1 to 3,
X¹¹¹ is a single bond or a divalent organic group,
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, -S-, or R^{S},
R⁴¹ is a hydrogen atom, an oxyalkylene-containing group, or a C₁₋₆ alkyl group,
R^{S} is a group represented by the following formula: 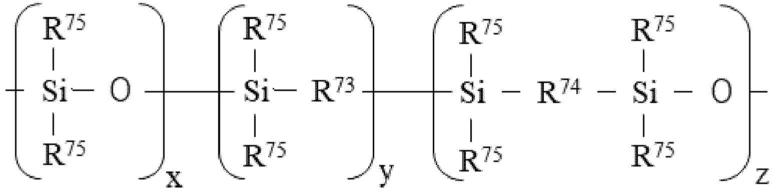 (wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted phenylene group or naphthylene group,
R⁷⁸ is each independently a single bond or a C₁₋₆ alkylene group,
R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula),
a0 is 0 or 1,
a1 is an integer of 1 to 5,
a2 is an integer of 0 to 5, and
the occurrence order of the respective repeating units enclosed in parentheses provided with a1 or a2 is not limited in the formula; or
a group represented by formula (X^{A1}): 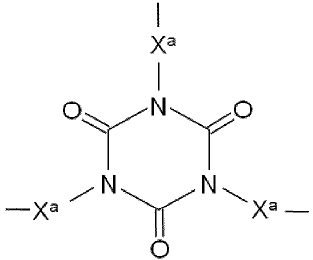 wherein X^{a} is each independently a single bond or a divalent linking group.

11. The composition according to any one of claims 1 to 10, wherein X^{A} and X^{B} are each independently a divalent organic group comprising an alkylene group having 10 or more carbon atoms.

12. The composition according to any one of claims 1 to 11, wherein the silane compound (A) and the silane compound (B) are one or more compounds selected from the following group:
CH₃-[Si(CH₃)₂O]ₙ₁Si(CH₃)₂-(CH₂)_{H1}-C(=O)NHCH₂CH₂CH₂Si(OCH₃)₃
CH₃CH₂CH₂CH₂-[Si(CH₃)₂O]ₙ₁Si(CH₃)₂-(CH₂)_{H1}-C(=O)NHCH₂CH₂CH₂Si(OCH₃)₃
[(CH₃)₃SiO)]₂(CH₃)Si-O-[Si(CH₃)₂O]ₙ₁Si(CH₃)₂-(CH₂)_{H1}- C(=O)NHCH₂CH₂CH₂Si(OCH₃)₃
[(CH₃)₃SiO)]₃Si-O-[Si(CH₃)₂O]ₙ₁Si(CH₃)₂-(CH₂)_{H1}- C(=O)NHCH₂CH₂CH₂Si(OCH₃)₃
CH₃-[Si(CH₃)₂O]ₙ₁Si(CH₃)₂-(CH₂)_{H1}-O-(CH₂)_{H2}-C(=O)NHCH₂CH₂CH₂Si(OCH₃)₃
CH₃CH₂CH₂CH₂-[Si(CH₃)₂O]ₙ₁Si(CH₃)₂-(CH₂)_{H1}-O-(CH₂)_{H2}- C(=O)NHCH₂CH₂CH₂Si(OCH₃)₃
CH₃-[Si(CH₃)₂O]ₙ₁Si(CH₃)₂-(CH₂)_{H1}-Si(OCH₃)₃
CH₃CH₂CH₂CH₂-[Si(CH₃)₂O]ₙ₁Si(CH₃)₂-(CH₂)_{H1}-Si(OCH₃)₃
[(CH₃)₃SiO)]₂(CH₃)Si-O-[Si(CH₃)₂O]ₙ₁Si(CH₃)₂-(CH₂)_{H1}-Si(OCH₃)₃
[(CH₃)₃SiO)]₃Si-O-[Si(CH₃)₂O]ₙ₁Si(CH₃)₂-(CH₂)_{H1}-Si(OCH₃)₃
CH₃-[Si(CH₃)₂O]ₙ₁Si(CH₃)₂-(CH₂)_{H1}-C(=O)NHCH₂CH[CH₂CH₂CH₂Si(OCH₃)₃]₂ CH₃CH₂CH₂CH₂-[Si(CH₃)₂O]ₙ₁Si(CH₃)₂-(CH₂)_{H1}- C(=O)NHCH₂CH[CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂Si(OCH₃)₃]₂
[(CH₃)₃SiO)]₃Si-O-[Si(CH₃)₂O]ₙ₁Si(CH₃)₂-(CH₂)_{H1}- C(=O)NHCH₂CH[CH₂CH₂CH₂Si(OCH₃)₃]₂
CH₃-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂
CH₃-[Si(CH₃)₂O]ₙ₁Si(CH₃)₂-(CH₂)_{H1}-CH[CH₂CH₂CH₂Si(OCH₃)₃]₂
CH₃CH₂CH₂CH₂-[Si(CH₃)₂O]ₙ₁Si(CH₃)₂-(CH₂)_{H1}-CH[CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- CH[CH₂CH₂CH₂Si(OCH₃)₃]₂
[(CH₃)₃SiO)]₃Si-O-[Si(CH₃)₂O]ₙ₁Si(CH₃)₂-(CH₂)_{H1}-CH[CH₂CH₂CH₂Si(OCH₃)₃]₂
CH₃-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂
CH₃CH₂CH₂CH₂-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂
[(CH₃)₃SiO)]₃Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
CH₃-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂
CH₃-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
CH₃CH₂CH₂CH₂-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
[(CH₃)₃SiO)]₃Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
CH₃-[Si(CH₃)₂O]ₙ₁Si(CH₃)₂-(CH₂)_{H1}-C(=O)N[CH₂CH₂CH₂Si(OCH₃)₃]₂
CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- C(=O)N[CH₂CH₂CH₂Si(OCH₃)₃]₂
[(CH₃)₃SiO)]₃Si-O-[Si(CH₃)₂O]ₙ₁Si(CH₃)₂-(CH₂)_{H1}- C(=O)N[CH₂CH₂CH₂Si(OCH₃)₃]₂
CH₃-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- C(=O)N[CH₂CH₂CH₂Si(OCH₃)₃]₂
CH₃-[Si(CH₃)₂O]ₙ₁Si(CH₃)₂-(CH₂)_{H1}-N[CH₂CH₂CH₂Si(OCH₃)₃]₂
CH₃CH₂CH₂CH₂-[Si(CH₃)₂O]ₙ₁Si(CH₃)₂-(CH₂)_{H1}-N[CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- N[CH₂CH₂CH₂Si(OCH₃)₃]₂
[(CH₃)₃SiO)]₃Si-O-[Si(CH₃)₂O]ₙ₁Si(CH₃)₂-(CH₂)_{H1}-N[CH₂CH₂CH₂Si(OCH₃)₃]₂
CH₃-[Si(CH₃)₂O]ₙ₁Si(CH₃)₂-(CH₂)_{H1}-C(=O)NHCH₂C[CH₂CH₂CH₂Si(OCH₃)₃]₃
CH₃CH₂CH₂CH₂-[Si(CH₃)₂O]ₙ₁Si(CH₃)₂-(CH₂)_{H1}- C(=O)NHCH₂C[CH₂CH₂CH₂Si(OCH₃)₃]₃
[(CH₃)₃SiO)]₂(CH₃)Si-O-[Si(CH₃)₂O]ₙ₁Si(CH₃)₂-(CH₂)_{H1}- C(=O)NHCH₂C[CH₂CH₂CH₂Si(OCH₃)₃]₃
[(CH₃)₃SiO)]₃Si-O-[Si(CH₃)₂O]ₙ₁Si(CH₃)₂-(CH₂)_{H1}- C(=O)NHCH₂C[CH₂CH₂CH₂Si(OCH₃)₃]₃
CH₃-[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃
CH₃CH₂CH₂CH₂-[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃
CH₃-[Si(CH₃)₂O]ₙ₁Si(CH₃)₂-(CH₂)_{H1}-C[CH₂CH₂CH₂Si(OCH₃)₃]₃
CH₃CH₂CH₂CH₂-[Si(CH₃)₂O]ₙ₁Si(CH₃)₂-(CH₂)_{H1}-C[CH₂CH₂CH₂Si(OCH₃)₃]₃
[(CH₃)₃SiO)]₂(CH₃)Si-O-[Si(CH₃)₂O]ₙ₁Si(CH₃)₂-(CH₂)_{H1}- C[CH₂CH₂CH₂Si(OCH₃)₃]₃
[(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃
[(CH₃)₃SiO)]₂(CH₃)Si-(CH₂)_{H1}-C(=O)NHCH₂CH₂CH₂Si(OCH₃)₃
[(CH₃)₃SiO)]₃Si-(CH₂)_{H1}-C(=O)NHCH₂CH₂CH₂Si(OCH₃)₃
[(CH₃)₃SiO)]₂(CH₃)Si-(CH₂)_{H1}-Si(OCH₃)₃
[(CH₃)₃SiO)]₃Si-(CH₂)_{H1}-Si(OCH₃)₃
[(CH₃)₃SiO)]₂(CH₃)Si-(CH₂)_{H1}-C(=O)NHCH₂CH[CH₂CH₂CH₂Si(OCH₃)₃]₂
[(CH₃)₃SiO)]₃Si-(CH₂)_{H1}-C(=O)NHCH₂CH[CH₂CH₂CH₂Si(OCH₃)₃]₂
[(CH₃)₃SiO)]₂(CH₃)Si-(CH₂)_{H1}-CH[CH₂CH₂CH₂Si(OCH₃)₃]₂
[(CH₃)₃SiO)]₃Si-(CH₂)_{H1}-CH[CH₂CH₂CH₂Si(OCH₃)₃]₂
[(CH₃)₃SiO)]₂(CH₃)Si-(CH₂)_{H1}- C(=O)NHCH₂CH[CH₂CH₂CH₂CH₂CH₂CH₂CH₂CH₂CH₂CH₂CH₂Si(OCH₃)₃]₂
[(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂
[(CH₃)₃SiO)]₂(CH₃)Si-(CH₂)_{H1}- CH[CH₂CH₂CH₂CH₂CH₂CH₂CH₂CH₂CH₂CH₂CH₂Si(OCH₃)₃]₂
[(CH₃)₃SiO)]₃Si-(CH₂)_{H1}- CH[CH₂CH₂CH₂CH₂CH₂CH₂CH₂CH₂CH₂CH₂CH₂Si(OCH₃)₃]₂
[(CH₃)₃SiO)]₂(CH₃)Si-(CH₂)_{H1}-C(=O)N[CH₂CH₂CH₂Si(OCH₃)₃]₂
[(CH₃)₃SiO)]₃Si-(CH₂)_{H1}-C(=O)N[CH₂CH₂CH₂Si(OCH₃)₃]₂
[(CH₃)₃SiO)]₂(CH₃)Si-(CH₂)_{H1}-N[CH₂CH₂CH₂Si(OCH₃)₃]₂
[(CH₃)₃SiO)]₃Si-(CH₂)_{H1}-N[CH₂CH₂CH₂Si(OCH₃)₃]₂
[(CH₃)₃SiO)]₂(CH₃)Si-(CH₂)_{H1}-C(=O)NHCH₂C[CH₂CH₂CH₂Si(OCH₃)₃]₃
[(CH₃)₃SiO)]₃Si-(CH₂)_{H1}-C(=O)NHCH₂C[CH₂CH₂CH₂Si(OCH₃)₃]₃
[(CH₃)₃SiO)]₂(CH₃)Si-(CH₂)_{H1}-C[CH₂CH₂CH₂Si(OCH₃)₃]₃
[(CH₃)₃SiO)]₃Si-(CH₂)_{H1}-C[CH₂CH₂CH₂Si(OCH₃)₃]₃ 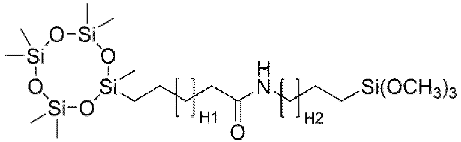 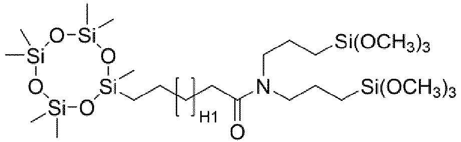 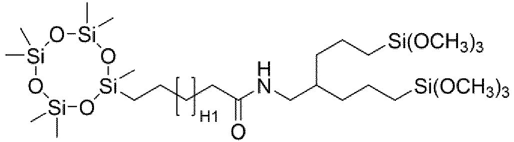 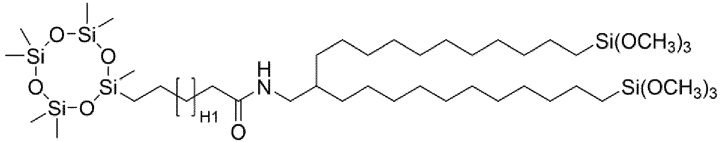 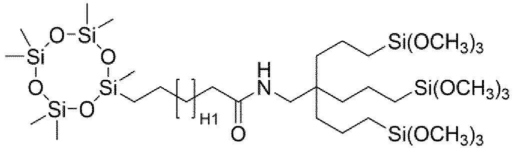
CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂
CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂
CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂
CH₃CH₂CH₂CH₂-[Si(CH₃)₂O]ₙ₁Si(CH₃)₂--(CH₂)_{H1}-O-(CH₂)_{H2}-C[CH₂OC(=O)NHCH₂CH₂CH₂Si(OCH₃)₃]₃
CH₃-[(Si(CH₃)₂O)ₙ₁Si(CH₃)₂-(CH₂)_{H1}-O-(CH₂)_{H2}- C[CH₂OC(=O)NHCH₂CH₂CH₂Si(OCH₃)₃]₃
[CH₃CH₂CH₂CH₂-[(Si(CH₃)₂O)]ₙ₁Si(CH₃)₂-(CH₂)_{H1}-O-(CH₂)_{H2}-]₂- C[CH₂OC(=O)NHCH₂CH₂CH₂Si(OCH₃)₃]₂
[CH₃-[(Si(CH₃)₂O)]ₙ₁Si(CH₃)₂-(CH₂)_{H1}-O-(CH₂)_{H2}-]₂- C[CH₂OC(=O)NHCH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- OC(=O)NHCH₂CH₂CH₂Si(OCH₃)₃
CH₃-[Si(CH₃)₂O]ₙ₁Si(CH₃)₂-(CH₂)_{H1}-O-(CH₂)_{H2}-OC(=O)NHCH₂CH₂CH₂Si(OCH₃)₃
CH₃CH₂CH₂CH₂-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃
CH₃-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃
[CH₃CH₂CH₂CH₂-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃
[CH₃-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃
[CH₃CH₂CH₂CH₂-[Si(CH₃)₂O]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃]
[CH₃-[(Si(CH₃)₂O)]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃] 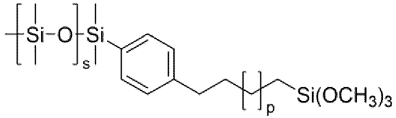 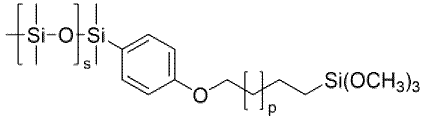 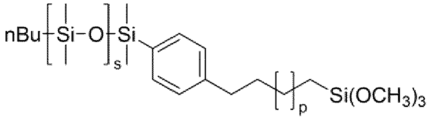 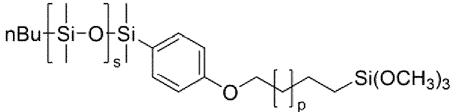 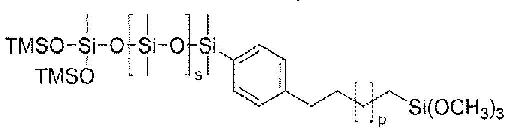 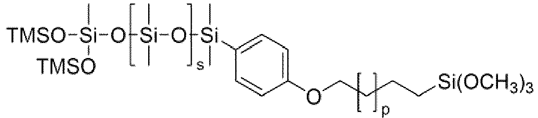 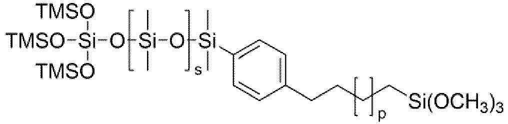 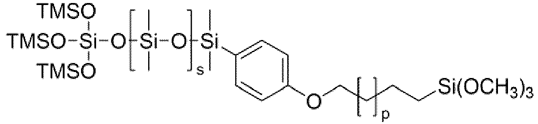 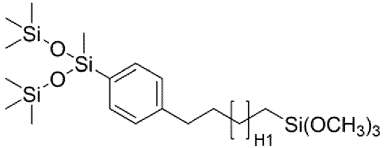 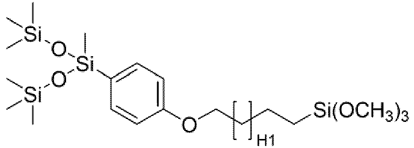 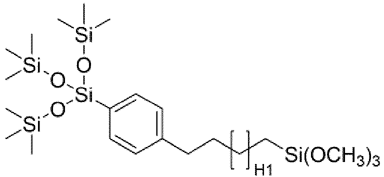 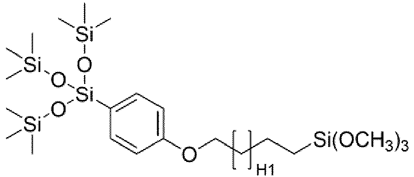 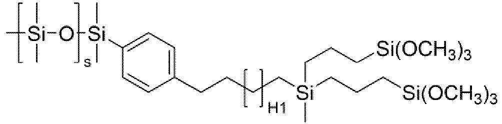 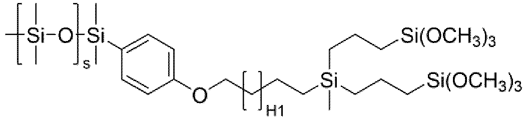 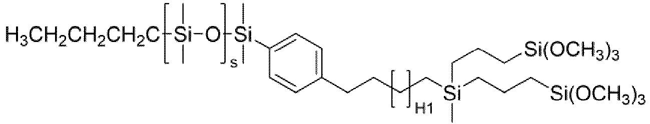 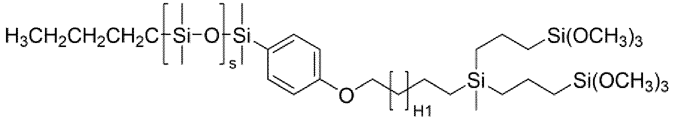 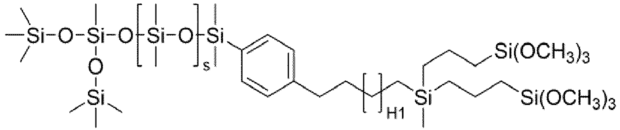 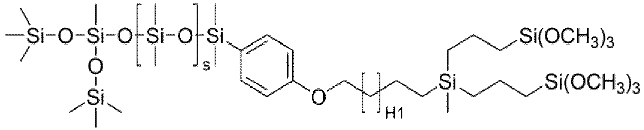 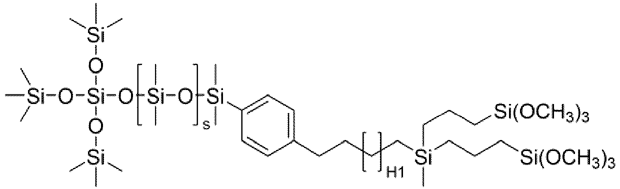 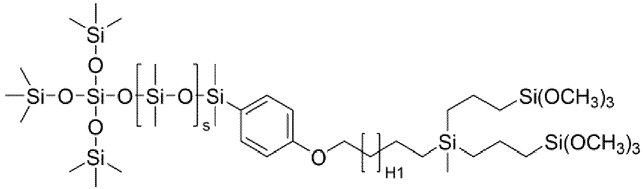 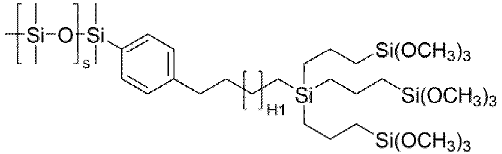 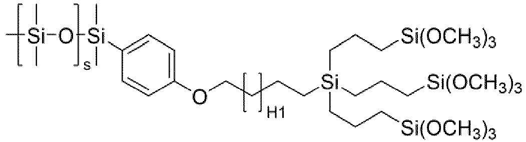 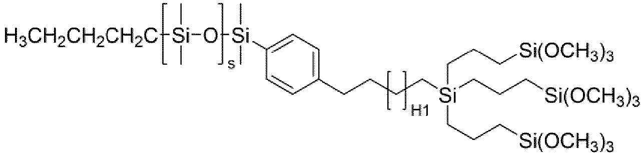 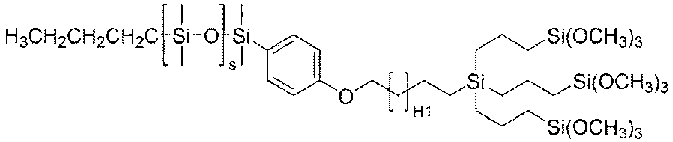 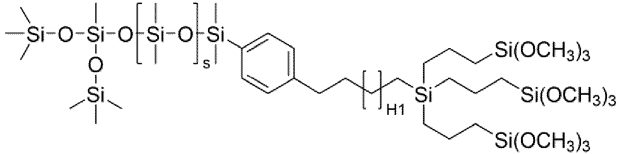 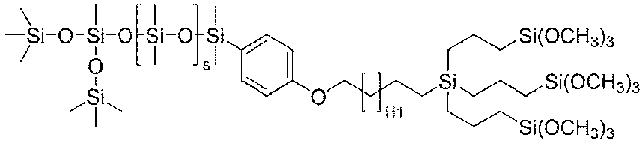 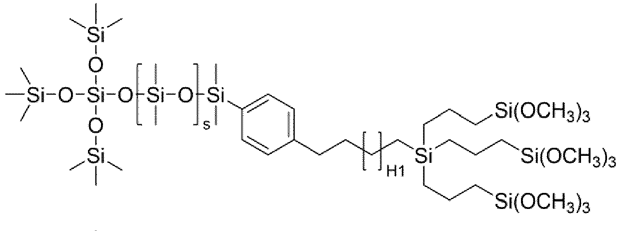 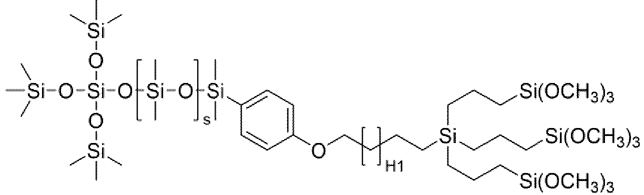
wherein TMS represents a trimethylsilyl group; n1 and s are each independently 0 to 150; and p, H1, and H2 are each independently 1 to 50.

13. The composition according to claim 12, wherein
n1 and s are each independently 0 or 1,
p and H1 are each independently 8 to 40, and
H2 is each independently 1 to 10.

14. The composition according to claim 12, wherein
n1 and s are each independently 5 to 100,
p and H1 are each independently 8 to 40, and
H2 is each independently 1 to 10.

15. The composition according to any one of claims 1 to 14, wherein the silane compound (A) is a compound selected from the following group: 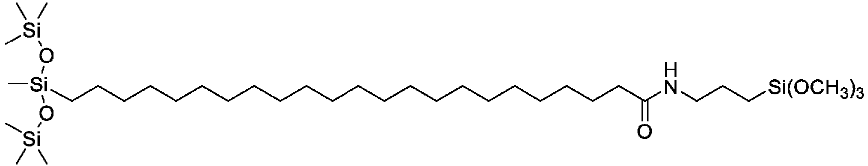 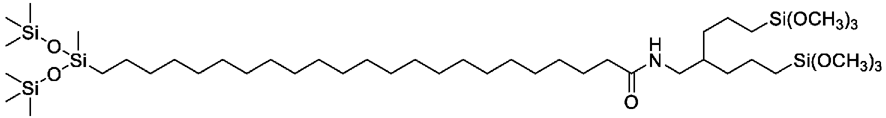 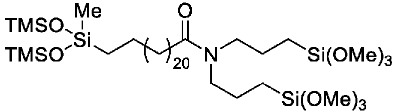 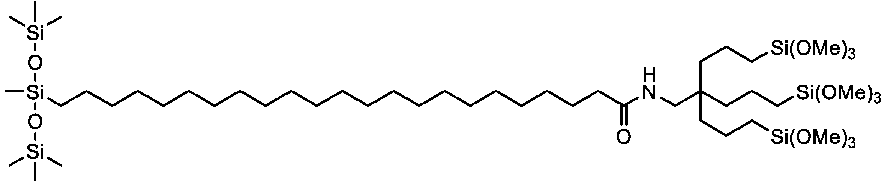
[(CH₃)₃SiO]₂CH₃SiO(Si(CH₃)₂O)ₙ₁Si(CH₃)₂(CH₂)₂₂CONHCH₂CH[CH₂CH₂CH₂Si(O CH₃)₃]₂
CH₃[Si(CH₃)₂O]ₙ₁Si(CH₃)₂(CH₂)₂₂CONH-CH₂CH[CH₂CH₂CH₂Si(OCH₃)₃]₂
[(CH₃)₃SiO]₂CH₃Si- CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH(CH₂CH=CH₂)[CH₂CH₂CH₂Si(OCH₃)₃]
[(CH₃)₃SiO]₂CH₃Si- CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH(CH₂CH=CH₂)₂
[(CH₃)₃SiO]₂CH₃Si- CH₂CH₂CH₂CH₂CH₂CH₂CH₂CH₂CH₂CH₂CH₂CH₂CH₂CH₂CH₂CH₂CH₂CH₂CH₂CH ₂CH₂CH₂CONHCH₂CH[CH₂CH₂CH₂Si(OCH₃)₃]₂
CH₃[Si(CH₃)₂O]ₙ₁Si(CH₃)₂(CH₂)₂₂CONH- CH₂CH(CH₂CH=CH₂)[CH₂CH₂CH₂Si(OCH₃)₃]
CH₃[Si(CH₃)₂O]ₙ₁Si(CH₃)₂(CH₂)₂₂CONH-CH₂CH(CH₂CH=CH₂)₂
CH₃[Si(CH₃)₂O]ₙ₁Si(CH₃)₂(CH₂)₂₂CONH-CH₂CH[CH₂CH₂CH₂Si(OCH₃)₃]₂
CH₃CH₂CH₂CH₂-[Si(CH₃)₂O]ₙ₁Si(CH₃)₂-CH₂CH₂CH₂-O-CH₂CH₂O- C(=O)NHCH₂CH₂CH₂Si(OCH₃)₃
wherein TMS represents a trimethylsilyl group, and n1 is each independently 10 to 80.

16. The composition according to any one of claims 1 to 15, wherein the silane compound (B) is a compound selected from the following group: 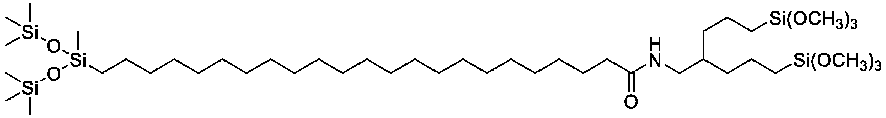 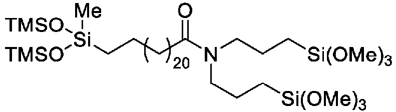 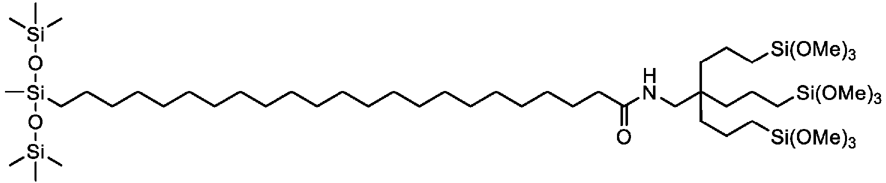
CH₃[Si(CH₃)₂O]ₙ₂Si(CH₃)₂(CH₂)₂₂CONH-CH₂CH[CH₂CH₂CH₂Si(OCH₃)₃]₂ [(CH₃)₃SiO]₂CH₃SiO(Si(CH₃)₂O)ₙ₂Si(CH₃)₂(CH₂)₂₂CONHCH₂C[CH₂CH₂CH₂Si(OC H₃)₃]₃
CH₃[Si(CH₃)₂O]ₙ₂Si(CH₃)₂(CH₂)₂₂CONH-CH₂C[CH₂CH₂CH₂Si(OCH₃)₃]₃
CH₃CH₂CH₂CH₂-[Si(CH₃)₂O]ₙ₂Si(CH₃)₂-CH₂CH₂CH₂-O-CH₂- C(CH₂CH₃)[CH₂OC(=O)NHCH₂CH₂CH₂Si(OCH₃)₃]₂
wherein TMS represents a trimethylsilyl group, and n2 is each independently 10 to 80.

17. A coating solution comprising the composition according to any one of claims 1 to 16 and a liquid medium.

18. A surface-treating agent comprising the composition according to any one of claims 1 to 16.

19. A surface-treating agent comprising the composition according to any one of claims 1 to 16 and at least one of compounds composed of a condensate in which the silane compounds comprised in the composition are at least partially condensed.

20. The surface-treating agent according to claim 18 or 19, which is for vacuum deposition.

21. The surface-treating agent according to claim 18 or 19, which is for wet coating.

22. A pellet comprising the surface-treating agent according to any one of claims 18 to 21.

23. An article comprising a substrate and, on the substrate, the composition according to any one of claims 1 to 16 or a layer formed from the composition according to any one of claims 1 to 16.

24. The article according to claim 23, comprising, between the substrate and the aforementioned layer, a silicon oxide-containing intermediate layer.

25. The article according to claim 24, wherein the intermediate layer comprises alkali metal atoms.

26. The article according to claim 25, wherein at least some of the alkali metal atoms are sodium atoms.

27. The article according to any one of claims 23 to 26, which is an optical member.

28. The article according to any one of claims 23 to 27, which is a display.
